# EUROPEAN PATENT APPLICATION

(11) **EP 1 239 619 A2**
(43) Date of publication of application: **11.09.2002**
(21) Application number: 02004948.2
(22) Date of filing: 05.03.2002
(51) Int. Cl.: H04H 1/02

(54) **Apparatus and method for media distribution in the form requested by a client**

(30) Priority: 08.03.2001 JP 2001065460; 31.01.2002 JP 2002024750
(71) Applicant: MATSUSHITA ELECTRIC INDUSTRIAL CO., LTD., Kadoma-shi, Osaka 571-8501 (JP)
(72) Inventor: Emura, Koichi, Yokohama-shi, Kanagawa 2320072 (JP); Munetsugu, Toshihiko, Katano-shi, Okasa 576-0051 (JP); Tada, Hiroyuki, Kawasaki-shi, Kanagawa 214-0022 (JP); Hara, Noriyo, Tokyo 154-0024 (JP)
(74) Representative: Grünecker, Kinkeldey, Stockmair & Schwanhäusser Anwaltssozietät

(57) **Abstract**

The present invention, by storing media of a plurality of different forms for each content, and selecting and distributing media of a form corresponding to a distribution request of a client, distributes to a client media corresponding to content requested by the client in the form requested by the client.

## Description

### BACKGROUND OF THE INVENTION

### Field of the Invention

The present invention relates to a media distribution apparatus and media distribution method that distribute multimedia content such as video, audio, speech, and text, to portable terminals, storage-type broadcast terminals, home gateways, and the like.

### Description of the Related Art

Recently, as disclosed in Unexamined Japanese Patent Publication No.10-303986 "Method and Apparatus for Providing a Broker Application Server", distribution of media corresponding to multimedia content (hereinafter referred to as "content") such as video, audio, speech, and text, has come to be performed via a network to user terminals such as portable terminals, storage-type broadcast terminals, home gateways, and the like, and media distributors charge users for distributed media.

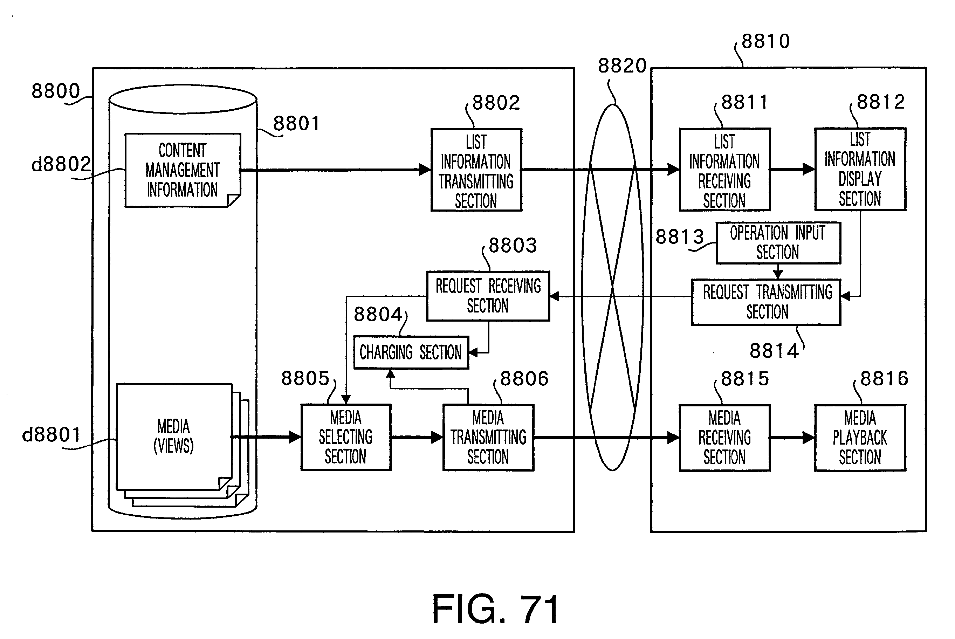

The configuration of a media distribution system including a conventional media distribution apparatus will be described below using FIG.71. FIG.71 is a block diagram of a conventional media distribution system.

In a conventional media distribution system, a server 8800, which is a media distribution apparatus, and a client terminal 8810 are connected via a network 8820. The server 8800 is provided with a storage section 8801 that stores views d8801, which are original media of content, and content management information d8802, which is information that manages content.

The views d8801 are data such as video, speech, audio, and text. The content management information d8802 is data for explaining the views d8801.

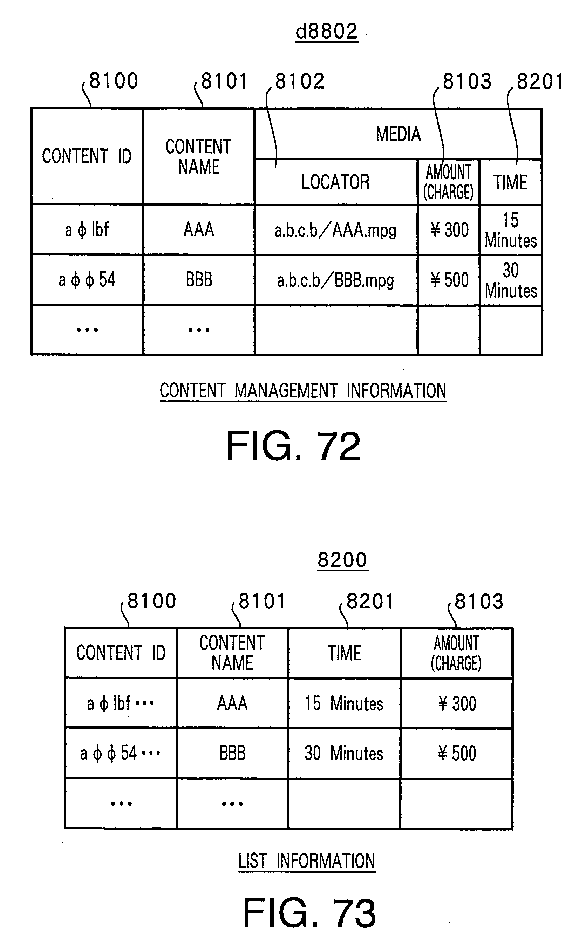

Also, as shown in FIG.72, the content management information d8802 is information that identifies content, and therein are stored a plurality of groups comprising a content ID 8100 which is a content identification number, a content name 8101, a locator 8102 which is media locator information corresponding to a content name 8101, charge (monetary amount) information 8103 which is a charge when content is distributed, and content time information 8201.

Furthermore, the server 8800 is provided with a list information transmitting section 8802 that generates the content list information 8200 shown in FIG.73 from content management information d8802 and transmits this to the client terminal 8810. As can be seen from FIG.73, the list information 8200 is information required when a client selects content, being composed of groups comprising the content ID 8100, content name 8101, content time information 8201, and content charge information 8103.

The client terminal 8810 is provided with a list information receiving section 8811 that receives list information 8200 sent from the server 8800, and a list information display section 8812 that displays received list information 8200. The client terminal 8810 is also provided with an operation input section 8813 that inputs content distribution request information that requests desired content distribution from the list information 8200. Furthermore, the client terminal 8810 is provided with a request transmitting section 8814 that transmits content distribution request information such as a content ID 8100 input from the operation input section 8813 to the server 8800.

The server 8800 is provided with a request receiving section 8803 that receives content distribution request information (a content ID) sent from the client terminal 8810, analyzes the content name, charge information, and so forth, and outputs the analysis results.

The server 8800 is also provided with a charging section 8804 that charges a client in accordance with completion of media transmission by a media transmitting section 8806 based on charge information analyzed by the request receiving section 8803.

In addition, the server 8800 is provided with a media selecting section 8805 that selects content that a client wishes to have distributed based on content distribution request information, and extracts media d8801 corresponding to that content from the storage section 8801. Furthermore, the server 8800 is provided with a media transmitting section 8806 that transmits media d8801 selected by the media selecting section 8805 to the client terminal 8810.

The client terminal 8810 is provided with a media receiving section 8815 that receives sent media d8801, and a media playback section 8816 that plays back received media d8801.

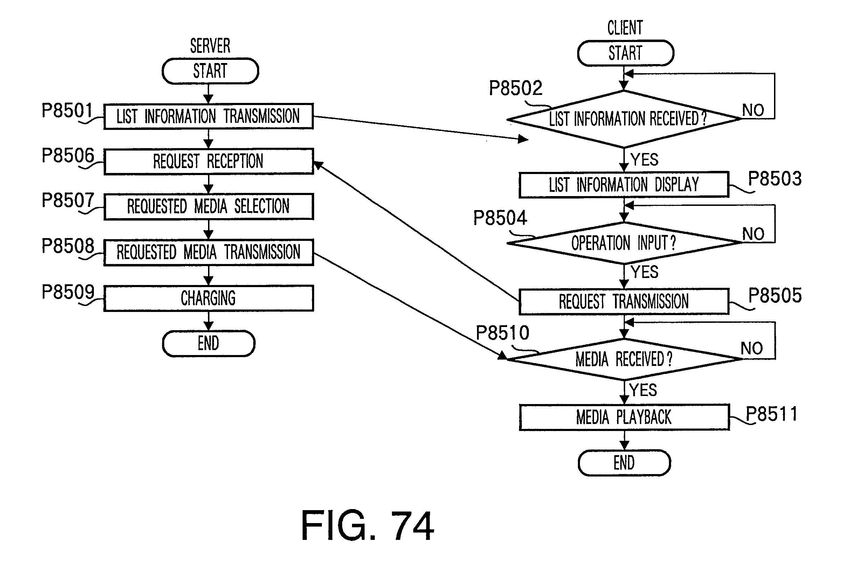

The operation of a media distribution system configured in this way will be described below using FIG. 74. FIG.74 is an operation flowchart of a conventional media distribution system.

First, the list information transmitting section 8802 of the server 8800 generates list information 8200 from content management information d8802, and transmits this to the client terminal 8810 (P8501).

Then, when the list information receiving section 8811 of the client terminal 8810 receives this list information 8200 (P8502), the list information display section 8812 displays the list information 8200 (P8503). The client refers to this list information 8200 displayed on the list information display section 8812, selects the desired content, and inputs the content ID 8100 of the desired content from the operation input section 8813 as content distribution request information. Then, when the client inputs content distribution request information (P8504), the request transmitting section 8814 transmits this content distribution request information to the server 8800 (P8505).

Then, when the request receiving section 8803 of the server 8800 receives the content distribution request information (P8506), the request receiving section 8803 analyzes the content name 8101 requested by the client based on the content distribution request information, and the content charge information 8103 corresponding to this content name 8101.

Next, the media selecting section 8805 selects the view d8801 corresponding to the content name 8101 analyzed by the request receiving section 8803 from the storage section 8801 (P8507), and transmits this selected view d8801 from the media transmitting section 8806 to the client terminal 8810 (P8508). Then, when transmission of the view d8801 ends, the charging section 8804 charges the client a charge amount corresponding to content charge information 8103 for this content ID 8100 (P8509).

Then, when the media receiving section 8815 of the client terminal 8810 receives this view (P8510), the media playback section 8816 plays back this view (P8511).

In this way, it is possible for a client to have distributed to him/her a view which is original media corresponding to the desired content. Meanwhile, it is also possible for a media distributor to charge a client a charge amount corresponding to a distributed view.

However, list information 8200 sent to a client contains only content IDs 8100, content names 8101, content playback time information 8201, and content charge information 8103.

Thus, a client must determine the contents of content media (views) on the basis of this information contained in the list information 8200. However, this information contained in the list information 8200 does not include information relating to the actual contents of content media (views). Therefore, it is extremely difficult for a client to adequately determine the contents of content media on the basis of information contained in the list information 8200. That is to say, a client has to request content media distribution without having adequately determined the content media contents. Consequently, there is a possibility that the media whose distribution a client has requested will be different from the desired media. However, there is a problem in that, even in this case, the client must pay the charge corresponding to this distribution of media which is not the desired media.

This represents a waste of money for the client, and thus causes the client to hesitate over making a content media distribution request. Meanwhile, from the standpoint of a media (content) distribution service provider, there is a problem in that hesitation of clients regarding media distribution requests results in a decrease in media distribution requests, and profit from the provision of a media (content) distribution service does not increase.

### SUMMARY OF THE INVENTION

It is an object of the present invention to provide a media distribution apparatus and media distribution method that enable media corresponding to content requested by a client to be distributed to the client in a form requested by the client, or in a form adapted to various terminal capabilities and network conditions.

In order to solve the above-described problems, the present invention stores media in a plurality of different forms for each content item, and media in a form in accordance with a client distribution request is selected and distributed.

By this means it is possible to select media of the form desired by a client from different forms of media, and distribute that selected media. That is to say, it is possible for a client to receive media corresponding to the desired content in the desired form.

### BRIEF DESCRIPTION OF THE DRAWINGS

The above and other objects and features of the invention will appear more fully hereinafter from a consideration of the following description taken in connection with the accompanying drawing wherein one example is illustrated by way of example, in which;
FIG.1 is a block diagram of a media distribution system according to Embodiment 1 of the present invention ;
FIG.2 is a drawing showing the configuration of content management information according to Embodiment 1;
FIG.3 is a drawing showing the configuration of list information according to Embodiment 1;
FIG.4 is an operational flowchart of media distribution in a media distribution system according to Embodiment 1;
FIG.5 is another operational flowchart of a media distribution system according to Embodiment 1;
FIG.6 is a block diagram of a media distribution system according to Embodiment 2 of the present invention;
FIG.7 is a drawing showing a reference example of a view according to Embodiment 2;
FIG.8 is a drawing showing the configuration of content management information according to Embodiment 2;
FIG.9 is a drawing showing the configuration of list information according to Embodiment 2;
FIG.10 is an operational flowchart of a media distribution system according to Embodiment 2;
FIG.11 is a block diagram of a media distribution system according to Embodiment 3 of the present invention;
FIG.12 is an operational flowchart of a media distribution system according to Embodiment 3;
FIG.13 is a block diagram of a media distribution system according to Embodiment 4 of the present invention;
FIG.14 is an operational flowchart of a media distribution system according to Embodiment 4;
FIG.15 is a block diagram of a media distribution system according to Embodiment 5 of the present invention;
FIG.16 is a drawing showing the configuration of content management information according to Embodiment 5;
FIG.17 is a drawing showing the configuration of list information according to Embodiment 5;
FIG.18 is an operational flowchart of a media distribution system according to Embodiment 5;
FIG.19 is a block diagram of a media distribution system according to Embodiment 6 of the present invention;
FIG.20 is a drawing showing the configuration of content management information according to Embodiment 6;
FIG.21 is a drawing showing the configuration of list information according to Embodiment 6;
FIG.22 is an operational flowchart of a media distribution system according to Embodiment 6;
FIG.23 is a block diagram of a media distribution system according to Embodiment 7 of the present invention;
FIG.24 is a drawing showing the configuration of content management information according to Embodiment 7;
FIG.25 is a drawing showing the configuration of list information according to Embodiment 7;
FIG.26 is an operational flowchart of a media distribution system according to Embodiment 7;
FIG.27 is a block diagram of a media distribution system according to Embodiment 8 of the present invention;
FIG.28 is a drawing showing the configuration of content management information according to Embodiment 8;
FIG.29 is a drawing showing the configuration of list information according to Embodiment 8;
FIG.30 is an operational flowchart of a media distribution system according to Embodiment 8;
FIG.31 is a block diagram of a media distribution system according to Embodiment 9 of the present invention;
FIG.32 is a drawing showing the configuration of content management information according to Embodiment 9;
FIG.33 is a drawing showing the configuration of list information according to Embodiment 9;
FIG.34 is an operational flowchart of a media distribution system according to Embodiment 9;
FIG.35 is a block diagram of a media distribution system according to Embodiment 10 of the present invention;
FIG.36 is a drawing showing the configuration of content management information according to Embodiment 10;
FIG.37 is a drawing showing the configuration of list information according to Embodiment 10;
FIG.38 is a block diagram of a media distribution system according to Embodiment 11 of the present invention;
FIG.39 is a drawing showing the configuration of content management information according to Embodiment 11;
FIG.40 is a drawing showing the configuration of list information according to Embodiment 11;
FIG.41 is a block diagram of a media distribution system according to Embodiment 12 of the present invention;
FIG.42 is a block diagram of a media distribution system according to Embodiment 13 of the present invention;
FIG.43 is a block diagram of a media distribution system according to Embodiment 14 of the present invention;
FIG.44 is a drawing showing the configuration of content management information according to Embodiment 14;
FIG.45 is a drawing showing the configuration of list information according to Embodiment 14;
FIG.46 is an operational flowchart of a media distribution system according to Embodiment 14;
FIG.47 is a block diagram of a media distribution system according to Embodiment 15 of the present invention;
FIG.48 is a drawing showing the configuration of content management information according to Embodiment 15;
FIG.49 is a drawing showing the configuration of list information according to Embodiment 15;
FIG.50 is an operational flowchart of a media distribution system according to Embodiment 15;
FIG.51 is a block diagram of a media distribution system according to Embodiment 16 of the present invention;
FIG.52 is a drawing showing the configuration of content management information according to Embodiment 16;
FIG.53 is a drawing showing the configuration of list information according to Embodiment 16;
FIG.54 is a block diagram of a media distribution system according to Embodiment 17 of the present invention;
FIG.55 is a drawing showing the configuration of user management information according to Embodiment 17;
FIG.56 is a drawing showing the configuration of content management information according to Embodiment 17;
FIG.57 is an operational flowchart of a media distribution system according to Embodiment 17;
FIG.58 is a block diagram of a media distribution system according to Embodiment 18 of the present invention;
FIG.59 is a drawing showing the configuration of user management information according to Embodiment 18;
FIG.60 is a drawing showing the configuration of content management information according to Embodiment 18;
FIG.61 is an operational flowchart of a media distribution system according to Embodiment 18;
FIG.62 is a block diagram of a media distribution system according to Embodiment 19 of the present invention;
FIG.63 is a drawing showing the configuration of user management information according to Embodiment 19;
FIG.64 is a drawing showing the configuration of content management information according to Embodiment 19;
FIG.65 is a drawing showing the configuration of charging information according to Embodiment 19;
FIG.66 is an operational flowchart of a media distribution system according to Embodiment 19;
FIG.67 is a block diagram of a media distribution system according to Embodiment 20 of the present invention;
FIG.68 is a drawing showing the configuration of content management information according to Embodiment 20;
FIG.69 is a drawing showing the configuration of charging information according to Embodiment 20;
FIG.70 is an operational flowchart of a media distribution system according to Embodiment 20;
FIG.71 is a block diagram of a conventional media distribution system;
FIG.72 is a drawing showing the configuration of conventional content management information;
FIG.73 is a drawing showing the configuration of conventional list information; and
FIG.74 is an operational flowchart of a conventional media distribution system.

### DETAILED DESCRIPTION OF THE PREFERRED EMBODIMENTS

### (Embodiment 1)

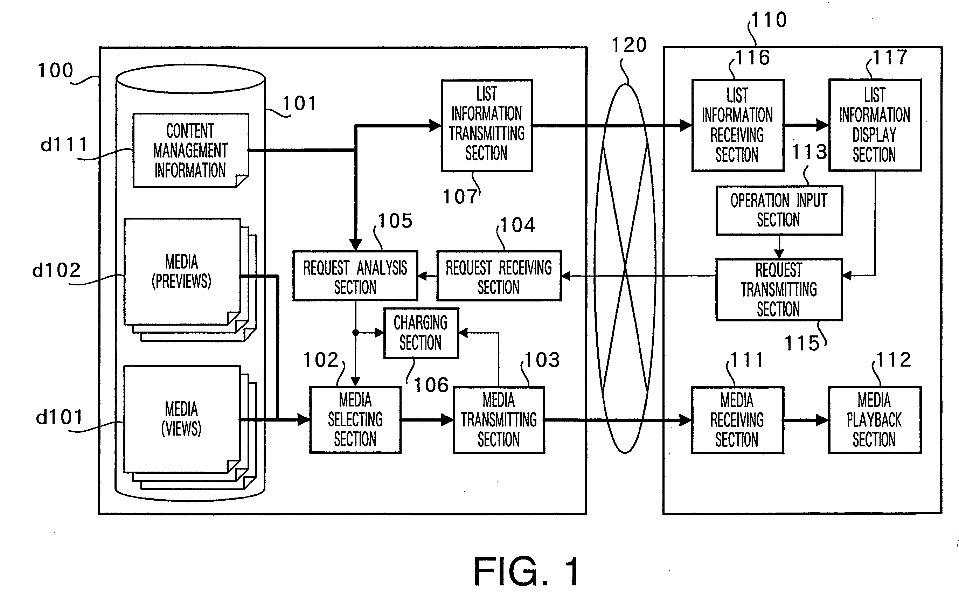

A media distribution system that includes a media distribution apparatus according to Embodiment 1 of the present invention will be described below. First, the configuration of a media distribution system according to Embodiment 1 will be described using FIG.1. FIG.1 is a block diagram of a media distribution system according to Embodiment 1.

In this media distribution system, a server 100 of a media distributor (provider) performing a content distribution service and a client terminal 110 such as a portable terminal, storage-type broadcast terminal, home gateway, or the like, are connected via a network 120 such as a the internet, wireless communication network, or the like. That is to say, the performance of media transmission from a server 100, which is a media distribution apparatus, to a client terminal 110 via a network 120 is assumed.

Media of different forms are stored in a storage section 101 of the server 100. To be specific, the storage section 101 stores, as media of different forms, views d101 that are original media, and content previews (summary videos) comprising information related to the views d101.

The views d101 are AV streams comprising video, audio, speech, text, etc. The previews d102 are AV streams and representative still images prepared separately from the views d101, comprising a collection of videos of characteristic parts of views. A data format such as MPEG-1, MPEG-2, MPEG-4, DV, JPEG, or GIF is used for the views d101 and previews d102.

The content management information d111 is metadata that manages content groups together with partial information extracted from views d101 and previews d102, charging information (described later herein, used by the charging section for charging), and so forth, for each content item. The content management information d111 manages partial information extracted from views d101 and previews d102 together with charging information, etc., using a content ID as a key. The content management information d111 may be created and stored in advance, or may be generated by the server 100 together with charging information for views d101 and previews d102.

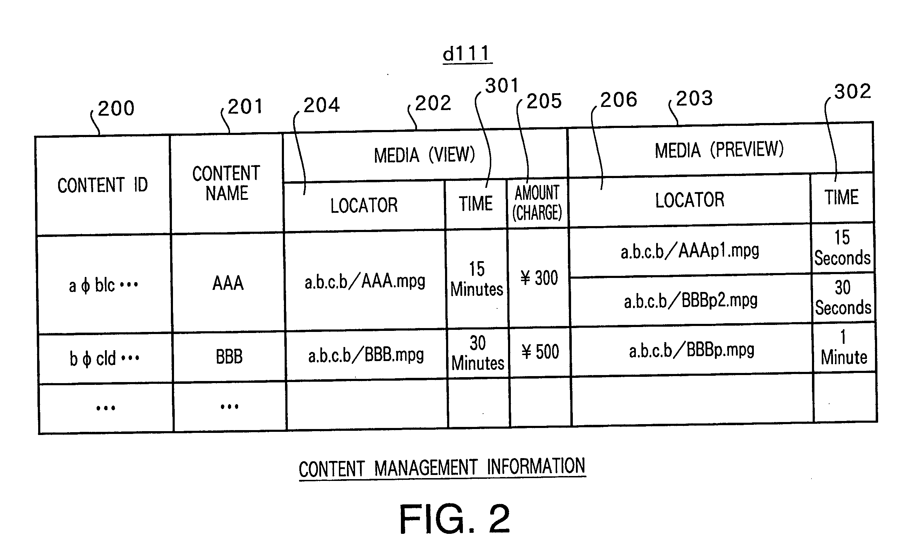

As shown in FIG.2, in the content management information d111 are stored a plurality of groups comprising a content ID 200 which is identification information that identifies content, a content name 201, a locator 204 which is locator information of a view 202 corresponding to a content ID 200, time information 301 which is content playback time information, charge (monetary amount) information 205 applied when a view 202 of content name 201 is distributed, locator information 206 of a preview 203 corresponding to a content ID 200, and time information 302 which is preview 203 playback time information. FIG.2 is a drawing showing the configuration of content management information according to Embodiment 1. Naturally, the content name 201 can also be used as information that identifies content.

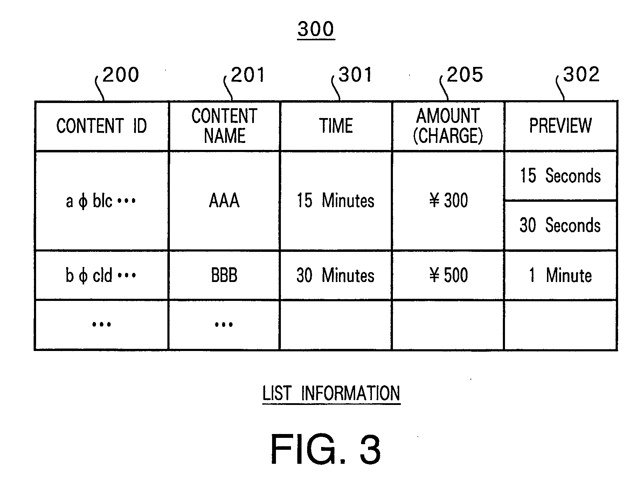

The server 100 is provided with a list information transmitting section 107 that generates the content list information 300 shown in FIG.3 from content management information d111 and transmits this to the client terminal 110 by means of e-mail or HTTP. FIG.3 is a drawing showing the configuration of list information according to Embodiment 1.

As can be seen from FIG.3, the list information 300 is information required when a client selects content, being composed of groups comprising the content ID 200, content name 201, view time information 301, charge information 205 (the charge when a view is distributed), and time information 302 of a preview corresponding to a content ID 200.

A still image that enables the content contents to be ascertained may also be sent in the list information 300.

A mode is also possible whereby a client records one or more wanted genres of content beforehand in the server 100, the server 100 generates list information 300 corresponding to a genre recorded by the client, and provides this to the client on a regular basis by e-mail, etc. In this mode, a client can obtain a list of content related to a desired genre. As a result, content retrieval is made easier and it is possible to receive media distribution of the desired content dependably.

The client terminal 110 is provided with a list information receiving section 116 that receives list information 300 sent from the server 100, and a list information display section 117 that displays received list information 300. The client terminal 110 is also provided with an operation input section 113 that inputs content distribution request information that requests desired content distribution requesting desired content view distribution or preview distribution from the list information 300. Furthermore, the client terminal 110 is provided with a request transmitting section 115 that transmits content distribution request information input from the operation input section 113 to the server 100.

The server 100 is provided with a request receiving section 104 that receives content distribution request information sent from the client terminal 110.

The server 100 is also provided with a request analysis section 105 that analyzes a content ID 200, content name 201, view 202 locator information 204, charge information 205, preview 203 locator information 206, and so forth, corresponding to received content distribution request information, by referring to content management information dill. The request analysis section 105 determines the content ID 200 of content distribution request information, and whether the content distribution request information is a view distribution request or a preview distribution request for that content. Then, if the request analysis section 105 determines that the content distribution request information is a view distribution request, it refers to the content management information dill, analyzes view 202 locator information 204 and the relevant charge information 205, and transmits the analysis results to a media selecting section 102 and charging section 106.

If, on the other hand, the request analysis section 105 determines that the content distribution request information is a preview distribution request, it refers to the content management information dill, analyzes media preview 203 locator information 206, and transmits the analysis results to the media selecting section 102.

The server 100 is also provided with a charging section 106 that charges a client in accordance with completion of transmission by a media transmitting section 103 based on charge information analyzed by the request analysis section 105. The charging section 106 performs processing to debit a client's account by the charged amount.

In addition, the server 100 is provided with a media selecting section 102 that selects a view d101 or preview d102 of content that a client wishes to have distributed based on the results of analysis of content distribution request information by the request analysis section 105, and extracts this from the storage section 101.

Furthermore, the server 100 is provided with a media transmitting section 103 that transmits a view d101 or preview d102 selected by the media selecting section 102 to the client terminal 110.

The client terminal 110 is provided with a media receiving section 111 that receives a sent view d101 or preview d102, and a media playback section 112 that plays back a received view d101 or preview d102.

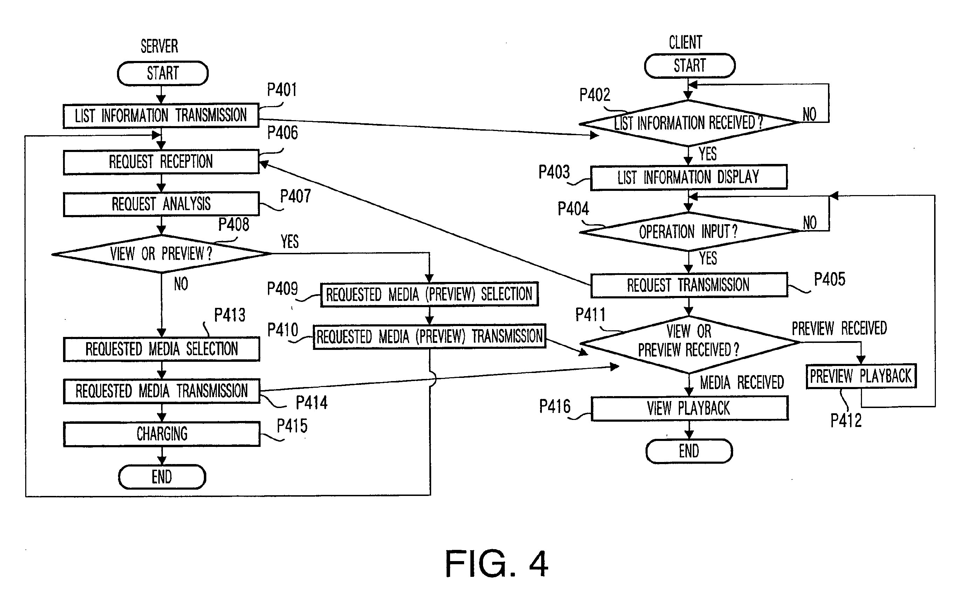

The operation of a media distribution system according to Embodiment 1 will be described below using FIG.4. FIG.4 is an operational flowchart of media distribution in a media distribution system according to Embodiment 1.

First, the list information transmitting section 107 of the server 100 generates list information 300 from content management information dill, and transmits this to the client terminal 110 (P401).

Then, when the list information receiving section 116 of the client terminal 110 receives this list information 300 (P402), the list information display section 117 displays the list information 300 (P403). Next, the client refers to this list information 300 displayed on the list information display section 117, selects the desired content name 201, and inputs the content ID 200 corresponding to the desired content name 201, and content distribution request information indicating a request for a preview corresponding to the content name 201, from the operation input section 113. Then, on completion of input of content distribution request information indicating that the client is requesting this preview (P404), the request transmitting section 115 transmits this content distribution request information indicating the request of a preview to the server 100 (P405). Information identifying content that is input from the operation input section 113 may be a content ID 200, or may be a content name 201.

When the request receiving section 104 of the server 100 receives the content distribution request information (P406), the request analysis section 105 analyzes the content distribution request information (P407), and determines whether preview distribution is being requested or view distribution is being requested (P408).

At this stage, the client is requesting a preview. Therefore, since the content distribution request information is requesting preview distribution, the media selecting section 102 refers to the content management information d111 and extracts the locator 206 of the preview 203 for the content name 201 requested by the client. The media selecting section 102 then selects the preview d102 located at the extracted locator 206 from the storage section 101 (P409). Then the media transmitting section 103 transmits this selected preview d102 to the client terminal 110 (P410). In this embodiment previews are free-of-charge, and therefore the charging section 106 does not perform charging when a preview is transmitted.

In the client terminal 110, the media receiving section 111 determines whether the information sent is a view d101 or preview d102 (P411). In this case, the information sent is a preview d102, and therefore the media playback section 112 plays back the preview d102 (P412).

The client then checks the contents of the played-back preview, and if the preview shows the desired content, inputs content distribution request information requesting view distribution for this content from the operation input section 113. Then, on completion of input of content distribution request information requesting view distribution from the operation input section 113 (P404), this content distribution request information is transmitted to the server 100 (P405).

When the request receiving section 104 of the server 100 receives content distribution request information (P406), the request analysis section 105 analyzes the content distribution request information (P407). The request analysis section 105 analyzes the content distribution request information (P407) and determines whether preview distribution is being requested or view distribution is being requested (P408).

In this case, the content distribution request information is requesting view distribution and therefore the media selecting section 102 selects a view d101 corresponding to the content analyzed by the request analysis section 105 from the storage section 101 (P413), and transmits this selected view d101 from the media transmitting section 103 to the client terminal 110 (P414).

Then, on completion of view transmission, the request analysis section 105 analyzes the charge for the view requested by the client. The charging section 106 then charges the client the charge amount for this view (P415).

In this embodiment, the charging section 106 charges when media is transmitted to a client, but the charging section 106 may also charge for a media distribution request from a client, or may charge when a client has completely received media.

Then, when the media receiving section 111 of the client terminal 110 receives this view (P411), the media playback section 112 plays back this view (P416).

Thus, according to Embodiment 1, the server 100 can distribute two kinds of media to a client: views d101 and free-of-charge previews d102. By this means it is possible to distribute a content preview d102 to a client free-of-charge prior to distributing a content view d101. As a result, a client can ascertain the contents of a view d101 by checking a preview d102 while no charging is performed. The client can then request view distribution after ascertaining the contents of the view d101. As a result, a client can select a desired view with certainty without making extra payment. It is thus possible to prevent a situation in which a client receives a view contrary to the client' s expectations, and moreover is charged for it, with the result that a client will make media distribution requests without hesitation. Consequently, the income of a media distributor will increase, and the business of a media distributor will prosper.

Also, according to Embodiment 1, a client can make a distribution request for a plurality of views, or views and previews, with a single input of content distribution request information. As a result, client distribution requests are simplified.

Moreover, according to Embodiment 1, a client can easily select desired media by viewing list information 300 created from content management information dill. Meanwhile, on the media distributor side, analysis of content distribution request information sent from a client is made easier, and processing of media requested by a client is simplified, through the use of content management information dill. Furthermore, since content management information d111 is content metadata, it is easy to perform processing combining content management information d111 and content.

Previews have been described as being free-of-charge, but it is also possible for a charge desired by a client to be made rather than making previews free-of-charge. In this case, preview charge information will be added to the content management information dill. Preview charge information will also be added to list information 300.

Also, in Embodiment 1, a mode has been described whereby view distribution or preview distribution is selected by means of a client operation, but a mode is also possible whereby a client views list information 300 and transmits to the server 100 only a content ID 200, which is identification information. In this mode, view or preview selection and transmission are performed automatically on the server 100 side. A mode is also possible whereby a preview is distributed and stored in a portable terminal, and a view is distributed and stored elsewhere, such as to a home gateway or STB.

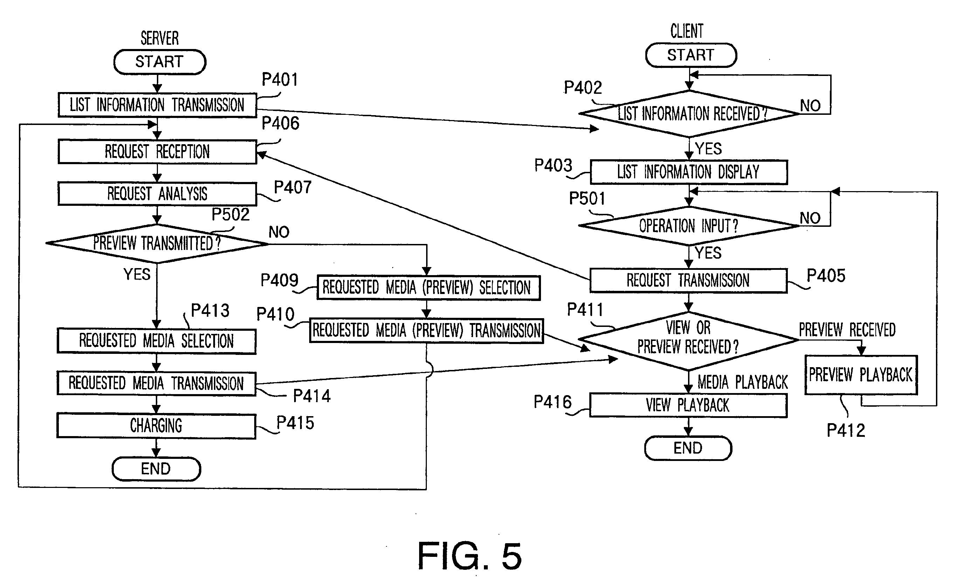

This mode will be described using FIG.5. FIG.5 is another operational flowchart of a media distribution system according to Embodiment 1. Parts in FIG.5 in which processing identical to that in the flow described in FIG.4 is performed are assigned the same codes as in FIG.4 and their detailed explanations are omitted.

In the mode shown in FIG.5, in processing corresponding to P404 in FIG.4, the client views list information 300 and inputs only a content ID 200 as content distribution request information (P501). Then the server receives the content distribution request information sent from the client (P406) and analyzes it (P407).

The server 100 then determines whether or not preview transmission to the client terminal 110 has been completed by determining whether the content ID 200 contained in the content distribution request information sent from the client terminal 110 to the server 100 is the content ID 200 first sent to the server 100 (P502).

If the server 100 determines that a preview has not been transmitted to the client terminal 110, the processing flow proceeds to steps P409 through P412. The client then determines the content contents from the preview sent, and if the client determines that the content has the desired contents, the client again inputs a content ID 200 from the operation input section 113 (P501), and transmits content distribution request information (P405). The server then receives the content distribution request information sent from the client terminal 110 (P406) and analyzes it (P407).

The server 100 then determines whether preview transmission to the client terminal 110 has been completed by determining whether the content ID 200 contained in the content distribution request information sent from the client terminal 110 to the server 100 is the same as a content ID 200 previously sent to the server 100, and has been sent within a predetermined time (P502).

If the server 100 determines that a preview has been transmitted to the client terminal 110, the processing flow proceeds to steps P413 through P415, and steps P411 and P416.

In this mode, it is possible for a preview to be automatically distributed by the server 100 as necessary even if information as to preview distribution or view distribution is not sent from the client terminal 110. As a result, client input is simplified, and a client can make media distribution requests more easily.

In Embodiment 1, a case has been described in which a content ID 200 is used as identification information that identifies content, but a mode is also possible whereby a content name 201 is used as identification information.

### (Embodiment 2)

In a media distribution system according to Embodiment 2, content previews are not generated and stored in advance, but instead, a preview is generated from a view in the event of a distribution request from a client. By this means it is possible to reduce the amount of data stored.

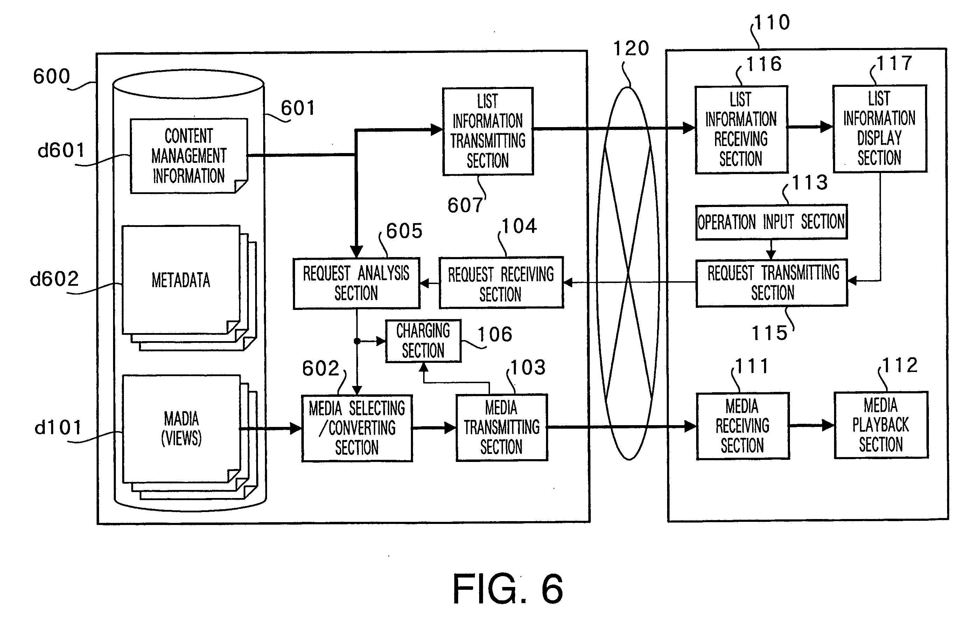

A media distribution system according to Embodiment 2 will be described below. First, the configuration of a media distribution system according to Embodiment 2 will be described using FIG.6. FIG.6 is a block diagram of a media distribution system according to Embodiment 6. Parts identical to those already described are assigned the same codes as before and their detailed explanations are omitted.

Embodiment 2 differs from Embodiment 1 in the configuration of the server 600. In a storage section 601 of the server 600 are stored views d101 that are original media of content, and metadata d602 used when generating previews from views d101.

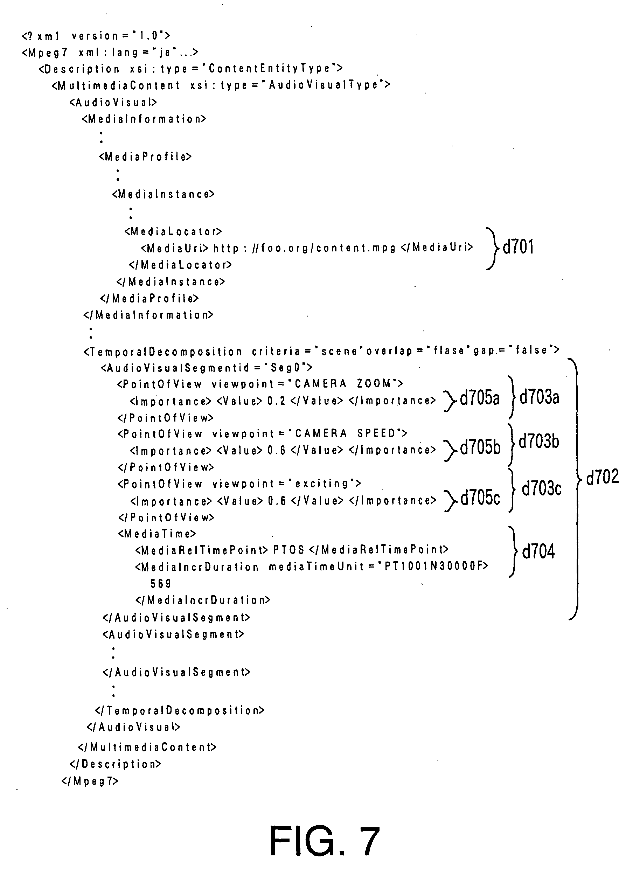

The views d101 are AV streams comprising video, speech, audio, text, etc. A reference example of a view d101 is shown in FIG.7. In the reference example shown in FIG.7, Extensible Markup Language (XML) is used as an example of structure description data, this being a data description language standardized by the World Wide Web Consortium (W3C). As can be seen from FIG.7, a view d101 is composed of a plurality of segments. In the figure, a segment d702 with id "Seg0" is shown. In the view d101, this is composed of locator information d701, viewpoints d703a through d703c assigned on a segment-by-segment basis, and time information d704. Viewpoints d703a through d703c are assigned priority levels d705a through d705c, respectively.

Viewpoints d703a through d703c are metadata for explaining the view d101. Metadata can be assigned on a view d101 segment-by-segment basis, enabling a segment feature to be indicated by a viewpoint. By this means, a client can easily extract a segment corresponding to a specified viewpoint from a view d101 by specifying a viewpoint.

MPEG-7 metadata is used for the metadata d602. Metadata d602 is a content description that includes viewpoint information (described later herein) for individual content, and processing methods for individual content. In this example, a program (conversion information) that converts a view and generates a preview is stored as a processing method for individual content.

The content management information d601 is metadata that manages content groups together with partial information extracted from views d101 and previews d102, charging information (used by the charging section for charging), and so forth, for each content item. The content management information d601 manages partial information extracted from views d101 and previews d102 together with charging information, etc., using a content ID as a key. The content management information d601 may be created and stored in advance, or may be generated by the server from views d101, metadata d602, and charge information.

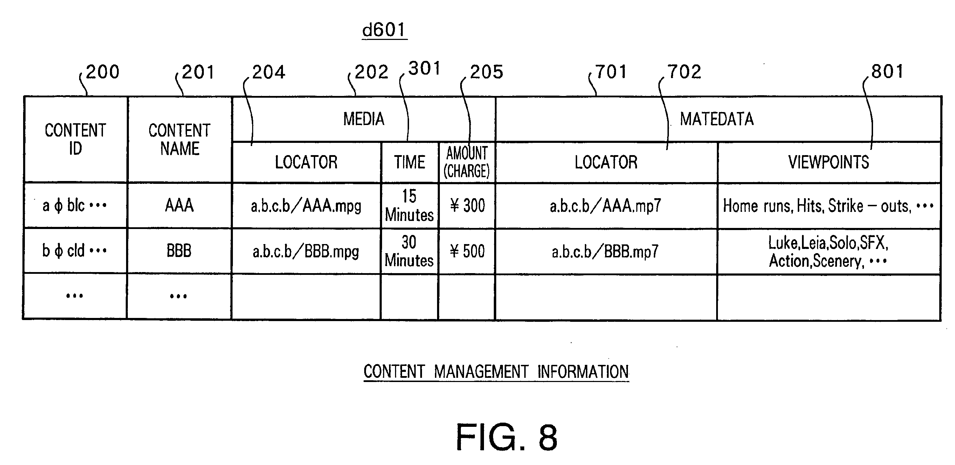

The content management information d601 is metadata for explaining views d101. As shown in FIG.8, in the content management information d601 are stored a plurality of groups comprising a content ID 200 and content name 201, a locator 204 which is locator information of media 202 corresponding to content, time information 301, charge information 205 applied when a content media 202 are distributed, locator information 702 of metadata 701 used when generating a preview from content, and a viewpoint (event) 801. FIG.8 is a drawing showing the configuration of content management information according to Embodiment 2.

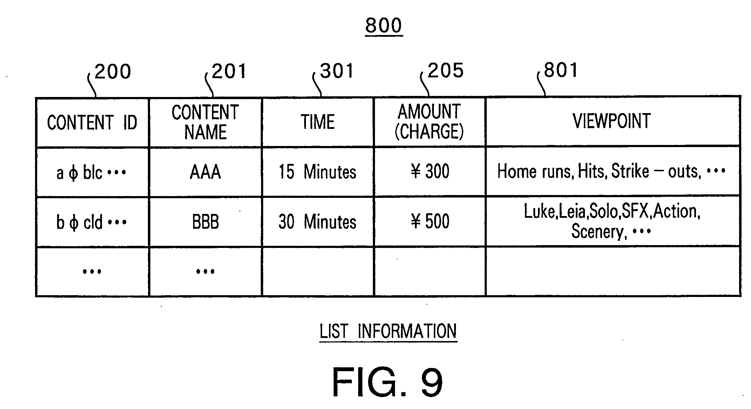

The server 600 is provided with a list information transmitting section 607 that generates the content list information 800 shown in FIG.9 from content management information d601 and transmits this to the client terminal 110 by means of e-mail or HTTP. As can be seen from FIG.9, the list information 800 is information required when a client selects content, being composed of groups comprising the content ID 200, content name 201, content time information 301, charge information 205 applied when content is distributed, and viewpoint information (keywords) 801 included in the content. FIG.9 is a drawing showing the configuration of list information according to Embodiment 2.

List information 800 differs from list information 300 in Embodiment 1 in the part containing content viewpoint information 801. Thus, while referring to list information 800 received by the list information receiving section 116, and using the operation input section 113, a client can not only specify a content ID which is identification information that identifies content, but also specify viewpoint information 801 corresponding to a content ID 200. Thus, a client can transmit to the server 600 a content ID 200 and viewpoint information 801 contained in content distribution request information.

The server 600 is also provided with a request analysis section 605 that analyzes information such as content name 201, media 202 locator information 204, charge information 205, and viewpoint 801, from content distribution request information (content ID 200) received by the request receiving section 104. The request analysis section 605 determines the content name 201 of content distribution request information, and whether the content distribution request information is a media distribution request or a preview distribution request for that content.

Then, if the request analysis section 605 determines that the content distribution request information is a media distribution request, it refers to the content management information d601, analyzes locator information 204 of the media 202 corresponding to the content, and the relevant charge information 205, and transmits the analysis results to a media selecting/converting section 602 and the charging section 106.

If, on the other hand, the request analysis section 605 determines that the content distribution request information is a preview distribution request, it further determines whether viewpoint information 801 is included. If the request analysis section 605 determines that viewpoint information 801 is included, the request analysis section 605 then refers to the content management information d601, and extracts locator information 702 of metadata 701 for generating a preview from a view d101. The request analysis section 605 then transmits locator information 204 of the view d101 corresponding to the content included in the content distribution request information, together with metadata 701 locator information 702, to the media selecting/converting section 602.

The server 600 is also provided with a media selecting/converting section 602 that selects media d101 to be sent to the client terminal 110, or generates a preview to be sent to the client terminal 110 from a view d101, based on analysis results sent from the request analysis section 605.

When generating a preview from a view d101, the media selecting/converting section 602 generates a preview using view d101 locator information 204 and metadata 701 locator information 702 sent from the request analysis section 605. Also, when viewpoint information 801 is sent, contained in content distribution request information, from the client terminal 110, the media selecting/converting section 602 extracts segments containing viewpoints conforming to sent viewpoint information 801 from a view d101 corresponding to the sent content ID 200, and generates a preview by linking the extracted segments.

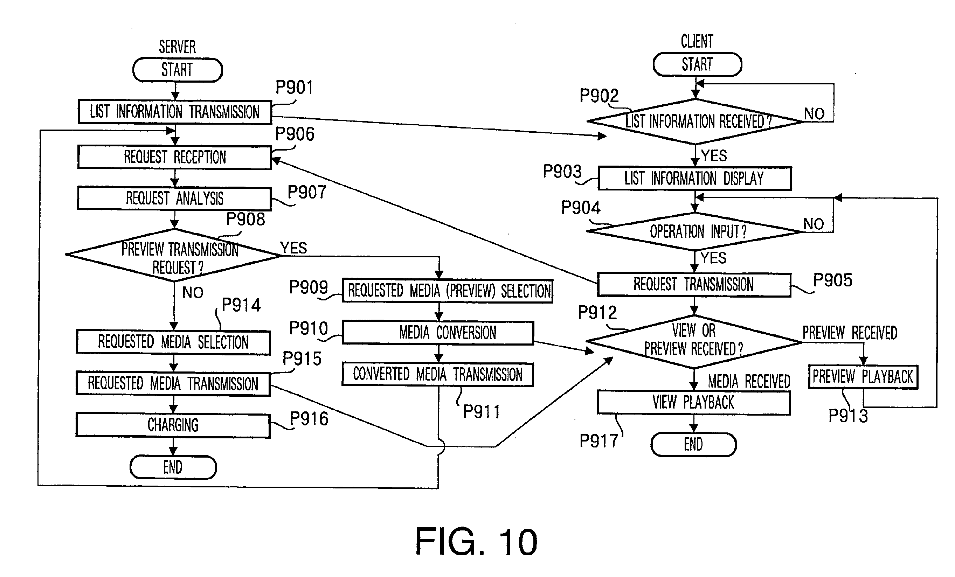

The operation of a media distribution system according to Embodiment 2 will be described below using FIG.10. FIG.10 is an operational flowchart of a media distribution system according to Embodiment 2.

First, the list information transmitting section 607 of the server 600 generates list information 800 from content management information d601, and transmits this to the client terminal 110 (P901).

Then, when the list information receiving section 116 of the client terminal 110 receives this list information 800 (P902), the list information display section 117 displays the list information 800 (P903). Next, the client refers to this list information 800 displayed on the list information display section 117, selects the desired content name 201, and inputs the content ID 200 corresponding to the desired content name 201 from the operation input section 113. In this way, the client inputs content distribution request information requesting a preview corresponding to the desired content. To be specific, when requesting a preview, the client inputs an indication that a preview is being requested, or inputs viewpoint information 801. Then, when the client inputs content distribution request information indicating that the client is requesting this preview (P904), the request transmitting section 115 transmits this content distribution request information indicating the request of a preview to the server 600 (P905).

When the request receiving section 104 of the server 600 receives the content distribution request information (P906), the request analysis section 605 analyzes the content distribution request information (P907), and determines whether preview distribution is being requested or view distribution is being requested (P908).

At this stage, the client is requesting a preview. Therefore, since the content distribution request information is requesting preview distribution, the media selecting/converting section 602 refers to the content management information d601 and extracts the locator 204 of the media 202 corresponding to the content name 201 requested by the client, and the locator 702 of metadata 701 (P909). Next, the media selecting/converting section 602 extracts the view d101 located at the extracted locator 204 and metadata 701 located at locator 702 from the storage section 601 (P409). Then the media selecting/converting section 602 converts the extracted view d101 using the extracted metadata 701, and generates a preview (P910).

Metadata 701 is a program that generates a preview of a length corresponding to the time desired by the client. Thus, by having the client select and input a time of the desired length, it is possible for metadata 701 to generate dynamically a preview of a length conforming to this input length.

When viewpoint information 801 is included in content distribution request information, the media selecting/converting section 602 selects information of appropriate parts (segments) from a view d101 of a sent content name 201, using sent viewpoint information 801, and generates a preview by linking the selected segments. The media selecting/converting section 602 may also transmit selected segments at any time in response to a request from a terminal without linking them.

Next, the media transmitting section 103 transmits this generated preview (conversion media) to the client terminal 110 (P911). As previews are free-of-charge, the charging section 106 does not perform charging when the preview is transmitted.

In the client terminal 110, the media receiving section 111 determines whether the information sent is a view d101 or a preview (P912). In this case, the information sent is a preview, and therefore the media playback section 112 plays back the preview d602 (P913).

The client then checks the contents of the played-back preview, and if the client determines that this preview shows the desired content, the client inputs content distribution request information requesting view distribution for this content from the operation input section 113. Then, on completion of input of content distribution request information requesting view distribution from the operation input section 113 (P904), this content distribution request information is transmitted to the server 600 (P905).

When the request receiving section 104 of the server 600 receives content distribution request information (P906), the request analysis section 605 analyzes the content distribution request information (P907). The request analysis section 605 analyzes the content distribution request information (P907) and determines whether preview distribution is being requested or view distribution is being requested (P908).

If the content distribution request information is requesting view distribution, the media selecting/converting section 602 selects a view d101 corresponding to the content ID 200 analyzed by the request analysis section 605 from the storage section 601 (P914), and transmits this selected view d101 from the media transmitting section 103 to the client terminal 110 (P915).

The request analysis section 605 then analyzes the charge for the content requested by the client. The charging section 106 then charges the client the charge amount for this content (P916).

Then, when the media receiving section 111 of the client terminal 110 receives this view (P912), the media playback section 112 plays back this view (P917).

Thus, according to Embodiment 2, as in Embodiment 1, prior to distributing a content view to a client it is possible to distribute a preview, which is information relating to that view, to the client free-of-charge.

In Embodiment 2, a generated preview is distributed free-of-charge, but a mode is also possible whereby an appropriate price is charged according to the length of a preview rather than making previews free-of-charge.

Also, in Embodiment 2, previews are not generated and stored beforehand, but instead, metadata d602 for generating previews is stored beforehand and a preview is generated in accordance with a request from a client, enabling the storage capacity of the storage section 601 to be kept small. Furthermore, by storing a plurality of metadata, it is possible to generate and distribute a greater number of patterns for a single content item. Even in this case, only a small storage capacity is necessary.

Moreover, according to Embodiment 2, it is possible to show a client viewpoint information, and therefore a client can specify not only a content name but also viewpoint information. Also, the server 600 can generate a preview incorporating viewpoint information specified by a client. As a result, by viewing a preview created from a desired viewpoint, a client can check with greater certainty whether or not the contents of content are what the client wants. Thus, a client can be more certain of having the desired content distributed to him or her.

Media (previews) once converted may also be held (cached) according to the frequency of content access. This enables CPU resources and storage resources to be employed efficiently.

A mode is also possible that combines Embodiment 1 and Embodiment 2. In this case, previews corresponding to media for which many distribution requests are anticipated may be generated and stored in advance. Also, the processing flow is not limited to that in Embodiment 2. For example, another preview may be requested after the current preview.

### (Embodiment 3)

In a media distribution system according to Embodiment 3, charging is not performed on completion of media distribution, as in Embodiment 1, but is performed when a client performs a predetermined action with respect to media after the client has first stored the media. That is to say, media playback is performed when a client wishes to view the media, and the client is charged at the time of playback.

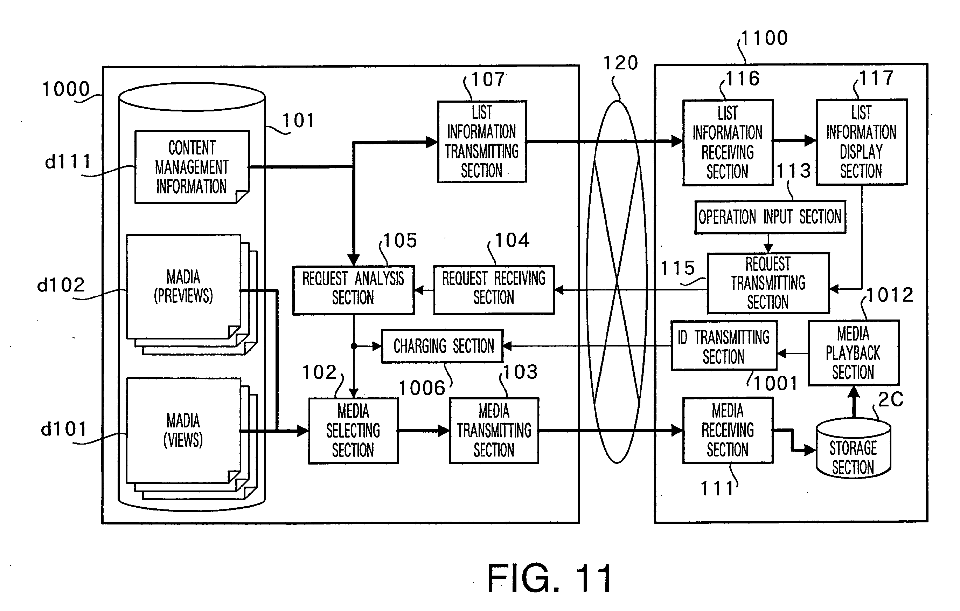

A media distribution system according to Embodiment 3 will be described below using FIG. 11. FIG. 11 is a block diagram of a media distribution system according to Embodiment 3. Parts identical to those already described are assigned the same codes as before and their detailed explanations are omitted.

A client terminal 1100 according to Embodiment 3 differs from a client terminal 110 according to Embodiment 2 in being provided with a storage section 2C that stores media received by the media receiving section 111, a media playback section 1012 that plays back media stored in the storage section 2C, and an ID transmitting section 1001 that, when the media playback section 1012 plays back media, transmits the ID of the client and the played-back content ID 200 to the server 1000, which is a media distribution apparatus.

The storage section 2C is a hard disk, memory card, DVD, or the like. When media playback ends, the media playback section 1012 outputs the played-back content ID 200 to the ID transmitting section 1001. Then, when the ID transmitting section 1001 receives the content ID 200 from the media playback section 1012, the ID transmitting section 1001 transmits the content ID 200 together with the client ID to the server 1000.

The server 1000 is provided with a charging section 1006 that, when a content ID 200 and client ID are received from the ID transmitting section 1001, identifies content based on the content ID 200 and performs charging for the content.

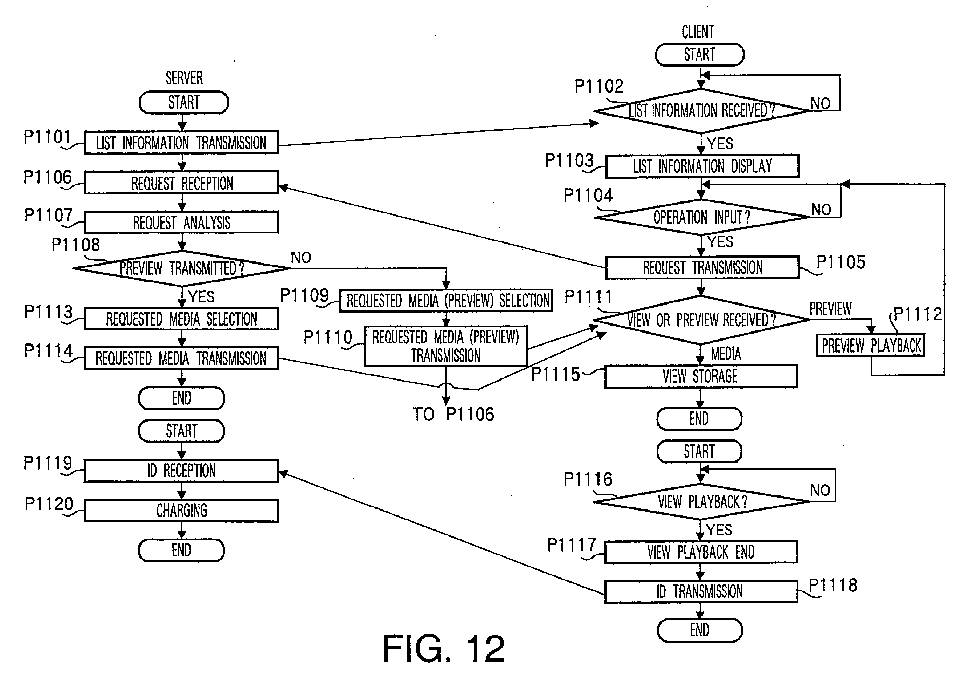

The operation of a media distribution system according to Embodiment 3 will be described below using FIG.12. FIG.12 is an operational flowchart of a media distribution system according to Embodiment 3.

First, the list information transmitting section 107 of the server 1000 generates list information 300 from content management information d111, and transmits this to the client terminal 1100 (P1101).

Then, when the list information receiving section 116 of the client terminal 1100 receives this list information 300 (P1102), the list information display section 117 displays the list information 300 (P1103). Next, the client inputs content distribution request information requesting preview distribution by referring to this list information 300 displayed on the list information display section 117, selecting the content ID 200 of the desired content name 201, and inputting this from the operation input section 113 (P1104), and the request transmitting section 115 transmits this content distribution request information to the server 1000 (P1105).

When the request receiving section 104 of the server 1000 receives the content distribution request information (P1106), the request analysis section 105 analyzes the content distribution request information (P1107). The request analysis section 105 then determines whether the client is requesting preview distribution by determining whether or not a preview has already been distributed (P1108).

If it is determined that a preview has not been distributed to the client, the media selecting section 102 refers to the content management information d111 and extracts the locator 206 of the preview 203 for the content name 201 requested by the client. The media selecting section 102 then selects the preview d102 located at the extracted locator 206 from the storage section 101 (P1109). Then the media transmitting section 103 transmits this selected preview d102 to the client terminal 1100 (P1110).

The media receiving section 111 of the client terminal 1110 determines whether the information sent is a view d101 or preview d102 (P1111). In this case, the information sent is a preview d102, and therefore the storage section 2C first stores the preview d102, and then the media playback section 1012 plays back the preview d102 (P1112).

The client then checks the contents of the played-back preview, and if the preview shows the desired content, inputs content distribution request information requesting view distribution by inputting the content ID 200 of this content name 201 from the operation input section 113. Then, when content distribution request information requesting view distribution is input from the operation input section 113 (P1104), this content distribution request information is transmitted to the server 1000 (P1105).

When the request receiving section 104 of the server 1000 receives content distribution request information (P1106), the request analysis section 105 analyzes the content distribution request information (P1107). The request analysis section 105 then determines whether the client is requesting view distribution by determining whether or not a preview has already been distributed (P1108).

In this case, a preview has already been distributed to the client, and therefore it is determined that view distribution is being requested. Next, the media selecting section 102 selects a view d101 corresponding to the content analyzed by the request analysis section 105 from the storage section 101 (P1113), and transmits this selected view d101 from the media transmitting section 103 to the client terminal 1100 (P1114).

Then, on completion of view transmission, the request analysis section 105 analyzes the charge for the view requested by the client. The charging section 106 then charges the client the charge amount for this view (P415).

When the media receiving section 111 of the client terminal 1100 receives this media item (P1111), the media item is first stored in the storage section 2C (P1115). After this, the media playback section 1012 plays back this media item via an operation by the client (P1116).

Next, when all media playback ends (P1117), the media playback section 1012 sends this content ID to the ID transmitting section 1001. The ID transmitting section 1001 then sends this content ID 200 together with the client ID to the charging section 1006 of the server 1000 (P1118).

On receiving these IDS (P1119), the charging section 1006 checks the client ID and checks whether the user is a legitimate user. If the charging section 1006 determines that the client ID is legitimate, it analyzes the content ID 200 and performs charging according to the media (P1120).

As described above, according to Embodiment 3 a client can not only request view distribution after viewing a preview of a view, but can also play back a view at any time by first storing a received view. As a result, a client is able to use views under better conditions.

Also, according to Embodiment 3, media such as previews and views can be stored in a storage section, and therefore it is not necessary for a client to download the same media via a network numerous times.

Moreover, according to Embodiment 3, a server can perform charging at the end of each playback of a view stored by a client. By this means it is possible to prevent a client from playing back a stored view numerous times for a one-time charge. Also, as charging is implemented when a client finishes view playback, it is possible to avoid charging when a client is unable to download a view normally. This prevents unnecessary expenditure by a client.

In Embodiment 3, a mode has been described whereby an ID is transmitted to the server, and the server performs charging, each time one playback of a view ends, but a mode is also possible whereby an ID is transmitted to the server, and the server performs charging, after a predetermined number of view playbacks.

Furthermore, a mode is also possible whereby an ID is transmitted to the server when view playback starts or when view playback is halted, even if media playback is not finished to the end. In this mode, charging is also performed when a view is played back even to a small extent, and is not finished to the end. This makes it possible to prevent a client from avoiding being charged by stopping view playback just before the end of the view.

It is also possible for the content ID 200 and client ID to be transmitted to the server 1000 before a client performs view playback, and for the client to be able to perform view playback only when permitted to do so by the server 1000.

Moreover, it is also possible for a media distributor to set beforehand an interval for which view playback is permitted or a playback time, and to have the content ID 200 and client ID transmitted automatically from the client terminal 1100 to the server 1000 if this interval or playback time is exceeded. In this mode, it is desirable to send, together with a view, a program that provides for these IDs to be sent to the server 1000, and charging to be performed, automatically when a certain interval or playback time is exceeded, and for subsequent playback to be made impossible. According to this mode, a client can perform playback any number of times according to the client's own desired method of use, as long as this is within the permitted interval or playback time.

Furthermore, it is also possible to have the content ID 200 and client ID transmitted to the server 1000 in a case where a client terminal stores the relevant location when the client halts view playback partway through, and when next performing playback, starts playback from a part other than this location. In this mode, it is desirable for a program that performs this kind of processing to be sent together with a view. Also, according to this mode, it is possible to prevent a client from repeatedly halting playback and playing back the same part numerous times.

### (Embodiment 4)

In Embodiment 4, preview playback functions of the kind described in Embodiment 2 are provided in a media distribution system according to Embodiment 3.

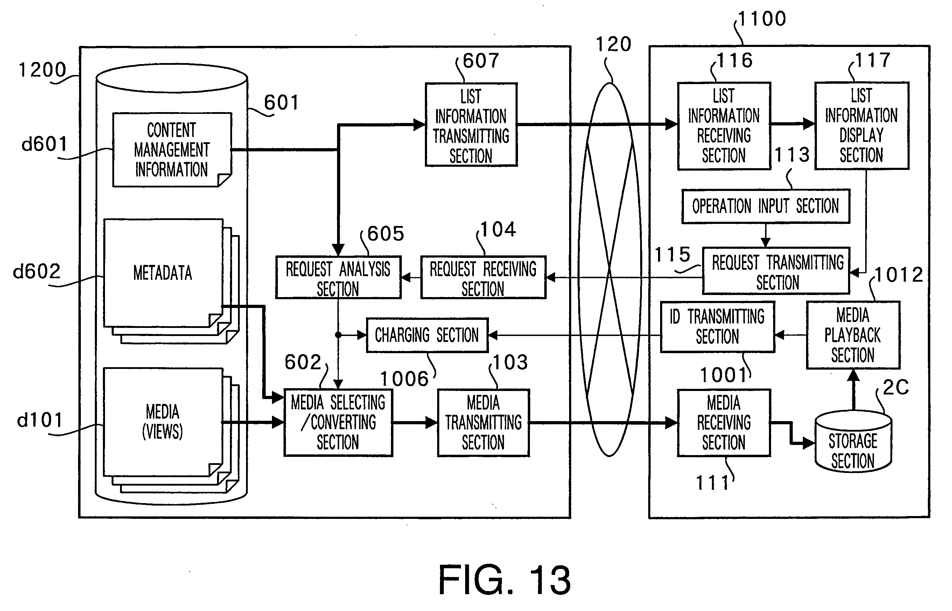

A media distribution system according to Embodiment 4 will be described below using FIG.13. FIG.13 is a block diagram of a media distribution system according to Embodiment 4. Parts identical to those already described are assigned the same codes as before and their detailed explanations are omitted.

To be precise, in a media distribution system according to Embodiment 4, the server 1200, which is the media distribution apparatus in this example, has the charging section 106 of the server 1000 according to Embodiment 2 replaced by the charging section 1006 of Embodiment 3.

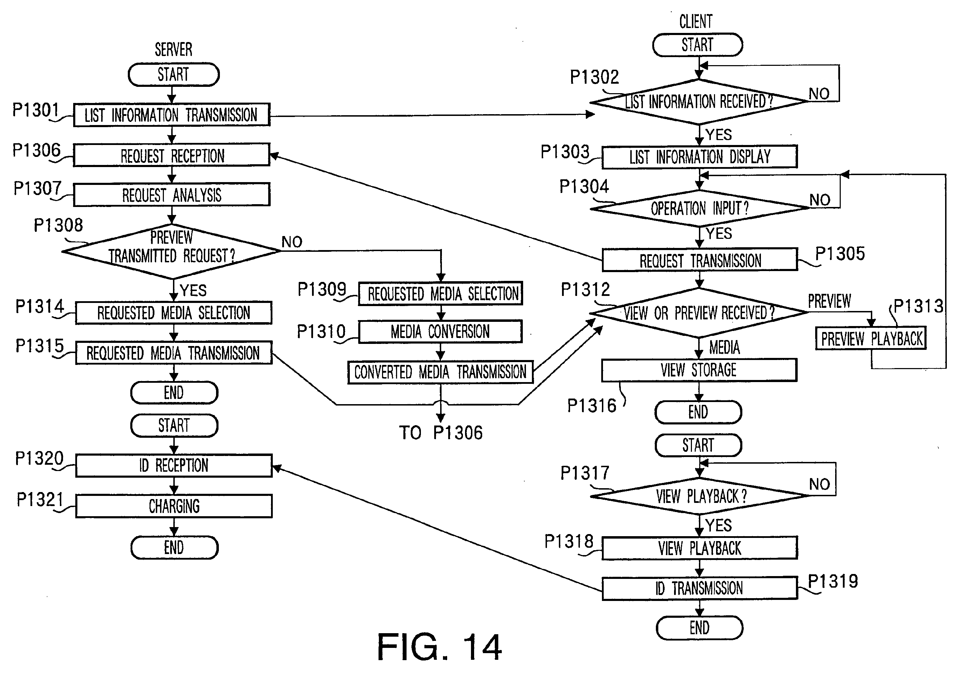

The operation of a media distribution system according to Embodiment 4 will be described below using FIG.14. FIG.14 is an operational flowchart of a media distribution system according to Embodiment 4.

First, the list information transmitting section 607 of the server 1200 generates the list information 800 shown in FIG.9 from content management information d601, and transmits this to the client terminal 1100 (P1301).

Then, when the list information receiving section 116 of the client terminal 1100 receives this list information 800 (P1302), the list information display section 117 displays the list information 800 (P1303). Next, the client inputs content distribution request information requesting preview distribution by referring to this list information 800 displayed on the list information display section 117, selecting the content ID 200 of the desired content name 201, and inputting this from the operation input section 113 (P1304), and the request transmitting section 115 transmits this content distribution request information to the server 1200 (P1305).

When the request receiving section 104 of the server 1200 receives the content distribution request information (P1306), the request analysis section 605 analyzes the content distribution request information (P1307). The request analysis section 605 then determines whether the client is requesting preview distribution by determining whether or not a preview has already been distributed (P1308).

In this case, a preview has not yet been distributed to the client, and therefore the media selecting/converting section 602 refers to the content management information d601 and extracts the locator 204 of the media 202 corresponding to the content name 201 requested by the client, and the locator 702 of metadata 701 (P1309). The media selecting/converting section 602 then extracts the view d101 located at the extracted locator 204 and metadata 701 located at locator 702 from the storage section 601. Then the media selecting/converting section 602 converts the extracted view d101 using the extracted metadata 701, and generates a preview (P1310).

When viewpoint information 801 is included in content distribution request information, the media selecting/converting section 602 selects information of appropriate parts (segments) from a view d101 of a sent content name 201, using sent viewpoint information 801, and generates a preview by linking this information.

Next, the media transmitting section 103 transmits this generated preview (conversion media) to the client terminal 1100 (P1311).

In the client terminal 1100, the media receiving section 111 determines whether the information sent is a view d101 or a preview (P1312). In this case, the information sent is a preview, and therefore the storage section 2C first stores the preview d102, and then the media playback section 1012 plays back this preview (P1313).

The client then checks the contents of the played-back preview, and if the client determines that this preview shows the desired content, the client inputs content distribution request information requesting view distribution by inputting the content ID 200 of this content name 201 from the operation input section 113. Then, when content distribution request information requesting view distribution is input from the operation input section 113 (P1304), the client terminal 1100 transmits this content distribution request information to the server 1200 (P1305).

When the request receiving section 104 of the server 1200 receives content distribution request information (P1306), the request analysis section 605 analyzes the content distribution request information (P1307). The request analysis section 605 then determines whether the client is requesting view distribution by determining whether or not a preview has already been distributed (P1308).

In this case, a preview has already been distributed to the client, and therefore it is determined that view distribution is being requested. Next, the media selecting/converting section 602 selects a view d101 corresponding to the content analyzed by the request analysis section 605 from the storage section 601 (P1314), and transmits this selected view d101 from the media transmitting section 103 to the client terminal 1100 (P1315).

When the media receiving section 111 of the client terminal 1100 receives this view (P1312), the view is first stored in the storage section 2C (P1316). After this, the media playback section 1012 plays back this media item.

Next, when all view playback ends (P1318), the media playback section 1012 sends this content ID 200 to the ID transmitting section 1001. The ID transmitting section 1001 then sends this content ID 200 together with the client ID to the charging section 1006 of the server 1200 (P1319).

On receiving these IDs (P1320), the charging section 1006 checks the client ID and checks whether the user is a legitimate user. If the charging section 1006 determines that the client ID is legitimate, it analyzes the content ID 200 and performs charging according to the view (P1321).

As described above, according to Embodiment 4 it is possible to achieve the effects obtained with Embodiment 2 and Embodiment 3.

### (Embodiment 5)

A media distribution apparatus according to Embodiment 5 has advertisements as media for content in order to perform media distribution to clients at a somewhat lower price, and distributes these advertisements to clients. A client can receive a charge discount by viewing advertisements. In this way, clients can receive a media distribution services cheaply by using advertisements which comprise information related to media, and therefore clients will receive media distribution services frequently.

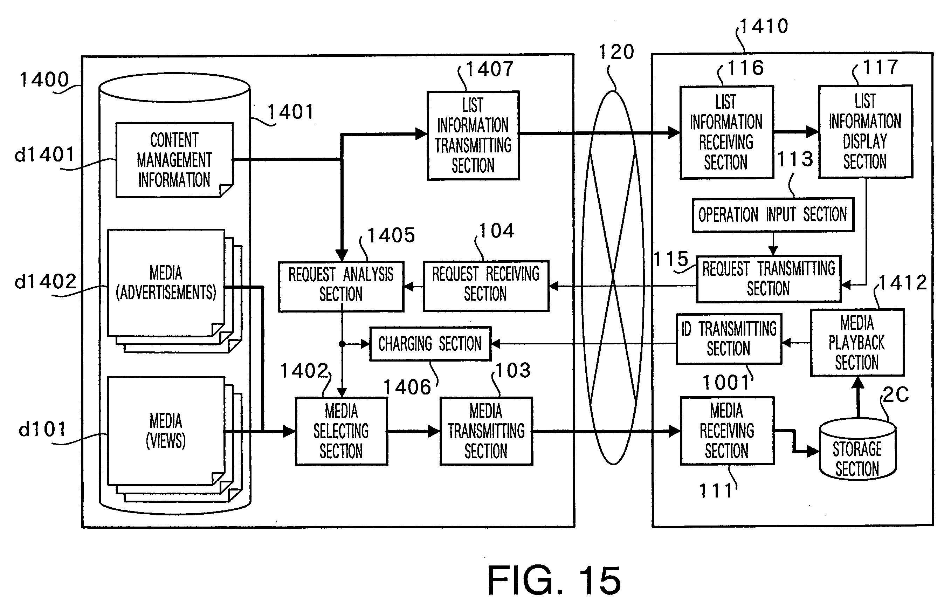

A media distribution system according to Embodiment 5 will be described below using FIG.15. FIG.15 is a block diagram of a media distribution system according to Embodiment 5. Parts identical to those already described are assigned the same codes as before.

A server 1400 according to Embodiment 5 is provided with a storage section 1401 that stores content views d101, advertising media (hereinafter referred to as "advertisements") d1402 comprising information managed so as to be related to views d101, and content management information d1401 comprising information that manages views d101 and advertisements d1402.

Advertisements d1402 are AV content, and may include links to display destination WEB content (for example, URL) and links indicating the storage destination of banner advertising data (for example, URL). URL is an abbreviation of Uniform Resource Locator.

Metadata is used for content management information d1401. The content management information d1401 is metadata that manages content groups for each content item, and with partial information extracted from views d101 and advertisements d1402, together with charges, and so forth.

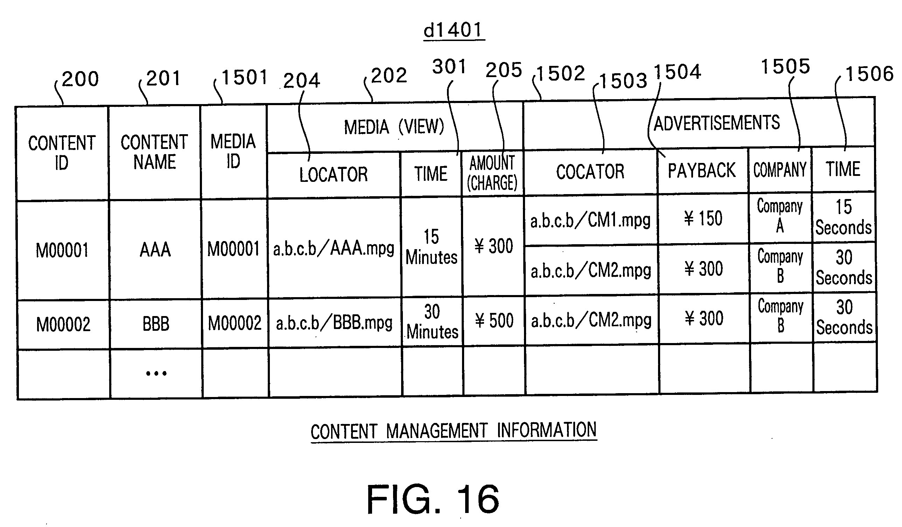

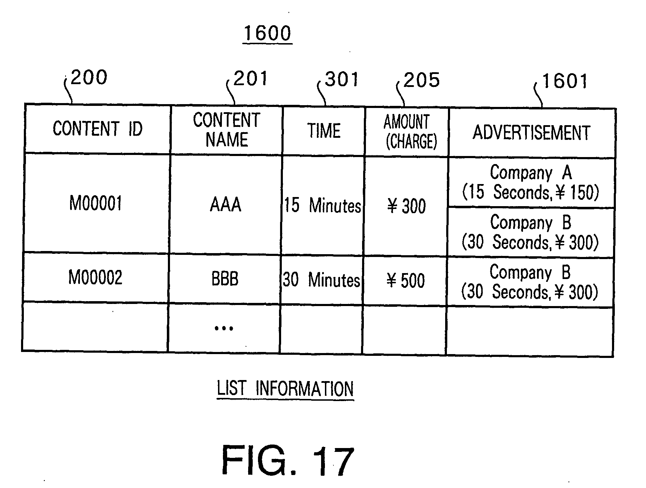

As shown in FIG.16, in the content management information d1401 are stored a plurality of groups comprising a content ID 200, a content name 201, a locator 204 which is locator information of a view 202, time information 301 for a view 202 of a content name 201, charge information 205 applied when a view 202 is distributed, locator information 1503 of an advertisement 1502 corresponding to a content name 201, discount (payback) charge information 1504 applying when an advertisement is viewed, company name information 1505 indicating the sponsor of an advertisement 1502, and time information 1506 for an advertisement 1502. FIG.16 is a drawing showing the configuration of content management information according to Embodiment 5.
The server 1400 is provided with a list information transmitting section 1407 that generates the content list information 1600 shown in FIG. 17 from content management information d1401 and transmits this to the client terminal 1410 by means of e-mail or HTTP. FIG.17 is a drawing showing the configuration of list information according to Embodiment 5.

As can be seen from FIG.17, the list information 1600 is information required when a client selects content, being composed of groups comprising the content ID 200, content name 201, content time information 301, charge information 205 applied when content is distributed, and content-related advertisement contents 1601. The advertisement contents 1601 include a sponsor name, advertisement playback time information, and a payback charge, extracted from content management information d1401.

The server 1400 is also provided with a request analysis section 1405 that analyzes information such as content name 201, view 202 locator information 204, charge information 205, and advertisement 1502 locator information 1503, from content distribution request information (content ID 200) received from the storage section 1401, by referring to content management information d1401. The request analysis section 1405 determines the content name 201 of content distribution request information, and whether the content distribution request information is a view distribution request or an advertisement distribution request for that content. Then, if the request analysis section 1405 determines that the content distribution request information is a view distribution request, it refers to the content management information d1401, analyzes view locator information 204 and the relevant charge information 205, and transmits the analysis results to a media selecting section 1402 and charging section 1406.

If, on the other hand, the request analysis section 1405 determines that the content distribution request information is an advertisement distribution request, it refers to the content management information d1401, analyzes advertisement locator information 206, and transmits the analysis results to the media selecting section 1402.

The client terminal 1410 is also provided with a media playback section 1412 that plays back views and advertisements received by the media receiving section 111 and stored in the storage section 2C. When view playback ends, the media playback section 1412 outputs the played-back content ID 200 to the ID transmitting section 1001. Then, when the ID transmitting section 1001 receives the content ID 200 from the media playback section 1412, the ID transmitting section 1001 transmits the content ID 200 together with the client ID to the server 1400. Client IDs are determined beforehand between the server 1400 and client terminal 1410.

The server 1400 is also provided with a charging section 1406 that, when a content ID 200 and client ID are received from the ID transmitting section 1001, identifies the content based on the content ID 200, performs charging according to the content, and also performs payback of the charge for an advertisement when advertisement playback is performed by the client terminal 1410.

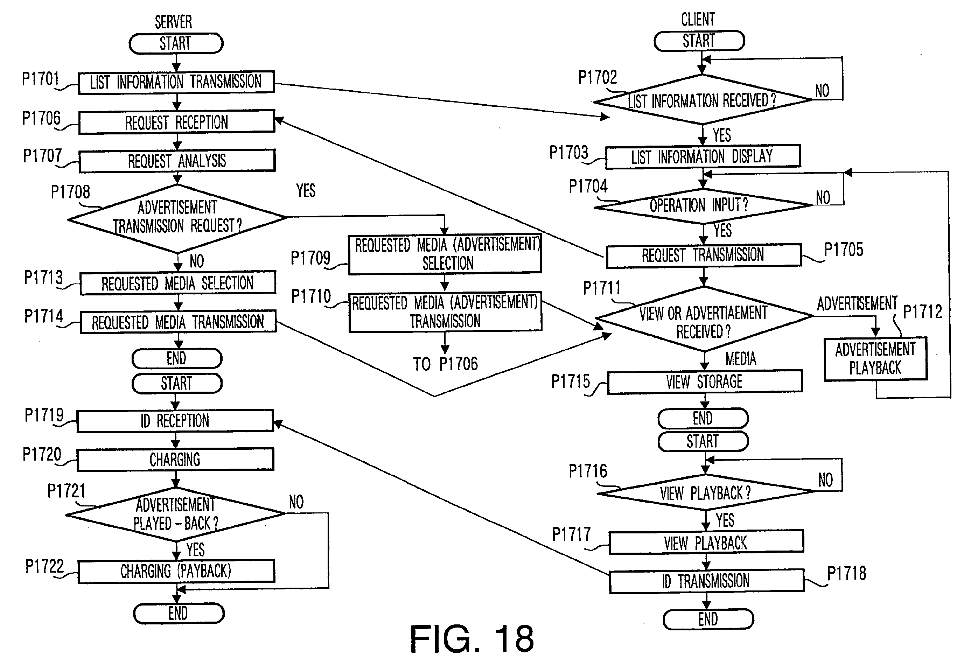

The operation of a media distribution system according to Embodiment 5 will be described below using FIG.18. FIG.18 is an operational flowchart of a media distribution system according to Embodiment 5.

First, the list information transmitting section 1407 of the server 1400 generates list information 1600 from content management information d1401, and transmits this to the client terminal 1410 (P1701).

Then, when the list information receiving section 116 of the client terminal 1410 receives this list information 1600 (P1702), the list information display section 117 displays the list information 1600 (P1703). Next, the client refers to this list information 1600 displayed on the list information display section 117, and first selects the content ID 200 of the desired content name 201, and inputs content distribution request information indicating a request for an advertisement of the desired content name 201, from the operation input section 113. Then, when the client finishes input of content distribution request information requesting this advertisement (P1704), the request transmitting section 115 transmits this content distribution request information requesting an advertisement to the server 1400 (P1705).

When the request receiving section 104 of the server 1400 receives the content distribution request information (P1706), the request analysis section 1405 analyzes the content distribution request information (P1707), and determines whether advertisement distribution (transmission) is being requested or media distribution is being requested (P1708).

If the content distribution request information is requesting advertisement distribution, the media selecting section 1402 refers to the content management information d1401 and extracts the locator 1503 of the advertisement for the content name 201 requested by the client. The media selecting section 1402 then selects the advertisement d1402 located at the extracted locator 1503 from the storage section 1401 (P1709). Then the media transmitting section 103 transmits this selected advertisement d1402 to the client terminal 1410 (P1710).

The media receiving section 111 of the client terminal 1410 determines whether the information sent is a view d101 or advertisement d1402 (P1711). In this case, the information sent is a advertisement d1402, and therefore the storage section 2C first stores the advertisement d1402, and then the media playback section 1412 plays back this advertisement d1402 (P1712). When playback of the advertisement d1402 ends, the media playback section 1412 outputs the content ID 200 to the ID transmitting section 1001. The ID transmitting section 1001 then transmits the received content ID 200 to the server 1400.

After playing back the advertisement, the client inputs content distribution request information requesting view distribution by inputting the content name 201 from the operation input section 113. Then, when content distribution request information requesting view distribution is input from the operation input section 113 (P1704), this content distribution request information is transmitted to the server 1400 (P1705). If the client wishes to view another advertisement, the client may input content distribution request information requesting advertisement distribution again.

When the request receiving section 104 of the server 1400 receives content distribution request information (P1706), the request analysis section 1405 analyzes the content distribution request information (P1707). In this case, the client is transmitting content distribution request information requesting view distribution and therefore the media selecting section 1402 selects a view d101 corresponding to the content analyzed by the request analysis section 1405 from the storage section 1401 (P1713), and transmits this selected view d101 from the media transmitting section 103 to the client terminal 1410 (P1714).

When the media receiving section 111 of the client terminal 1410 receives this view (P1711), the view is first stored in the storage section 2C (P1715). After this, the media playback section 1412 plays back this view.

Next, when all view playback ends (P1717), the media playback section 1412 sends this content ID 200 to the ID transmitting section 1001. The ID transmitting section 1001 then sends this content ID 200 together with the client ID to the charging section 1406 of the server 1400 (P1718).

On receiving these IDs (P1719), the charging section 1406 checks the client ID and checks whether the user is a legitimate user. If the charging section 1406 determines that the client ID is legitimate, it analyzes the content ID 200 and performs charging according to the view (P1720).

Next, the server 1400 determines whether or not the client terminal 1410 has finished advertisement playback (1721). To be specific, the charging section 1406 determines whether advertisement playback has been completed by determining whether the same content ID 200 has been sent from the same client terminal 1410.

If the server 1400 determines that the client 1410 has finished advertisement playback, it performs payback for the advertisement played back by the client 1410.

As described above, according to Embodiment 5 it is possible to distribute views, and advertisements managed through relation to views and for which payback is implemented as a result of distribution, to clients. By this means, clients can keep view distribution charges low by viewing advertisements, and as a result, clients are more ready to accept view distribution.

In Embodiment 5 a mode has been described whereby an advertisement is viewed prior to media distribution, but a mode is also possible whereby payback is received by viewing an advertisement after view distribution or during distribution simultaneously using a different layout.

There may also be a plurality of advertisements for one content item. Moreover, a mode may also be used whereby both advertisements and previews are stored for content. Also, the operation flow is not limited to that in this embodiment. For example, playback completion notification may be given to the server after a preview.

Furthermore, advertising payback may be varied according to the view charge. For example, the burden on a client may be alleviated by increasing advertising payback in proportion to the amount of the view charge.

Also, advertising payback may be determined according to the popularity of content. For example, sponsor advertising charges may be increased in proportion to the popularity of content. In this way the income of content creators can be increased, resulting in greater enthusiasm for content creation.

Moreover, advertising payback may be increased in inverse proportion to content popularity. By this means clients can receive distribution of low-popularity content at a low charge, and as a result, the number of clients requesting low-popularity content will increase.

### (Embodiment 6)

In Embodiment 6, a server on the media distribution side stores broadband media comprising versions of views for large-data-volume broadband communication, and narrowband media comprising versions of views for narrowband communication with smaller data volumes than broadband communication. Switching of media for distribution is then performed between broadband media and narrowband media according to client terminal status-that is, according to the band that can be used by a client terminal.

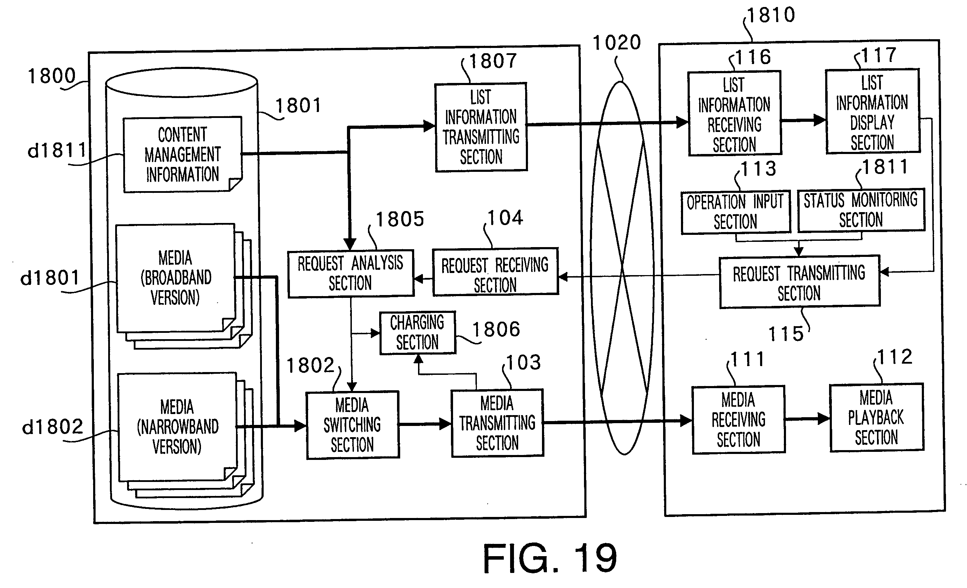

A media distribution system that includes a media distribution apparatus according to Embodiment 6 will be described below. First, the configuration of a media distribution system according to Embodiment 6 will be described using FIG.19. FIG.19 is a block diagram of a media distribution system according to Embodiment 6.

In this media distribution system, a server 1800 of a media distributor (provider) performing a content distribution service, and a client terminal 1810 which is a mobile communication terminal such as a portable terminal, are connected via a mobile communication network 1020 such as a portable communication network. That is to say, the performance of media transmission from a server 1800, which is a media distribution apparatus, to a client terminal 1810 via a network 1020 is assumed.

The server 1800 is provided with a storage section 1801 that stores, as content media, media d1801 (hereinafter referred to as "broadband media") comprising views having a large volume of data for broadband communication use (broadband versions), media d1802 (hereinafter referred to as "narrowband media") comprising views having a smaller volume of data than broadband versions for narrowband communication use (narrowband versions), and content management information d1811 that manages broadband media d1801 and narrowband media d1802 by maintaining correspondence between the two.

The broadband media d1801 and narrowband media d1802 are AV streams comprising video, speech, audio, text, etc. A data format such as MPEG-1, MPEG-2, MPEG-4, DV, JPEG, or GIF is used for the broadband media d1801 and narrowband media d1802. If broadband media d1801 is assumed to be color video with audio, narrowband media d1802 will be text-only data, audio-only data, skipped-frame video, or similar low-volume data.

The content management information d1811 is metadata that manages content groups together with partial information extracted from broadband media d1801 and narrowband media d1802, charging information, and so forth, for each content item.

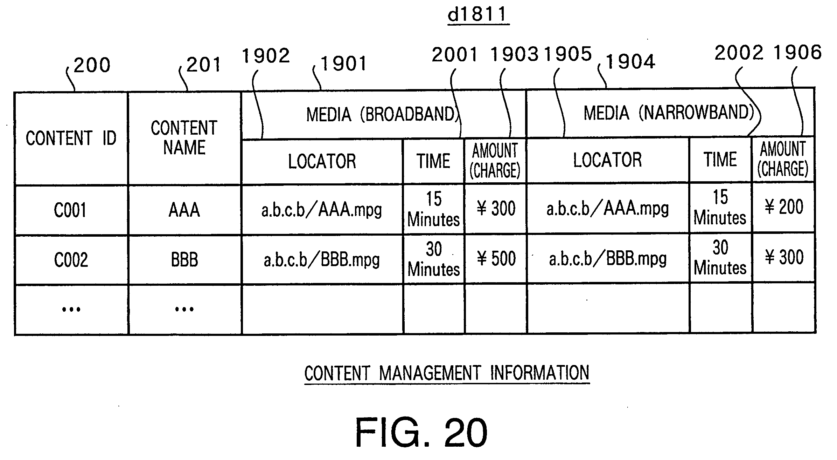

As shown in FIG.20, in the content management information d1811 are stored a plurality of groups comprising a content ID 200, a content name 201, a locator 1902 which is locator information of broadband media 1901 corresponding to a content name 201, broadband media 1901 time information 2001, charge (monetary amount) information 1903 for distribution of broadband media 1901 of content name 201, a locator 1905 which is locator information of narrowband media 1904 corresponding to a content name 201, narrowband media 1904 time information 2002, charge (monetary amount) information 1906 for distribution of narrowband media 1904 of content ID 200. FIG.20 is a drawing showing the configuration of content management information according to Embodiment 6.

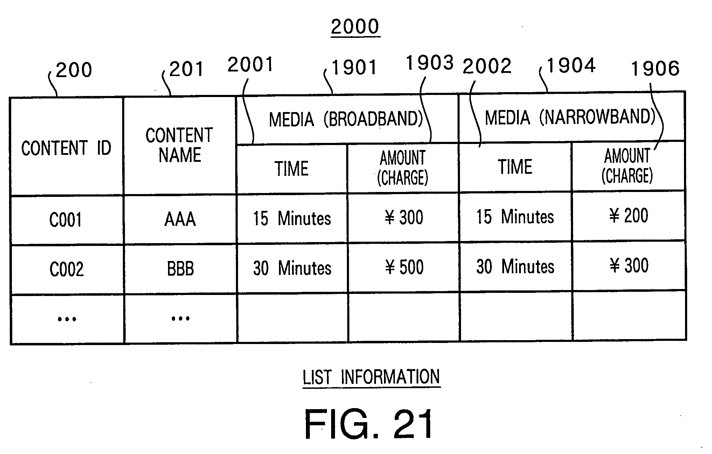

The server 1800 is provided with a list information transmitting section 1807 that generates the content list information 2000 shown in FIG.21 from content management information d1811 and transmits this to the client terminal 1810. FIG.21 is a drawing showing the configuration of list information according to Embodiment 6.

As can be seen from FIG.21, the list information 2000 is information required when a client selects content, being composed of groups comprising the content ID 200, content name 201, broadband media 1901 time information 2001, charge information 1903 for broadband media 1901 distribution, narrowband media 1904 time information 2002, and charge information 1906 for narrowband media 1904 distribution.

The client terminal 1810 is provided with a list information receiving section 116 that receives list information 2000 sent from the server 1800, and a list information display section 117 that displays received list information 2000. The client terminal 1810 is also provided with an operation input section 113 that inputs desired content distribution request information from the list information 2000.

In addition, the client terminal 1810 is provided with a status monitoring section 1811 that monitors the status of the client terminal 1810 and outputs corresponding status information. The status information is information for determining the band that can be used by the client terminal 1810. For example, status information may include information relating to a band in which client terminal 1810 transmission is possible, status information as to whether the client terminal 1810 is moving or stationary, and so forth.

The client terminal 1810 is further provided with a request transmitting section 115 that transmits content distribution request information or status information input from the operation input section 113 or the status monitoring section 1811 to the server 1800.

The server 1800 is provided with a request receiving section 104 that receives content distribution request information or status information sent from the client terminal 1810.

The server 1800 is also provided with a request analysis section 1805 that analyzes information such as content ID 200, content name 201, broadband media 1901 locator information 1902, charge information 1903, narrowband media 1904 locator information 1905, charge information 1906, and so forth, corresponding to received content distribution request information, by referring to content management information d1811 when content distribution request information is received.

By means of received status information, the request analysis section 1805 determines whether the current content media to be selected is for a broadband media distribution request or a narrowband media distribution request. If the request analysis section 1805 determines that the content distribution request information is a broadband media distribution request, it refers to the content management information d1811, analyzes broadband media 1901 locator information 1902 and the relevant charge information 1903, and transmits the analysis results to a media switching section 1802 and charging section 1806.

If, on the other hand, the request analysis section 1805 determines that the content distribution request information is a narrowband media 1904 distribution request, it refers to the content management information d1811, analyzes narrowband media 1904 locator information 1905 and the relevant charge information 1906, and transmits the analysis results to the media switching section 1802 and charging section 1806.

The server 1800 is also provided with a charging section 1806 that charges a client based on charge information analyzed by the request analysis section 1805 after completion of media transmission by the media transmitting section 103. The charging section 1806 performs processing to debit a client's account by the charged amount.

In addition, the server 1800 is provided with a media switching section 1802 that selects broadband media d1801 or narrowband media d1802 of content that a client wishes to have distributed, using the results of analysis of content distribution request information by the request analysis section 1805, and extracts the relevant media from the storage section 1801.

Furthermore, the server 1800 is provided with a media transmitting section 103 that transmits broadband media d1801 or narrowband media d1802 selected by the media switching section 1802 to the client terminal 1810.

The client terminal 1810 is provided with a media receiving section 111 that receives sent broadband media d1801 or narrowband media d1802, and a media playback section 112 that plays back received broadband media d1801 or narrowband media d1802.

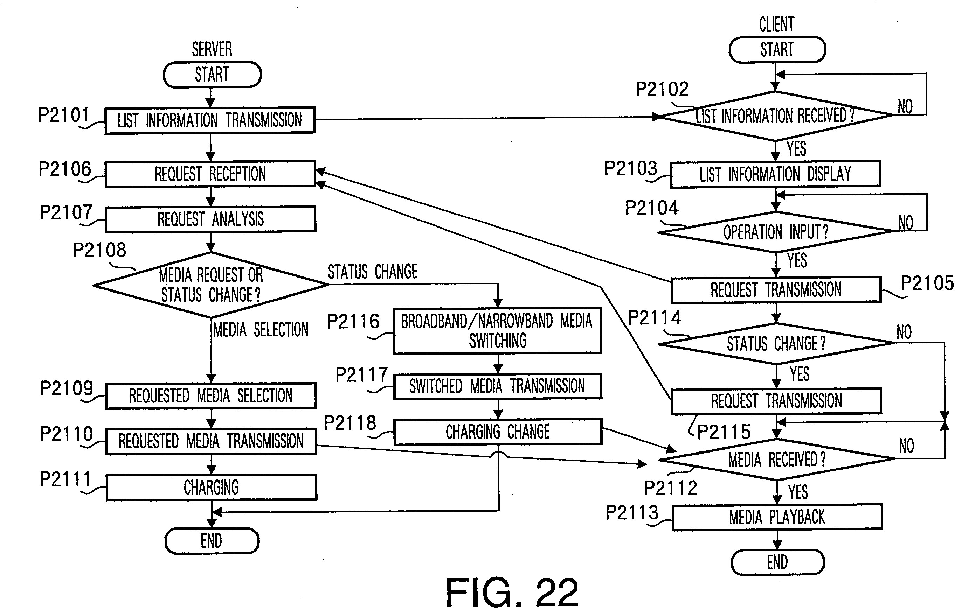

The operation of a media distribution system according to Embodiment 6 will be described below using FIG.22. FIG.22 is an operational flowchart of a media distribution system according to Embodiment 6.

First, the list information transmitting section 1807 of the server 1800 generates list information 2000 from content management information d1811, and transmits this to the client terminal 1810 (P2101).

Then, when the list information receiving section 116 of the client terminal 1810 receives this list information 2000 (P2102), the list information display section 117 displays the list information 2000 (P2103). Next, the client refers to this list information 2000 displayed on the list information display section 117, and first selects the content ID 200 of the desired content name 201, and inputs the desired content ID 200 from the operation input section 113. Then, when the client inputs content distribution request information requesting content (P2104), the status monitoring section 1811 monitors the current status of the client terminal 1810, and adds current status information to the content distribution request information. This content distribution request information and status information is then transmitted to the server 1800 (P2105).

When the request receiving section 104 of the server 1800 receives the content distribution request information (P2106), the request analysis section 1805 analyzes the content distribution request information (P2107), and determines whether this information is requesting media or notifying a change in the status of the client terminal 1810 (P2108).

In this case, content distribution request information has been sent, indicating that a request for media is being made. Therefore, the request analysis section 1805 next determines from the status information whether the band that can be used by the client terminal 1810 is one for broadband media or narrowband media.

The media switching section 1802 then selects media corresponding to the content analyzed by the request analysis section 1805 from the storage section 1801 (P2109), and this selected media item is transmitted from the media transmitting section 103 to the client terminal 1810 (P2110). The charge for the broadband media or narrowband media corresponding to the content name 201 requested by the client is then analyzed. The charging section 1806 then charges the client in accordance with the charge information for this content (P2111).

When the media receiving section 111 of the client terminal 1810 receives the transmitted media (P2112), the media playback section 112 plays back the media (P2113).

The status monitoring section 1811 of the client terminal 1810 constantly monitors changes in the status of the client terminal 1810. When the status monitoring section 1811 detects a change in status (P2114), the status monitoring section 1811 outputs status information corresponding to the changed status to the request transmitting section 115. On receiving this information, the request transmitting section 115 transmits this information to the server 1800 (P2115).

The server 1800 then receives this information (P2106), analyzes it (P2107), and determines whether this information is media distribution request information or status change information (P2108). In this case, the information sent from the client terminal 1810 is status change information, and therefore the request analysis section 1805 transmits information for switching the media to be selected to the media switching section 1802. The media switching section 1802 then switches the media type (P2116). Next, the media transmitting section 103 transmits the switched media to the client terminal 1810 (P2117). Then the request analysis section 1805 transmits charge information corresponding to the switched media to the charging section 1806. The charging section 1806 then performs charging corresponding to the switched media (P2118).

In response to this, the client terminal 1810 receives (P2112) and plays back (P2113) the switched media.

As described above, according to Embodiment 6 two types of media can be distributed: broadband media and narrowband media. This enables a client to use media of a band suited to the client's status. That is to say, if a client terminal 1810 can only use narrowband communication, it is possible to avoid using broadband media and paying high charges. This makes it possible for clients to receive a media distribution service under better conditions and with unnecessary expense curtailed.

Also, according to Embodiment 6, changes in the status of a client terminal 1810 are monitored, and media of a band appropriate to the client terminal 1810 status can be selected dynamically and transmitted automatically. As a result, it is possible for a client to receive appropriate media distribution at all times.

Moreover, according to Embodiment 6, the status of a client terminal 1810 is monitored in real time, making possible media switching that supports a mode whereby usable bands vary in real time, as in the case of wideband CDMA.

In Embodiment 6, a case has been described that supports a mode whereby usable bands vary in real time, as in the case of wideband CDMA, but a client terminal may also be a desktop-type PC. In this case, media switching may be carried out by determining the data transfer capability of the PC-for example, whether the PC uses a modem or uses ADSL.

A mode is also possible whereby clients are registered in advance in a server with correspondence between client terminal capability and client ID (information for identifying a client terminal) indicated. In this mode, a client will include the terminal ID in content distribution request information, making it unnecessary for a client to specifically state client terminal capability.

### (Embodiment 7)

Embodiment 7 is an improved version of Embodiment 6. That is to say, whereas in Embodiment 6 broadband media and narrowband media are generated and stored beforehand, in Embodiment 7 only broadband media are stored, and narrowband media are generated dynamically. To be more specific, in Embodiment 7 metadata for generating narrowband media from broadband media is stored, and is used as necessary.

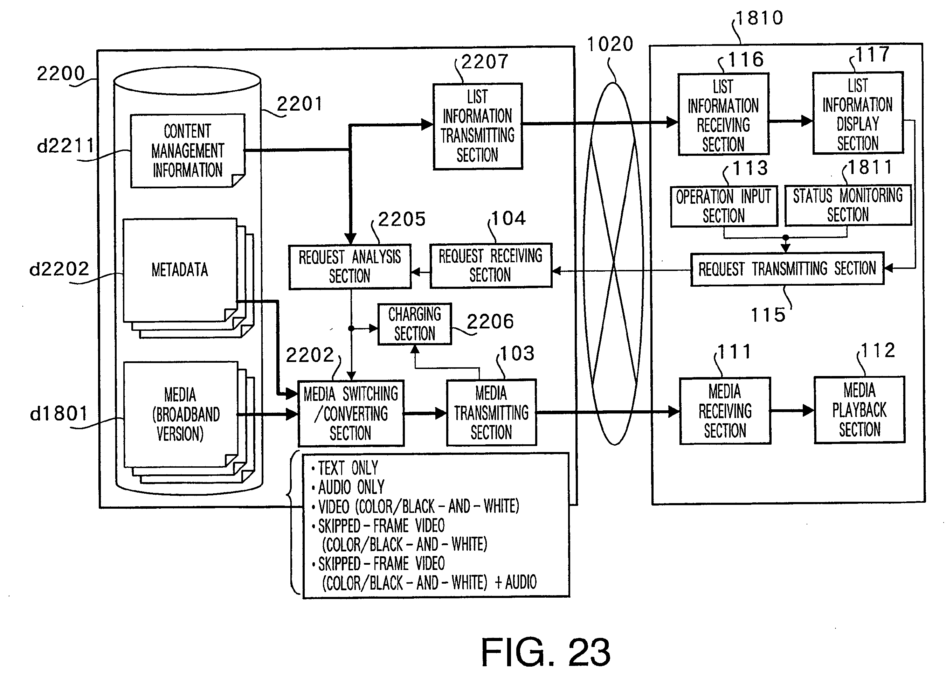

A media distribution system that includes a media distribution apparatus according to Embodiment 7 will be described below. First, the configuration of a media distribution system according to Embodiment 7 will be described using FIG.23. FIG.23 is a block diagram of a media distribution system according to Embodiment 7. Parts identical to those already described are assigned the same codes as before.

In this media distribution system, a server 2200 of a media distributor (provider) performing a content distribution service, and a client terminal 1810 which is a mobile communication terminal such as a portable terminal, are connected via a mobile communication network 1020 such as a portable communication network. That is to say, the performance of media transmission from a server 2200, which is a media distribution apparatus, to a client terminal 1810 via a network 1020 is assumed.

The server 2200 is provided with a storage section 2201 that stores, as content media, media d1801 (hereinafter referred to as "broadbandmedia") comprising a large volume of data for broadband communication use (broadband versions), metadata d2202 for converting broadband media to media for narrowband communication use (narrowband versions), and content management information d2211 that manages broadband media d1801 and metadata d2202 by maintaining correspondence between the two.

MPEG-7 metadata is used for the metadata d2202. The metadata d2202 comprises content descriptions that include a processing method for individual content. In this example, a program that generates narrowband media from broadband media is stored as a processing method for individual content.

Metadata is used for content management information d2211. The content management information d2211 is metadata that manages content groups together with partial information extracted from broadband media d1801 and metadata d2202, charging information, and so forth, for each content item.

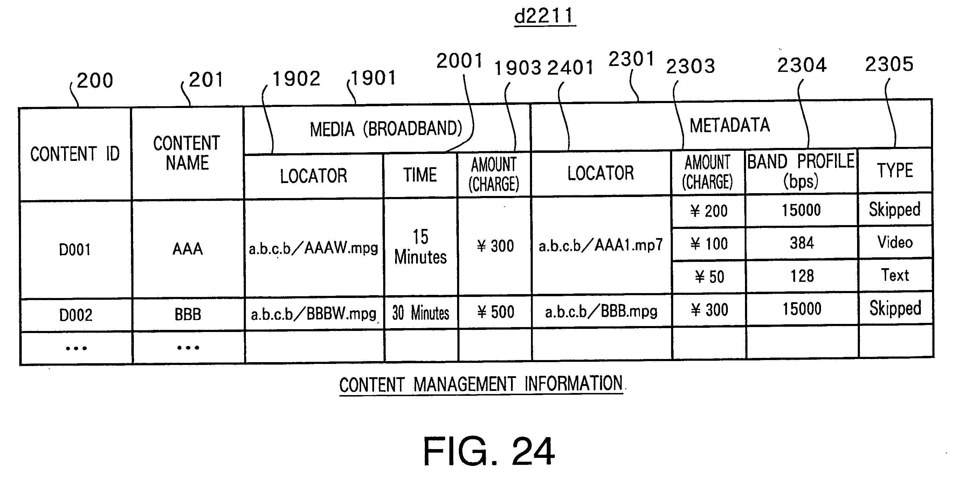

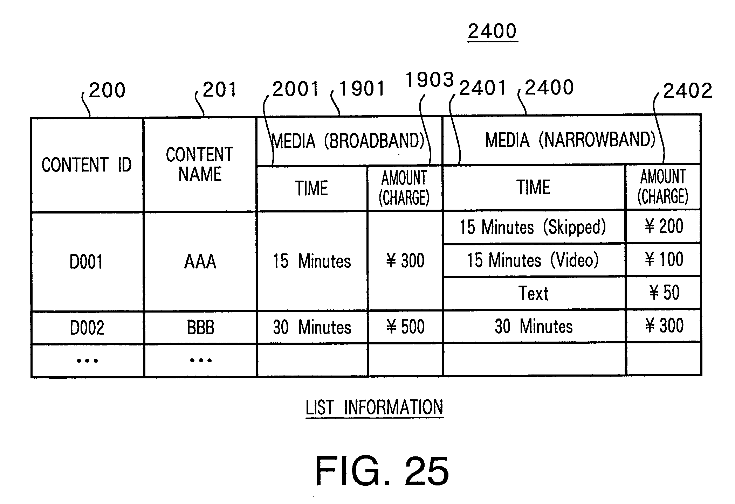

As shown in FIG.24, in the content management information d2211 are stored a plurality of groups comprising a content ID 200, a content name 201, a locator 1902 which is locator information of broadband media 1901 corresponding to a content name 201, broadband media 1901 time information 2001, charge information 1903 for distribution of broadband media 1901 of content ID 200, locator information 2302 of metadata 2301 corresponding to a content ID 200, charge (monetary amount) information 2303 for distribution of narrowband media generated using metadata 2301, a band profile 2304 of metadata generated using metadata 2301, and its type 2305. A band profile 2304 is provided for one content item so that a plurality of narrowband media can be generated for one content item. FIG.24 is a drawing showing the configuration of content management information according to Embodiment 7. The server 2200 is provided with a list information transmitting section 2207 that generates the content list information 2400 shown in FIG.25 from content management information d2211 and transmits this to the client terminal 1810. FIG.25 is a drawing showing the configuration of list information according to Embodiment 7.

As can be seen from FIG.25, the list information 2400 is information required when a client selects content, being composed of groups comprising the content ID 200, content name 201, broadband media 1901 time information 2001, charge information 1903 for broadband media 1901 distribution, time information and type information 2401 of narrowband media 2400 generated by means of metadata, and charge information 2402 for narrowband media 2400 distribution.

The client terminal 1810 is provided with a list information receiving section 116 that receives list information 2400 sent from the server 2200, and a list information display section 117 that displays received list information 2400. The client terminal 1810 is also provided with an operation input section 113 that inputs desired content distribution request information from the list information 2400.

In addition, the client terminal 1810 is provided with a status monitoring section 1811 that monitors the status of the client terminal 1810 and outputs corresponding status information. The status information is information for determining the band that can be used by the client terminal 1810. For example, status information may include information as to whether the client terminal 1810 is moving or stationary.

The client terminal 1810 is further provided with a request transmitting section 115 that transmits content distribution request information or status information input from the operation input section 113 or the status monitoring section 1811 to the server 2200.

The server 2200 is provided with a request receiving section 104 that receives content distribution request information sent from the client terminal 1810.

The server 2200 is also provided with a request analysis section 2205 that analyzes information such as content name 201, broadband media 1901 locator information 1902, charge information 1903, metadata 2301 locator information 2302, charge information 2303, and so forth, corresponding to received content distribution request information, by referring to content management information d2211 when content distribution request information is received.

By means of received status information, the request analysis section 2205 determines whether the current content media to be selected is for a broadband media distribution request or a narrowband media distribution request. If the request analysis section 2205 determines that the band that the client terminal 1810 can currently use is broadband, it refers to the content management information d2211, analyzes broadband media 1901 locator information 1902 and the relevant charge information 1903, and transmits the analysis results to a media switching/converting section 2202 and charging section 2206.

If, on the other hand, the request analysis section 2205 determines that the band that the client terminal 1810 can currently use is narrowband, it refers to the content management information d2211, analyzes information such as metadata 2301 locator information 2302 and charge information 2303, and transmits the analysis results to the media switching/converting section 2202 and charging section 2206.

The server 2200 is also provided with a charging section 2206 that charges a client based on charge information analyzed by the request analysis section 2205. The charging section 2206 performs processing to debit a client's account by the charged amount.

In addition, the server 2200 is provided with a media switching/converting section 2202 that, using the results of analysis of content distribution request information or status information by the request analysis section 2205, selects broadband media d1801 of content that a client wishes to have distributed and extracts the relevant media from the storage section 2201, or extracts metadata d2202 of content that a client wishes to have distributed from the storage section 2201 and generates narrowband media from broadband media d1801.

Furthermore, the server 2200 is provided with a media transmitting section 103 that transmits broadband media d1801 selected by the media switching/converting section 2202 or generated narrowband media to the client terminal 1810.

The client terminal 1810 is provided with a media receiving section 111 that receives sent broadband media d1801 or narrowband media, and a media playback section 112 that plays back received broadband media d1801 or narrowband media.

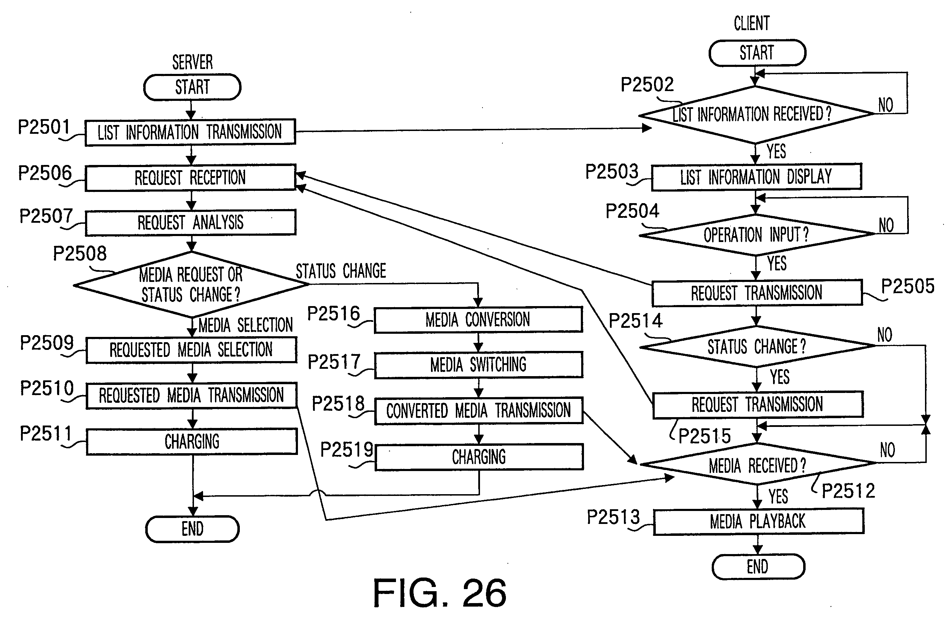

The operation of a media distribution system according to Embodiment 7 will be described below using FIG.26. FIG.26 is an operational flowchart of a media distribution system according to Embodiment 7.

First, the list information transmitting section 2207 of the server 2200 generates list information 2400 from content management information d2211, and transmits this to the client terminal 1810 (P2501).

Then, when the list information receiving section 116 of the client terminal 1810 receives this list information 2400 (P2502), the list information display section 117 displays the list information 2400 (P2503). Next, the client refers to this list information 2400 displayed on the list information display section 117, selects the content ID 200 of the desired content name 201, and inputs the desired content ID 200 from the operation input section 113. Then, when the client inputs content distribution request information requesting content (P2504), the status monitoring section 1811 monitors the current status of the client terminal 1810, and adds current status information to the content distribution request information. This content distribution request information and status information is then transmitted to the server 2200 (P2505).

When the request receiving section 104 of the server 2200 receives the content distribution request information (P2506), the request analysis section 2205 analyzes the content distribution request information and status information (P2507), and determines whether this information is requesting media or notifying a change in the status of the client terminal 1810 (P2508).

In this case, content distribution request information has been sent, indicating that a request for media is being made. Therefore, the request analysis section 2205 next determines from the status information whether the band that can be used by the client terminal 1810 is one for broadband media or narrowband media.

The media switching/converting section 2202 then selects from the storage section 2201, or generates, media corresponding to the content analyzed by the request analysis section 2205 (P2509), and this selected or generated media item is transmitted from the media transmitting section 103 to the client terminal 1810 (P2510).

The charge for the broadband media or narrowband media corresponding to the content name 201 requested by the client is then analyzed. The charging section 2206 then charges the client the charge for this content (P2511).

When the media receiving section 111 of the client terminal 1810 receives the transmitted media (P2512), the media playback section 112 plays back the media (P2513).

The status monitoring section 1811 of the client terminal 1810 constantly monitors changes in the status of the client terminal 1810. When the status monitoring section 1811 detects a change in status (P2514), the status monitoring section 1811 outputs status information corresponding to the changed status to the request transmitting section 115. On receiving this information, the request transmitting section 115 transmits this information to the server 2200 (P2515).

The server 2200 then receives this information (P2506), analyzes it (P2507), and determines whether this information is media distribution request information or status change information (P2508). In this case, the information sent from the client terminal 1810 is only status information, and therefore the request analysis section 2205 transmits information for switching the media to be selected to the media switching/converting section 2202. The media switching/converting section 2202 then converts the media using metadata as necessary (P2516), and switches the media type (P2517). The media transmitting section 103 then transmits the switched media to the client terminal 1810 (P2518).

Then the request analysis section 2205 transmits charge information corresponding to the switched media to the charging section 2206. The charging section 2206 then performs charging corresponding to the switched media (P2519).

The client terminal 1810 then receives (P2512) and plays back (P2513) the switched media.

As described above, according to Embodiment 7 broadband media and narrowband media can be distributed, but instead of narrowband media being generated and stored beforehand, metadata d2202 for generating narrowband media is stored and narrowband media are generated according to a change in the status of a client terminal, so that the storage section 2201 requires only a small storage capacity.

Also, according to Embodiment 7, media for a greater number of band patterns can be distributed for one content item by providing metadata for a plurality of bands. This makes it possible to respond precisely to changes in client terminal status. In this case, too, a small storage capacity is sufficient.

As regards media types to be stored, programs can be envisaged that generate, from broadband media, text only, audio only, video (color/black-and-white/gray-scale) only, skipped-frame video (color/black-and-white), and so forth.

### (Embodiment 8)

A media distribution system according to Embodiment 8 is provided with color media that are views comprising color data, and black-and-white media that are black-and-white version views, for each content item. A client can then select media according to the client's own needs.

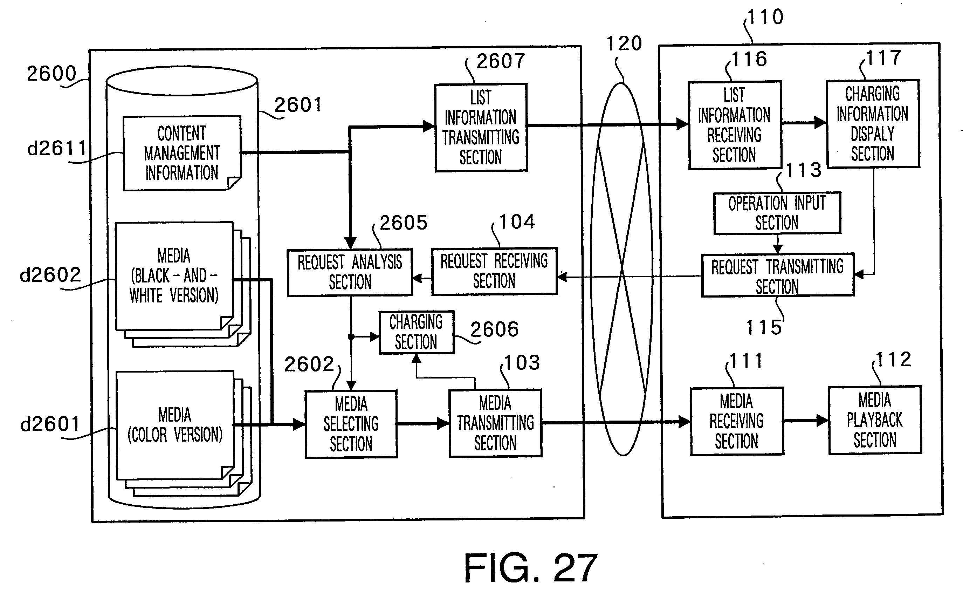

A media distribution system that includes a media distribution apparatus according to Embodiment 8 will be described below. First, the configuration of a media distribution system according to Embodiment 8 will be described using FIG.27. FIG.27 is a block diagram of a media distribution system according to Embodiment 8. Parts identical to those already described are assigned the same codes as before.

In this media distribution system, a server 2600 of a media distributor (provider) performing a content distribution service and a client terminal 110 such as a portable terminal, storage-type broadcast terminal, home gateway, or the like, are connected via a network 120 such as a the internet, wireless communication network, or the like. That is to say, the performance of media transmission from a server 2600, which is a media distribution apparatus, to a client terminal 110 via a network 120 is assumed.

The server 2600 is provided with a storage section 2601 that stores, as content media, media d2601 (hereinafter referred to as "color media") comprising views made up of color data, media d2602 (hereinafter referred to as "black-and-white media") comprising views made up of black-and-white (binary) data only, and content management information d2611, which is information that manages color media d2601 and black-and-white media d260.

The color media d2601 and black-and-white media d2602 are AV streams comprising video, speech, audio, text, etc., for which a data format such as MPEG-1, MPEG-2, MPEG-4, DV, JPEG, or GIF is used.

The content management information d2611 is metadata that manages content groups together with partial information extracted from color media d2601 and black-and-white media d2602, charging information, and so forth, for each content item.

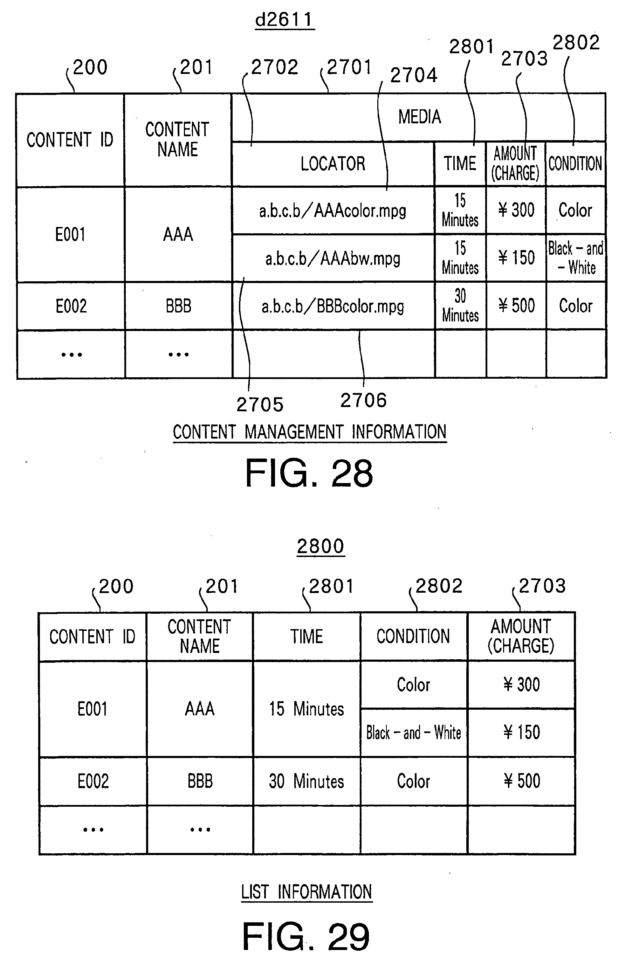

As shown in FIG.28, in the content management information d2611 are stored a plurality of groups comprising a content ID 200, a content name 201, a locator 2702 which is locator information of media 2701 corresponding to a content name 201, media 2701 time information 2801, charge (monetary amount) information 2703 for distribution of media 2701 of content name 201, and a media 2701 condition 2802. In this example, content with the name "AAA" has color media 2704 and black-and-white media 2705. FIG.28 is a drawing showing the configuration of content management information according to Embodiment 8.

The server 2600 is provided with a list information transmitting section 2607 that generates the content list information 2800 shown in FIG.29 from content management information d2611 and transmits this to the client terminal 2610 by means of e-mail or HTTP. FIG.29 is a drawing showing the configuration of list information according to Embodiment 8.

As can be seen from FIG.29, the list information 2800 is information required when a client selects content, being composed of groups comprising the content ID 200, content name 201, content time information 2801, charge information 2703 for content distribution, and media condition (type) 2802 corresponding to content.

The client terminal 110 is provided with a list information receiving section 116 that receives list information 2800 sent from the server 2600, and a list information display section 117 that displays received list information 2800. The client terminal 110 is also provided with an operation input section 113 that inputs content distribution request information requesting desired media distribution of desired content from the list information 2800. A client can select color media distribution or black-and-white media distribution by means of input via the operation input section 113.

The client terminal 110 is further provided with a request transmitting section 115 that transmits content distribution request information input from the operation input section 113 to the server 2600.

The server 2600 is provided with a request receiving section 104 that receives content distribution request information sent from the client terminal 110.

The server 2600 is also provided with a request analysis section 2605 that analyzes information such as content name 201, media 2701 locator information 2702, and charge information 2703, corresponding to received content distribution request information, by referring to content management information d2611.

Based on the content distribution request information, the request analysis section 2605 determines whether the client is requesting color media distribution or black-and-white media distribution.

The request analysis section 2605 refers to the content management information d2611, analyzes locator information 2702 of either color media or black-and-white media as selected by the client, and the relevant charge information 2703, and transmits the analysis results to a media selecting section 2602 and charging section 2606.

The server 2600 is also provided with a charging section 2606 that charges a client based on charge information analyzed by the request analysis section 2605. The charging section 2606 performs processing to debit a client's account by the charged amount.

In addition, the server 2600 is provided with a media selecting section 2602 that selects color media or black-and-white media for the content name requested by the client, based on the results of analysis of content distribution request information by the request analysis section 2605, and extracts the relevant media from the storage section 2601.

Furthermore, the server 2600 is provided with a media transmitting section 103 that transmits color media or black-and-white media selected by the media selecting section 2602 to the client terminal 110.

The client terminal 110 is provided with a media receiving section 111 that receives sent color media or black-and-white media, and a media playback section 112 that plays back received color media or black-and-white media.

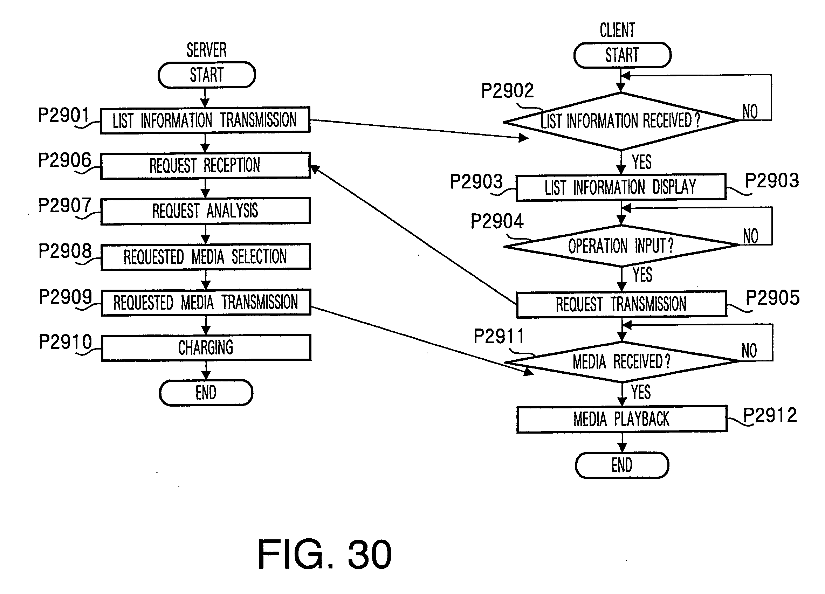

The operation of a media distribution system according to Embodiment 8 will be described below using FIG.30. FIG.30 is an operational flowchart of a media distribution system according to Embodiment 8.

First, the list information transmitting section 2607 of the server 2600 generates list information 2800 from content management information d2611, and transmits this to the client terminal 110 (P2901).

Then, when the list information receiving section 116 of the client terminal 110 receives this list information 2800 (P2902), the list information display section 117 displays the list information 2800 (P2903). Next, the client refers to this list information 2800 displayed on the list information display section 117, and first selects the desired content name 201 and desired media type, and inputs content distribution request information requesting media of the desired content name 201 with the desired media type from the operation input section 113. Then, when the client inputs this content distribution request information (P2904), the request transmitting section 115 transmits this content distribution request information to the server 2600 (P2905).

When the request receiving section 104 of the server 2600 receives the content distribution request information (P2906), the request analysis section 2605 analyzes the content distribution request information and determines the content name and media type being requested (P2907).

The media selecting section 2602 then refers to the content management information d2611 and extracts the locator 2702 of media of the content name 201 requested by the client with the media type requested by the client. Then the media selecting section 2602 selects media located at the extracted locator 2702 from the storage section 2601 (P2908). The media transmitting section 103 then transmits the selected media to the client terminal 110 (P2909).

If the content distribution request information is requesting black-and-white media distribution, the charging section 2606 refers to the content management information d2611 and performs charging corresponding to black-and-white media. If the content distribution request information is requesting color media distribution, the charging section 2606 refers to the content management information d2611 and performs charging corresponding to color media (P2910).

In the client terminal 110, the media receiving section 111 receives the sent media (P2911), and the media playback section 112 plays back the media (P2912).

As described above, according to Embodiment 8 color media and black-and-white media can be distributed to a client. This enables a client to select color media or black-and-white media according to the client's own needs. That is to say, a client can select black-and-white media if the capability of the client's terminal is low, or color media if the capability of the client's terminal is high. As a result, there is no need for a client to receive large-volume, high-priced color media unnecessarily despite having a terminal of low capability. Also, a client can, of course, select the type of media the client wishes, taking account of interest in media or the economic standpoint. Furthermore, combinations such as gray-scale, binary, multivalue, and n-color, are also possible, as well as combinations of three or more.

In Embodiment 8 a mode has been described whereby a client selects either color media distribution or black-and-white media distribution, but a mode is also possible whereby a client inputs the data communication capability of the client terminal. In this case, the request analysis section 2605 will analyze data communication capability information sent from the client terminal 110, and determine automatically whether to distribute color media or black-and-white media.

### (Embodiment 9)

Embodiment 9 is an improved version of Embodiment 8. That is to say, whereas in Embodiment 8 color media and black-and-white media are generated and stored beforehand, in Embodiment 9 only color media are stored, and black-and-white media or other types of media are generated dynamically. To be more specific, in Embodiment 9 metadata for generating black-and-white media or other types of media from color media is stored, and is used as necessary.

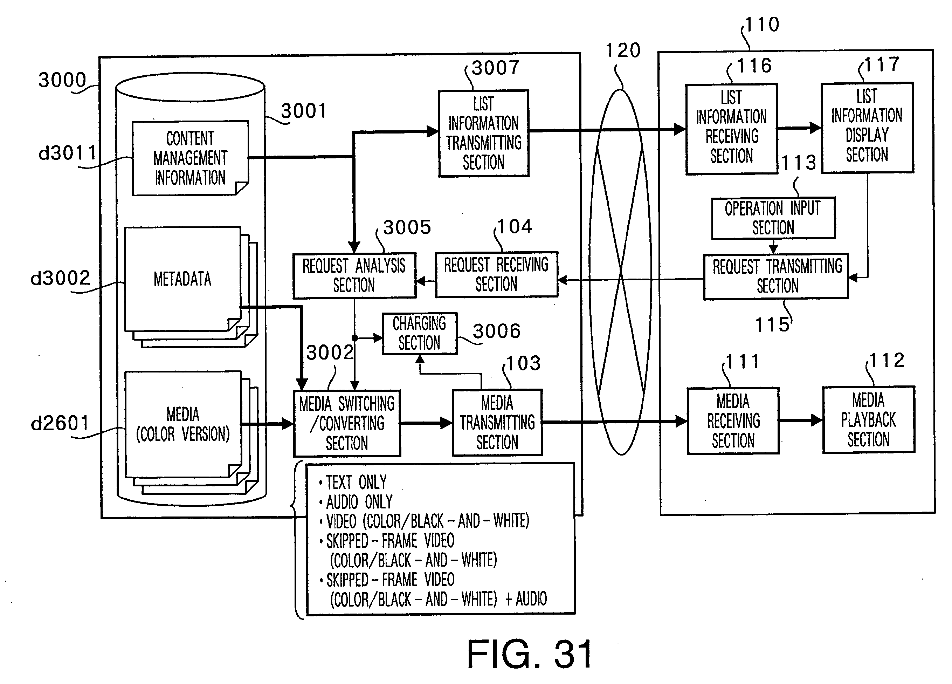

A media distribution system that includes a media distribution apparatus according to Embodiment 9 will be described below. First, the configuration of a media distribution system according to Embodiment 9 will be described using FIG.31. FIG.31 is a block diagram of a media distribution system according to Embodiment 9. Parts identical to those already described are assigned the same codes as before.

A server 3000 is provided with a storage section 3001 that stores, as content media, color media d2601, metadata d3002 that is a program for converting color media d2601 to black-and-white media or other types of media, and content management information d3011 that manages color media d2601 and metadata d3002 by maintaining correspondence between the two.

MPEG-7 metadata is used for the metadata d3002. The metadata d3002 comprises content descriptions that include a processing method for individual content. In this example, a program that generates black-and-white media or other types of media from color media is stored as a processing method for individual content.

Metadata is used for content management information d3011. The content management information d3011 is metadata that manages content groups together with partial information extracted from color media d2601 and metadata d3002, charging information, and so forth, for each content item.

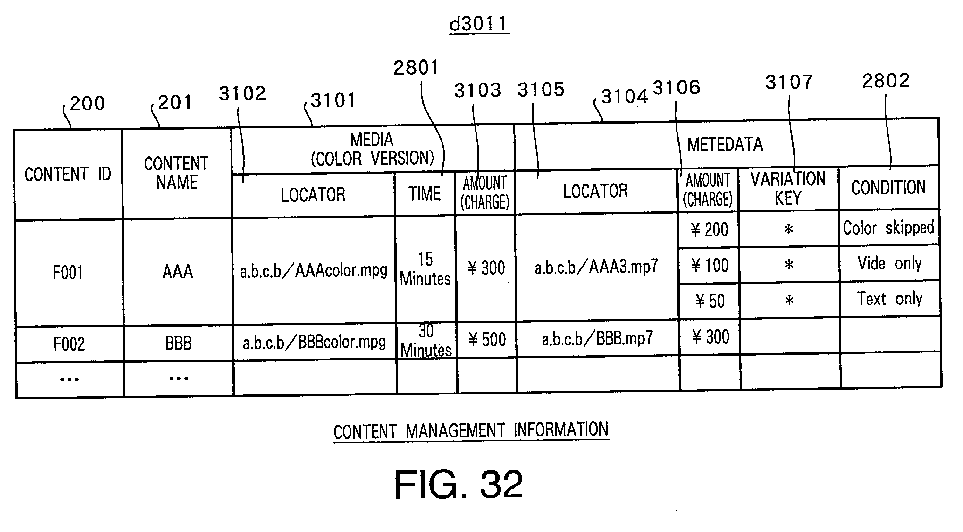

As shown in FIG.32, in the content management information d3011 are stored a plurality of groups comprising a content ID 200, a content name 201, a locator 3102 which is locator information of color media 3101 corresponding to a content ID 200, color media 3101 time information 2801, charge (monetary amount) information 3103 for distribution of color media 3101 of content ID 200, locator information 3105 of metadata 3104 corresponding to a content ID 200, charge (monetary amount) information 3106 for distribution of other media generated using metadata 3104, a variation key 3107 indicating whether or not there is a variation for metadata 3104, and a condition 2802 of media generated by means of metadata 3104. A plurality of variations are provided for metadata 3104 so that media of a plurality of types can be generated for one content item. In this example, three variations are provided for content with the name "AAA". FIG.32 is a drawing showing the configuration of content management information according to Embodiment 9.

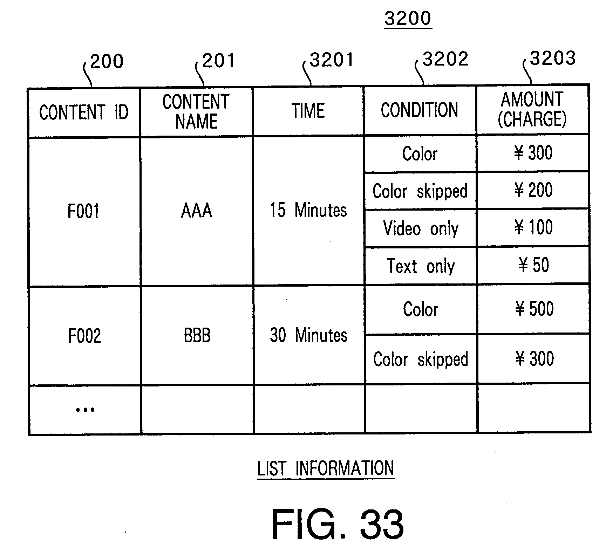

The server 3000 is provided with a list information transmitting section 3007 that generates the content list information 3200 shown in FIG.33 from content management information d3011 and transmits this to the client terminal 110. FIG.33 is a drawing showing the configuration of list information according to Embodiment 9.

As can be seen from FIG.33, the list information 3200 is information required when a client selects content, being composed of groups comprising the content ID 200, content name 201, content time information 3201, charge information 3103 for content distribution, and the condition (type) 3202 of media corresponding to content.

The client terminal 110 is provided with a list information receiving section 116 that receives list information 3200 sent from the server 3000, and a list information display section 117 that displays received list information 3200. The client terminal 110 is also provided with an operation input section 113 that inputs content distribution request information requesting desired media distribution of desired content from the list information 3200. A client can select color media distribution, black-and-white media distribution, or other media distribution, by means of input via the operation input section 113.

The client terminal 110 is further provided with a request transmitting section 115 that transmits content distribution request information input from the operation input section 113 to the server 3000.

The server 3000 is provided with a request receiving section 104 that receives content distribution request information sent from the client terminal 110.

The server 3000 is also provided with a request analysis section 3005 that analyzes information such as content name 201, media 3101 locator information 3102, and charge information 3103, corresponding to received content distribution request information, by referring to content management information d3011. Based on the content distribution request information, the request analysis section 3005 determines whether the client is requesting distribution of color media, black-and-white media, or other media.

If the content distribution request information is a color media request, the request analysis section 3005 refers to the content management information d3011, analyzes color media d2601 locator information 3102 and the relevant charge information 3103, and transmits the analysis results to a media switching/converting section 3002 and charging section 3006.

If, on the other hand, the content distribution request information is a request for media other than color media, the request analysis section 3005 refers to the content management information d3011, analyzes information such as metadata 3104 locator information 3105 and the relevant charge information 3106, and transmits the analysis results to a media switching/converting section 3002 and charging section 3006.

The server 3000 is also provided with a charging section 3006 that charges a client based on charge information analyzed by the request analysis section 3005. The charging section 3006 performs processing to debit a client's account by the charged amount.

In addition, the server 3000 is provided with a media switching/converting section 3002 that, using the results of analysis of content distribution request information or status information by the request analysis section 3005, extracts color media d2601 of content that a client wishes to have distributed from the storage section 3001, or extracts metadata d3002 of content that a client wishes to have distributed from the storage section 3001 and generates black-and-white media or another type of media from color media d2601.

Furthermore, the server 3000 is provided with a media transmitting section 103 that transmits color media d2601 selected by the media switching/converting section 3002 or generated black-and-white media or other type of media to the client terminal 110.

The client terminal 110 is provided with a media receiving section 111 that receives sent color media d2601 or generated black-and-white media or other type of media, and a media playback section 112 that plays back received color media d2601 or generated black-and-white media or other type of media.

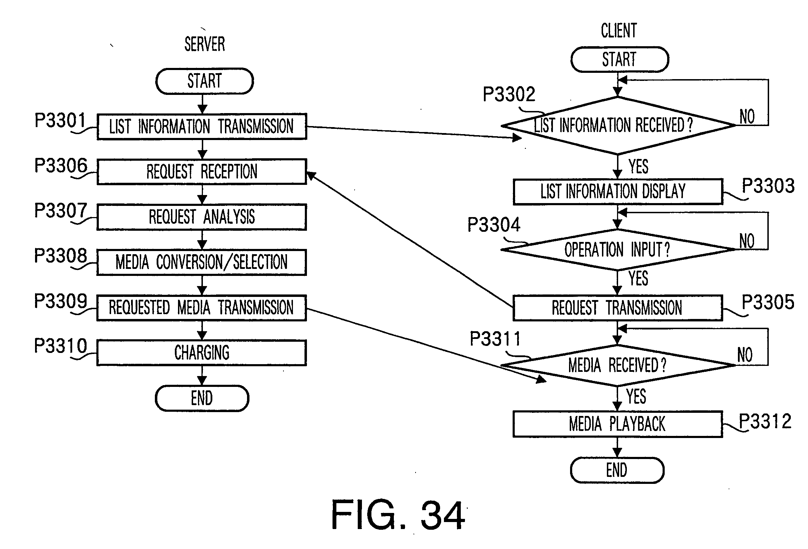

The operation of a media distribution system according to Embodiment 9 will be described below using FIG.34. FIG.34 is an operational flowchart of a media distribution system according to Embodiment 9.

First, the list information transmitting section 3007 of the server 3000 generates list information 3200 from content management information d3011, and transmits this to the client terminal 110 (P3301).

Then, when the list information receiving section 116 of the client terminal 110 receives this list information 3200 (P3302), the list information display section 117 displays the list information 3200 (P3303). Next, the client refers to this list information 3200 displayed on the list information display section 117, and first selects the desired content name 201 and desired media type, and inputs content distribution request information requesting media of the desired content name 201 with the desired media type from the operation input section 113. Then, when the client inputs this content distribution request information (P3304), the request transmitting section 115 transmits this content distribution request information to the server 3000 (P3305).

When the request receiving section 104 of the server 3000 receives the content distribution request information (P3306), the request analysis section 3005 analyzes the content distribution request information and determines the content name and media type being requested (P3307).

The media switching/converting section 3002 then selects the media type based on the client's request, and performs conversion as necessary (P3308).

To be specific, if the media type requested by the client is color media, the media switching/converting section 3002 refers to the content management information d3011 and extracts the locator 3102 of color media 3101 of the content name 201 requested by the client. Then the media switching/converting section 3002 selects media located at the extracted locator 3102 from the storage section 3001.

If, on the other hand, the media type requested by the client is other than color media, the media switching/converting section 3002 refers to the content management information d3011 and extracts the locator 3102 of color media 3101 of the content name 201 requested by the client, and metadata that performs conversion to the media type corresponding to the client's request. The media switching/converting section 3002 then converts the color media using the extracted metadata.

The media transmitting section 103 then transmits the generated media to the client terminal 110 (P3309).

The charging section 3006 refers to the content management information d3011 and performs charging corresponding to the media type (P3310).

In the client terminal 110, the media receiving section 111 receives the sent media (P3311), and the media playback section 112 plays back the media (P3312).

As described above, according to Embodiment 9 the same effect is of course obtained as with Embodiment 8, but instead of black-and-white media or other types of media being generated and stored beforehand, metadata d3002 for generating black-and-white media or other types of media from color media is stored beforehand, and black-and-white media or other types of media are generated according to a change in the status of a client terminal, so that the storage section 3001 requires only a small storage capacity.

Also, according to Embodiment 9, media are provided with a plurality of variations, enabling a greater number of media patterns to be distributed for one content item. This makes it possible to respond precisely to clients' media requests. In this case, too, a small storage capacity is sufficient.

As regards metadata variation types, programs can be envisaged that generate, from color media, text only, audio only, video (color/black-and-white) only, skipped-frame video (color/black-and-white), and so forth.

A mode is also possible whereby a plurality of variations are not provided for a single metadata item, but a plurality of metadata items that have a single variation are stored.

### (Embodiment 10)

A media distribution system according to Embodiment 10 is provided with a media summary created by a critic/commentator and a media summary created by a popular entertainer for each content item. A client can then select the preferred media summary according to the client's own needs.

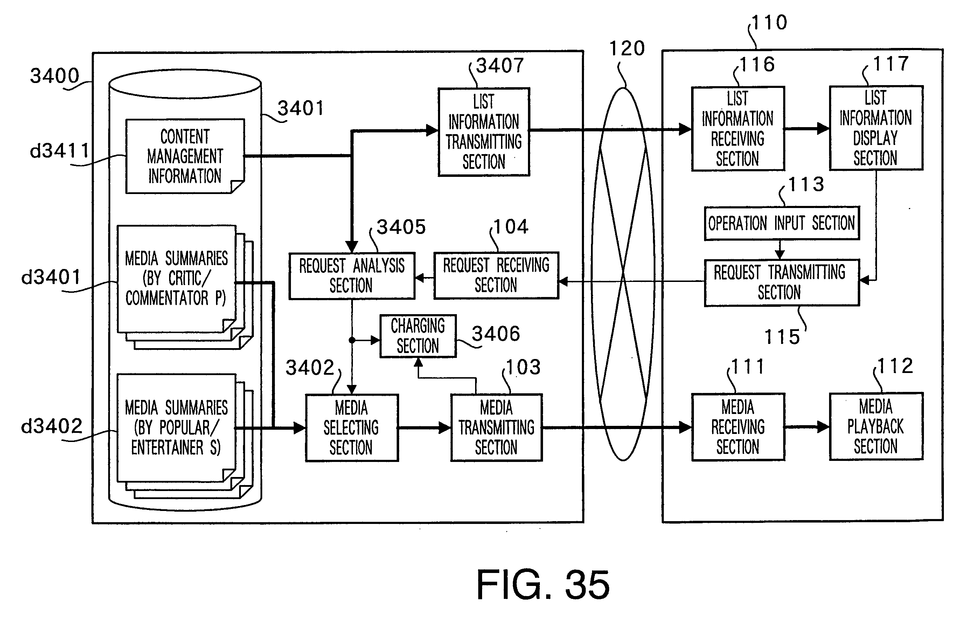

A media distribution system that includes a media distribution apparatus according to Embodiment 10 will be described below. First, the configuration of a media distribution system according to Embodiment 10 will be described using FIG.35. FIG.35 is a block diagram of a media distribution system according to Embodiment 10. Parts identical to those already described are assigned the same codes as before.

In this media distribution system, a server 3400 of a media distributor (provider) performing a content distribution service and a client terminal 110 such as a portable terminal, storage-type broadcast terminal, home gateway, or the like, are connected via a network 120 such as a the internet, wireless communication network, or the like. That is to say, the performance of media transmission from a server 3400, which is a media distribution apparatus, to a client terminal 110 via a network 120 is assumed.

The server 3400 is provided with a storage section 3401 that stores, as content media, media summaries d3401 created by a critic/commentator (hereinafter referred to as "critic/commentator summaries"), media summaries d3402 created by a popular entertainer (hereinafter referred to as "popular entertainer summaries"), and content management information d3411, which is information that manages critic/commentator summaries d3401 and popular entertainer summaries d3402.

The critic/commentator summaries d3401 and popular entertainer summaries d3402 are AV streams comprising video, speech, audio, text, etc., for which a data format such as MPEG-1, MPEG-2, MPEG-4, or DV is used.

Metadata is used for content management information d3411. The content management information d3411 is metadata that manages content groups together with partial information extracted from critic/commentator summaries d3401 and popular entertainer summaries d3402, charging information, and so forth, for each content item.

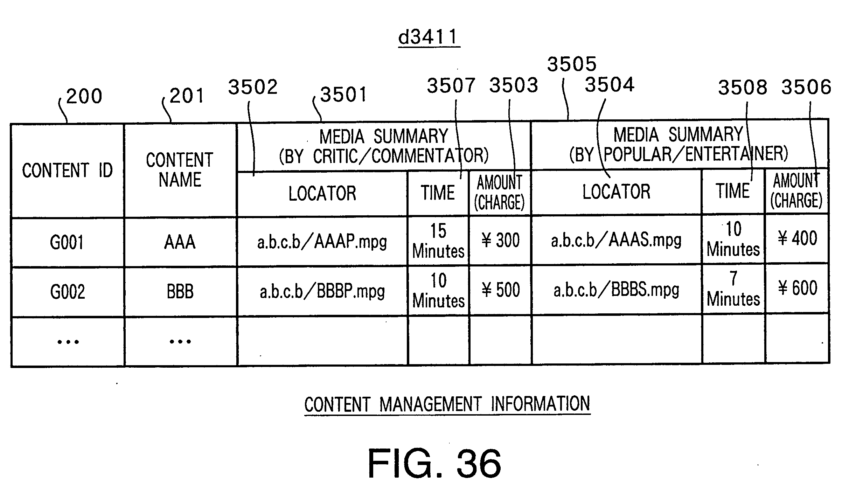

As shown in FIG.36, in the content management information d3411 are stored a plurality of groups comprising a content ID 200, a content name 201, a locator 3502 which is locator information of a critic/commentator summary 3501 corresponding to a content ID 200, relevant time information 3507, relevant charge (monetary amount) information 3503, a locator 3505 which is locator information of a popular entertainer summary 3504, relevant time information 3508, and relevant charge (monetary amount) information 3506. FIG.36 is a drawing showing the configuration of content management information according to Embodiment 10.

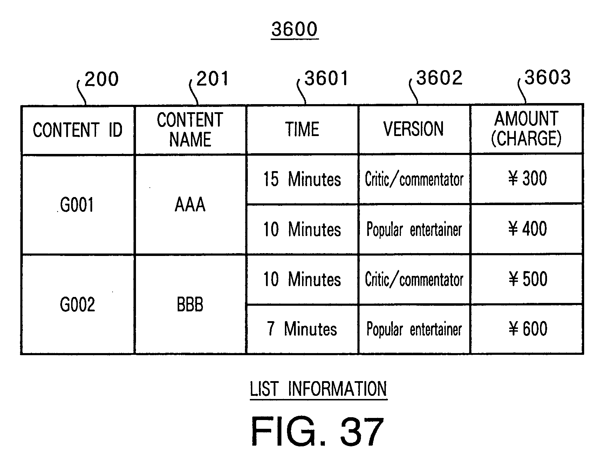

The server 3400 is provided with a list information transmitting section 3407 that generates the content list information 3600 shown in FIG.37 from content management information d3411 and transmits this to the client terminal 110 by means of e-mail or HTTP. FIG.37 is a drawing showing the configuration of list information according to Embodiment 10.

As can be seen from FIG.37, the list information 3600 is information required when a client selects content, being composed of groups comprising the content ID 200, content name 201, content time information 3601, media summary version (type) 3602, and charge (monetary amount) information 3603 for content distribution.

The client terminal 110 is provided with a list information receiving section 116 that receives list information 3600 sent from the server 3400, and a list information display section 117 that displays received list information 3600. The client terminal 110 is also provided with an operation input section 113 that inputs content distribution request information requesting desired media summary distribution of desired content from the list information 3600.

The client terminal 110 is further provided with a request transmitting section 115 that transmits content distribution request information input from the operation input section 113 to the server 3400.

The server 3400 is provided with a request receiving section 104 that receives content distribution request information sent from the client terminal 110.

The server 3400 is also provided with a request analysis section 3405 that analyzes information such as content name 201, media summary 3501/3504 locator information 3502/3505, and charge information 3503/3506, corresponding to received content distribution request information, by referring to content management information d3411. Based on the content distribution request information, the request analysis section 3405 determines whether the client is requesting critic/commentator summary distribution or popular entertainer summary distribution.

The request analysis section 3405 refers to the content management information d3411, analyzes locator information 3502/3504 of either a critic/commentator summary or popular entertainer summary as selected by the client, and the relevant charge information 3503/3506, and transmits the analysis results to a media selecting section 3402 and charging section 3406.

The server 3400 is also provided with a charging section 3406 that charges a client based on charge information analyzed by the request analysis section 3405 after completion of media transmission. The charging section 3406 performs processing to debit a client's account by the charged amount.

In addition, the server 3400 is provided with a media selecting section 3402 that selects a critic/commentator summary or popular entertainer summary for the content name requested by the client, based on the results of analysis of content distribution request information by the request analysis section 3405, and extracts the relevant media summary from the storage section 3401.

Furthermore, the server 3400 is provided with a media transmitting section 103 that transmits the critic/commentator summary or popular entertainer summary selected by the media selecting section 3402 to the client terminal 110.

The client terminal 110 is provided with a media receiving section 111 that receives a sent critic/commentator summary or popular entertainer summary, and a media playback section 112 that plays back a received critic/commentator summary or popular entertainer summary.

As a critic/commentator summary and popular entertainer summary are provided for each content item in this way, a client can select a summary according to the client's own needs.

In Embodiment 10 a mode has been described whereby critic/commentator summaries d3401, popular entertainer summaries d3402, and content management information d3411 are stored in a storage section 3401, but a mode is also possible whereby views d101 are also stored in the storage section 3401. In this case, a client can look at a view d101 after viewing a critic/commentator summary d3401 and popular entertainer summary d3402.

### (Embodiment 11)

Embodiment 11 is an improved version of Embodiment 10. That is to say, whereas in Embodiment 10 critic/commentator summaries and popular entertainer summaries are generated and stored beforehand, in Embodiment 10 only original-version media are stored, and a plurality of types of media summaries are generated dynamically. To be more specific, in Embodiment 11 metadata for generating a plurality of types of media summaries from original-version media is stored, and is used as necessary.

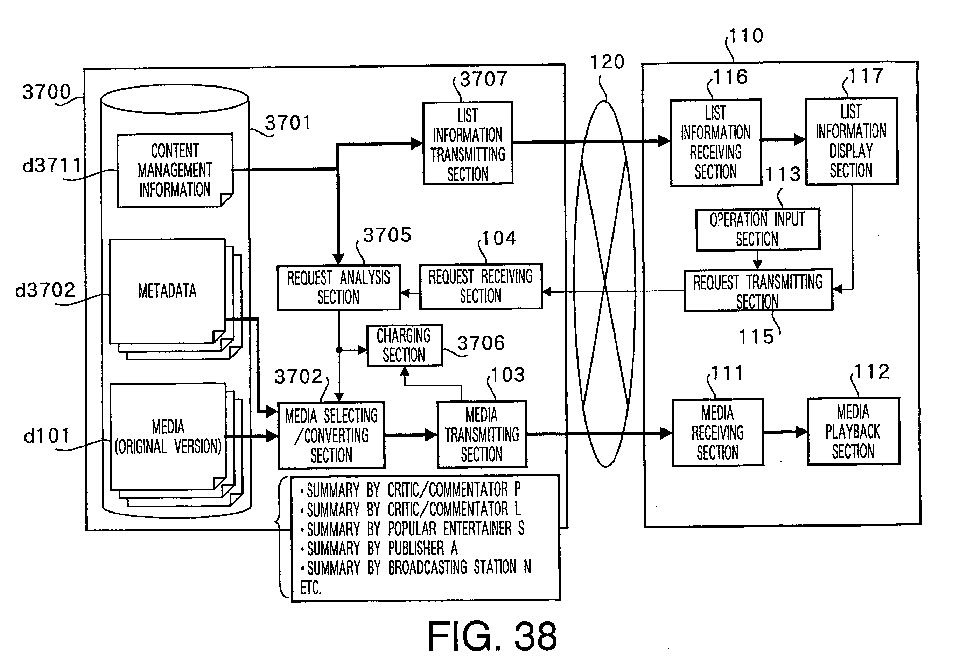

A media distribution system that includes a media distribution apparatus according to Embodiment 11 will be described below. First, the configuration of a media distribution system according to Embodiment 11 will be described using FIG.38. FIG.38 is a block diagram of a media distribution system according to Embodiment 11. Parts identical to those already described are assigned the same codes as before.

A server 3700 is provided with a storage section 3701 that stores, as content media, original-version media (hereinafter referred to as "media") d101, metadata d3702 comprising programs for converting views d101 to a plurality of types of media summaries, and content management information d3711 that manages views d101 and metadata d3702 by maintaining correspondence between the two.

MPEG-7 metadata is used for the metadata d3702. The metadata d3702 comprises content descriptions that include a processing method for individual content. In this example, a program that determines the location in the media of an image to be extracted is stored as a processing method for individual content. Also, in this example, a summary can be generated at high speed by inputting a viewpoint (keyword) for extraction for respective metadata.

The content management information d3711 is metadata that manages content groups together with partial information extracted from views d101 and metadata d3702, charging information, and so forth, for each content item.

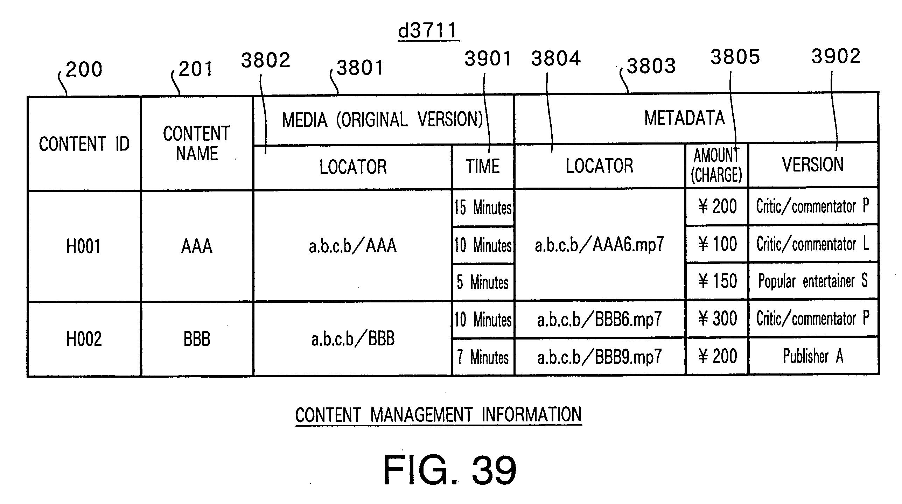

As shown in FIG.39, in the content management information d3711 are stored a plurality of groups comprising a content ID 200, a content name 201, locator information 3802 of media 3801 corresponding to a content ID 200, media 3801 time information 3901, charge (monetary amount) information 3803 for distribution of color media 3801 of content ID 200, metadata 3803 corresponding to a content name 201, locator information 3804 of metadata 3803, charge (monetary amount) information 3805 for distribution of a summary generated using metadata 3803, and a version 3902 of a summary generated using metadata 3803. A plurality of types of media can be generated for one content item. The metadata 3803 is a program that enables a plurality of versions of media to be generated for content with the name "AAA", for example. Also, a plurality of metadata 3803 items are provided for content with the name "BBB" so that a plurality of types of media can be generated for one content item. FIG. 39 is a drawing showing the configuration of content management information according to Embodiment 11.

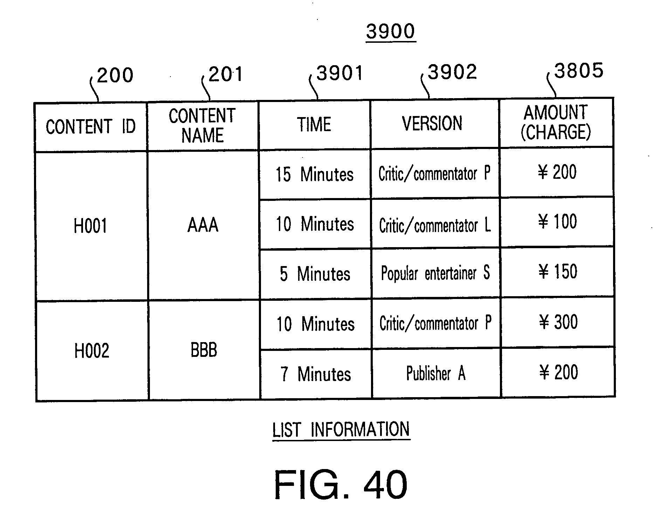

The server 3700 is provided with a list information transmitting section 3707 that generates the content list information 3900 shown in FIG.40 from content management information d3711 and transmits this to the client terminal 110. FIG.40 is a drawing showing the configuration of list information according to Embodiment 11.

As can be seen from FIG.40, the list information 3900 is information required when a client selects content, being composed of groups comprising the content ID 200, content name 201, content time information 3901, the version 3902 of the generated summary, and charge information 3805 for distribution of that summary.

The client terminal 110 is provided with a list information receiving section 116 that receives list information 3900 sent from the server 3700, and a list information display section 117 that displays received list information 3900. The client terminal 110 is also provided with an operation input section 113 that inputs content distribution request information requesting desired summary distribution of desired content from the list information 3900. A client can select various kinds of summaries by means of input via the operation input section 113.

The client terminal 110 is further provided with a request transmitting section 115 that transmits content distribution request information input from the operation input section 113 to the server 3700.

The server 3700 is provided with a request receiving section 104 that receives content distribution request information sent from the client terminal 110.

The server 3700 is also provided with a request analysis section 3705 that analyzes information such as content name 201, media 3801 locator information 3802, metadata 3803 locator information 3804, and charge information 3805, corresponding to received content distribution request information, by referring to content management information d3711. Based on the content distribution request information, the request analysis section 3705 determines the summary version requested by the client.

The request analysis section 3705 then analyzes charge information 3803 for the summary requested by the client, and transmits the analysis results to a charging section 3706.

The request analysis section 3705 then analyzes the locator 3804 of the metadata 3803 used to generate the summary requested by the client, and transmits the analysis results to a media switching/converting section 3702.

The server 3700 is also provided with a charging section 3706 that charges a client based on charge information analyzed by the request analysis section 3705. The charging section 3706 performs processing to debit a client's account by the charged amount.

In addition, the server 3700 is provided with a media switching/converting section 3702 that extracts predetermined metadata d3702 from the storage section 3701 using the metadata 3803 locator 3804 resulting from analysis of content distribution request information by the request analysis section 3705, and generates a predetermined summary by converting a view d101 using this metadata d3702.

Furthermore, the server 3700 is provided with a media transmitting section 103 that transmits the summary resulting from selection and conversion by the media switching/converting section 3702 to the client terminal 110.

The client terminal 110 is provided with a media receiving section 111 that receives a sent summary, and a media playback section 112 that plays back a received summary.

By means of this kind of configuration, the same effect is of course obtained as with Embodiment 10, but instead of various kinds of summaries being generated and stored beforehand, metadata d3702 for generating various kinds of summaries from media is stored beforehand, and various kinds of summaries are generated according to changes in the status of a client terminal, so that the storage section 3701 requires only a small storage capacity.

Also, according to Embodiment 11, a greater number of summary patterns can be distributed for one content item by storing a plurality of metadata items. This makes it possible to respond precisely to clients' requests. In this case, too, a small storage capacity is sufficient.

A client may also transfer a predetermined charge to the person who created the metadata used. In this way, metadata creators will be encouraged to create metadata, enabling better metadata to be stored.

### (Embodiment 12)

In a media distribution system according to Embodiment 12, information such as media, previews, and content management information held in a server of a media distributor is stored in the storage section of a client terminal, and media selection is performed on the client terminal side. Only charging is performed by the server.

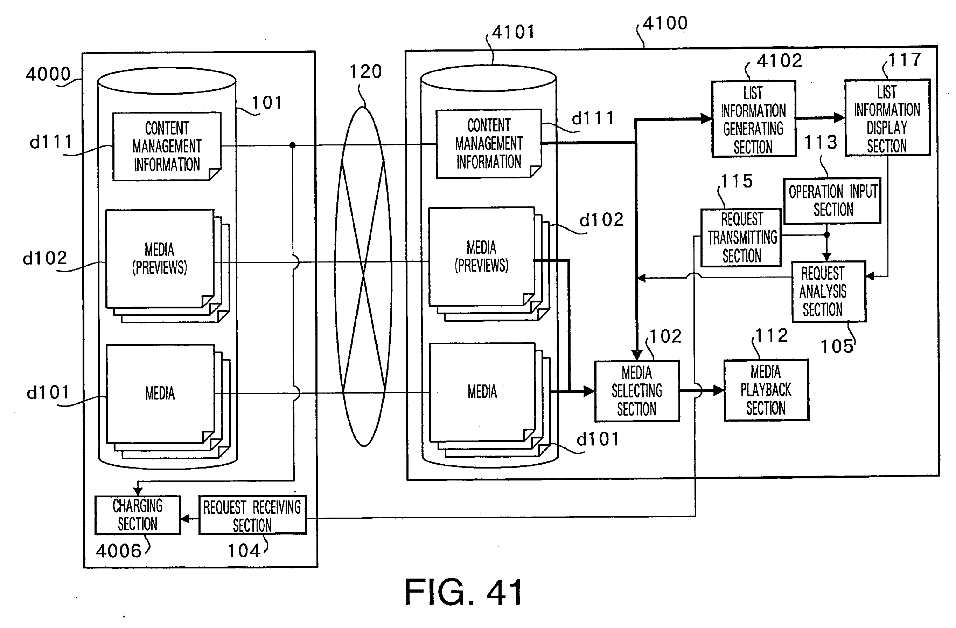

A media distribution system according to Embodiment 12 will be described below using FIG.41. FIG.41 is a block diagram of a media distribution system according to Embodiment 12. Parts identical to those already described are assigned the same codes as before and their detailed explanations are omitted.

In this media distribution system, a server 4000 of a media distributor (provider) performing a content distribution service and a client terminal 4100 such as a portable terminal, storage-type broadcast terminal, home gateway, or the like, are connected via a network 120 such as a the internet, wireless communication network, or the like. That is to say, the performance of media transmission from a server 4000, which is a media distribution apparatus, to a client terminal 4100 via a network 120 is assumed.

Above-mentioned views d101, previews d102, and content management information d111 are stored in the storage section 101 of the server 4000. This information is transmitted to the client terminal 4100 via the network 120. The client terminal 4100 then stores the sent views d101, previews d102, and content management information d111 in its storage section 4101.

Content management information d111 is transmitted to a list information generating section 4102 by means of a client operation. The list information generating section 4102 generates the list information 300 shown in FIG.3 from the content management information d111, and transmits this information to the list information display section 117. The list information display section 117 then displays this list information 300.

The client then views this displayed list information and selects and inputs the desired content preview or media from the operation input section 113. The input information is sent to the request analysis section 105. The request analysis section 105 then analyzes this information and sends the analysis results to the media selecting section 102. The media selecting section 102 selects a preview or media item based on these analysis results, and sends this preview or media item to the media playback section 112, where it is played back.

The information input to the operation input section 113 is also sent to the server 4000 via the request transmitting section 115. The server 4000 receives this information in its request receiving section 104, and sends it to the charging section 4006. The charging section 4006 analyzes this information, refers to the content management information d111, and charges for the media selected by the client.

As described above, according to Embodiment 12 media and preview selection, and playback, can be carried out on the client terminal side. As a result, media and preview playback can be performed without accessing the server, making possible high-speed playback.

Embodiment 12 has been described for the mode applied in Embodiment 1, but any of the modes used in Embodiments 2 through 11 may also be applied.

### (Embodiment 13)

In a media distribution system according to Embodiment 13, information such as media, previews, and content management information held in a server of a media distributor is stored in a private server of a client, and the private server is provided with media distributor server functions according to Embodiment 1. Only media distributor server charging is performed by the server.

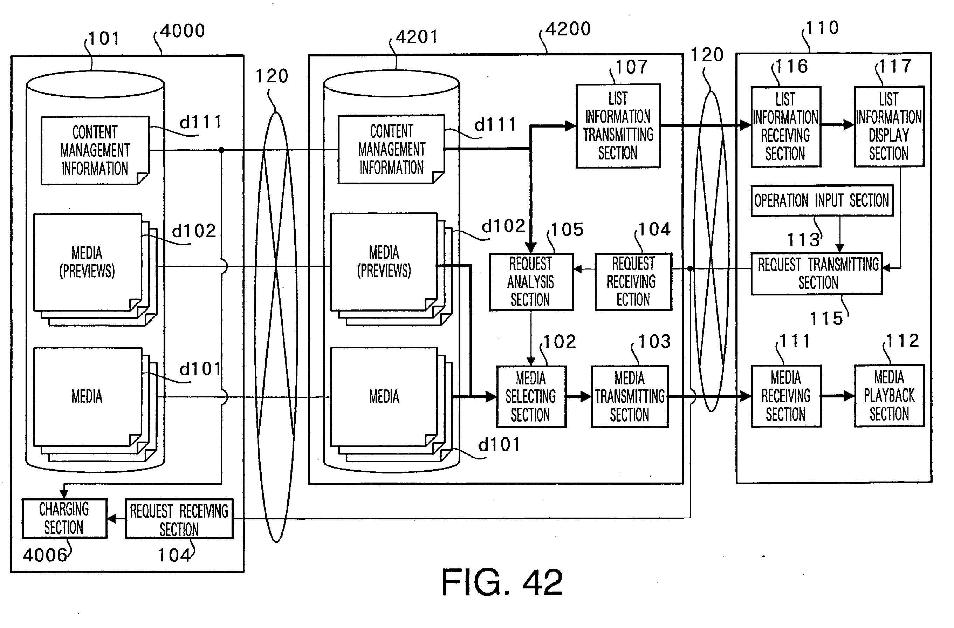

A media distribution system according to Embodiment 13 will be described below using FIG.42. FIG.42 is a block diagram of a media distribution system according to Embodiment 13. Parts identical to those already described are assigned the same codes as before and their detailed explanations are omitted.

In this media distribution system, a server 4000 of a media distributor (provider) performing a content distribution service and a client's private server are connected via a network 120. Also, the client's private server and client terminal 110 are connected via a network 120 such as a the internet, wireless communication network, or the like.

Above-mentioned views d101, previews d102, and content management information d111 are stored in the storage section 101 of the server 4000. This information is transmitted to the client server 4200 via the network 120. The client server 4200 then stores the sent views d101, previews d102, and content management information d111 in its storage section 4201.

Content management information d111 is transmitted to a list information generating section 107, and list information 300 is transmitted to the client terminal 110.

The client terminal 110 then performs the operations described in Embodiment 1 on this list information 300, and the client server 4200 performs the same kind of processing as the server 100 in Embodiment 1. By this means, the client can receive the same kind of service as in Embodiment 1.

As regards charging, content distribution request information transmitted from the client terminal 110 is sent directly to the server 4000. Then the server 4000 receives this information in its request receiving section 104, and sends it to the charging section 4006. The charging section 4006 analyzes this information, refers to the content management information d111, and charges for the media selected by the client.

As described above, according to Embodiment 13 the same kind of operations can be performed by a client server 4200 as by the media distributor server described in Embodiment 1.

Also, by connecting the client server 4200 and client terminal 110 via an in-house network such as a LAN, media and preview playback can be performed without accessing the server, making possible high-speed playback.

Embodiment 13 has been described for the mode applied in Embodiment 1, but any of the modes used in Embodiments 2 through 11 may also be applied.

### (Embodiment 14)

In a media distribution system according to Embodiment 14, the charge amount is varied according to the time from the point at which a client obtains content-related information until the point at which the client actually requests content distribution.

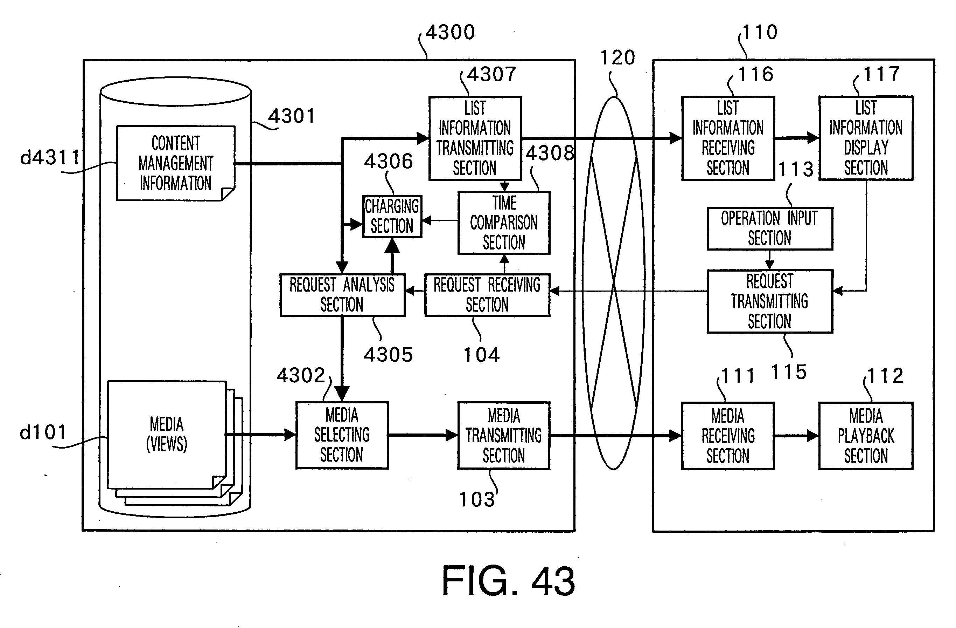

A media distribution system that includes a media distribution apparatus according to Embodiment 14 will be described below. First, the configuration of a media distribution system according to Embodiment 14 will be described using FIG.43. FIG.43 is a block diagram of a media distribution system according to Embodiment 14. Parts identical to those already described are assigned the same codes as before.

In this media distribution system, a server 4300 of a media distributor (provider) performing a content distribution service and a client terminal 110 such as a portable terminal, storage-type broadcast terminal, home gateway, or the like, are connected via a network 120 such as a the internet, wireless communication network, or the like. That is to say, the performance of media transmission from a server 4300, which is a media distribution apparatus, to a client terminal 110 via a network 120 is assumed.

The server 4300 is provided with a storage section 4301 that stores views d101, which are original media of content, and content management information d4311, which is information that manages content.

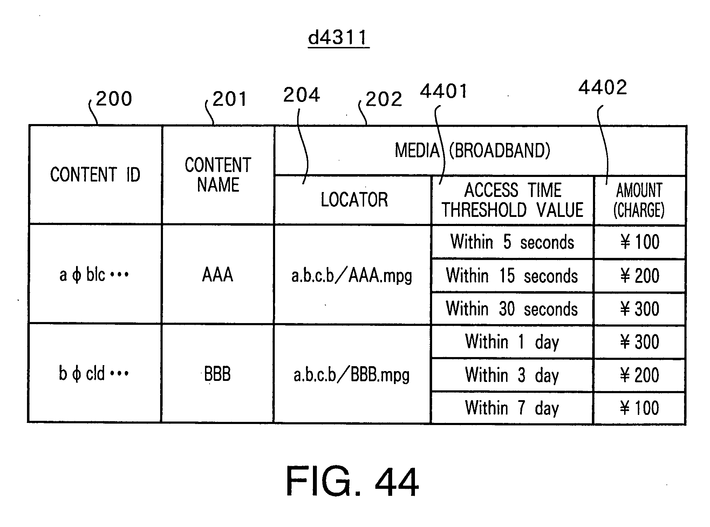

As shown in FIG.44, in the content management information d4311 are stored a plurality of groups comprising a content ID 200 which is identification information that identifies content, a content name 201, a locator 204 which is locator information of a view 202 corresponding to a content ID 200, an access time threshold value 4401 for the time from the point at which a client receives content-related information until the point at which the client actually requests content distribution, and charging information 4402 in accordance with the access time threshold value 4401.

As can be seen from the figure, for media with the content name "AAA", the shorter the access time the lower is the charge. That is to say, fast access enables the user to receive a discount. For media with the content name "BBB" , on the other hand, the longer the access time the lower is the charge. That is to say, slow access enables the user to receive a discount. Reducing the charge as access time increases is effective as a charging method for media of a highly real-time character, such as news, and media that have greater value the more recent they are, such as movies. The unit of the access time threshold value 4401 is determined according to characteristics whereby content value changes. For example, where content value changes in units of number of days, as with movies, it is desirable to set the unit of the access time threshold value 4401 as a number of days. And where content value changes in units of seconds, as with movies, it is desirable to set the unit of the access time threshold value 4401 as seconds or minutes.

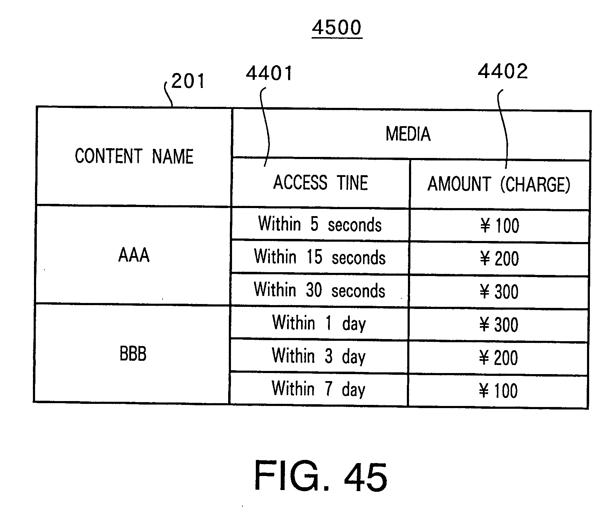

Metadata for explaining content of media d101 is used for content management information d4311. FIG.44 is a drawing showing the configuration of content management information according to Embodiment 14. The server 4300 is provided with a list information transmitting section 4307 that generates the content list information 4500 shown in FIG.45 from content management information d4311 and transmits this to the client terminal 110. FIG.45 is a drawing showing the configuration of list information according to Embodiment 14.

As can be seen from FIG.45, the list information 4500 is information required when a client selects content, being composed of groups comprising the content name 201, access time threshold value 4401, and charging information 4402 for the access time threshold value 4401.

The client terminal 110 is provided with a list information receiving section 116 that receives list information 4500 sent from the server 4300, and a list information display section 117 that displays received list information 4500. The client terminal 110 is also provided with an operation input section 113 that inputs content distribution request information that requests desired content distribution from the list information 4500.

Furthermore, the client terminal 110 is provided with a request transmitting section 115 that transmits content distribution request information input from the operation input section 113 to the server 4300.

The server 4300 is provided with a request receiving section 104 that receives content distribution request information sent from the client terminal 110.

The server 4300 is also provided with a request analysis section 4305 that analyzes information such as a content ID 200, media 202 locator information 204, and so forth, corresponding to received content distribution request information, by referring to content management information d4311. The request analysis section 4305 transmits its analysis results to a media selecting section 4302 and charging section 4306.

The media selecting section 4302 extracts a view d101 of content according to the sent analysis results, and transmits this to the media transmitting section 103. The media transmitting section 103 transmits the sent view to the client terminal 110.

In addition, the server 4300 is provided with a time comparison section 4308 that compares the time at which the list information transmitting section 4307 transmits list information and the time at which the request receiving section 104 receives content distribution request information. The time comparison section 4308 transmits the time comparison result to the charging section 4306.

Based on the time comparison result sent from the time comparison section 4308 and content distribution request analysis results sent from the request analysis section 4305, the charging section 4306 determines the charge amount to be charged when content is distributed, and performs charging accordingly. To be specific, the charging section 4306 refers to the content management information d4311 and determines, from the list of access time threshold values 4401 for content to be transmitted, the access time threshold value 4401 corresponding to the time comparison result sent from the time comparison section 4308. The charging section 4306 then extracts charging information 4402 corresponding to the determined access time threshold value 4401, and charges in accordance with this charging information 4402.

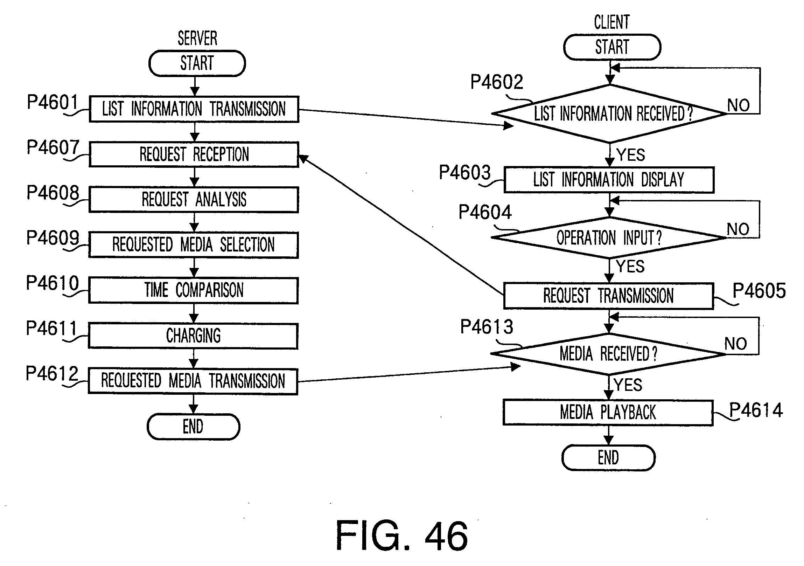

The operation of a media distribution system according to Embodiment 14 will be described below using FIG.46. FIG.46 is an operational flowchart of a media distribution system according to Embodiment 14.

First, the list information transmitting section 4307 of the server 4300 generates list information 4500 from content management information d4311, and transmits this to the client terminal 110 (P4601).

Then, when the list information receiving section 116 of the client terminal 110 receives this list information 4500 (P4602), the list information display section 117 displays the list information 4500 (P4603). Next, the client refers to this list information 4500 displayed on the list information display section 117, selects the desired content name 201, and inputs content distribution request information indicating a request for media with the desired content name 201, from the operation input section 113. Then, when the client inputs this content distribution request information (P4604), the request transmitting section 115 transmits this content distribution request information to the server 4300 (P4605).

When the request receiving section 104 of the server 4300 receives the content distribution request information (P4607), the request analysis section 4305 analyzes the content distribution request information and determines the content name of the media whose distribution is being requested (P4608).

The media selecting section 4302 then selects media based on the client's request (P4609).

Next, the time comparison section 4308 compares the time at which the list information transmitting section 4307 transmitted list information and the time at which the request receiving section 104 received content distribution request information, and transmits the time comparison result to the charging section 4306 (P4610).

The charging section 4306 then charges for the content distribution request sent from the request analysis section 4305 in accordance with the time comparison result sent from the time comparison section 4308 (P4611).

In the client terminal 110, the media receiving section 111 receives the sent media (P4613), and the media playback section 112 plays back the media (P4614).

As described above, according to Embodiment 14 the charge amount can be varied according to the time from the point at which a client obtains content-related information until the point at which the client actually requests content distribution. By this means, charges can be reduced proportionally the shorter the time from the point at which a client obtains content-related information until the point at which the client actually requests content distribution. As a result, clients will request content distribution quickly after obtaining content-related information. That is to say, the content distribution side can prompt content distribution.

Also, charges can be reduced proportionally the longer the time from the point at which a client obtains content-related information until the point at which the client actually requests content distribution. Reducing the charge as access time increases in this way is effective as a charging method for media of a highly real-time character, such as news, and media that have greater value the more recent they are, such as movies. Since media whose value has decreased due to age are reduced in price, clients will request distribution of such media.

In Embodiment 14, charging is performed after media distribution. By so doing it is possible to prevent media from being transmitted when charging cannot be performed for some reason, such as a charging error or an insufficient client account balance.

Information on the remaining time for which media can be used with the current amount of money may also be displayed in count-down fashion in list information presented to a user. This enables a user to see how many seconds remain before the content charge increases, and therefore the user will request content distribution within that time. As a result, it is possible to prompt content distribution.

### (Embodiment 15)

In a media distribution system according to Embodiment 15, the charge amount is varied according to the time from the point at which a client requests a content preview until the point at which the client requests content media distribution.

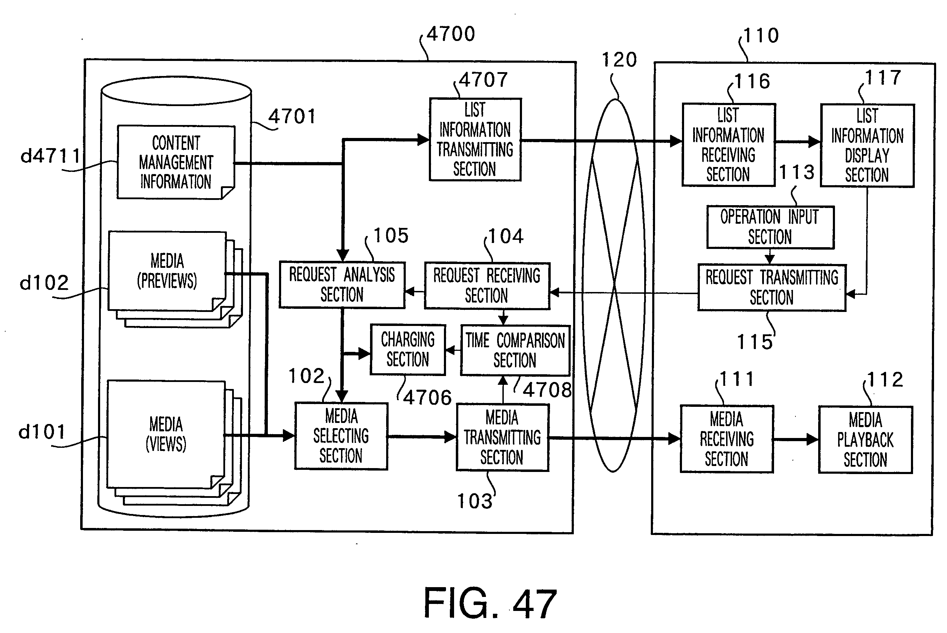

A media distribution system that includes a media distribution apparatus according to Embodiment 15 will be described below. First, the configuration of a media distribution system according to Embodiment 15 will be described using FIG.47. FIG.47 is a block diagram of a media distribution system according to Embodiment 15. Parts identical to those already described are assigned the same codes as before.

In this media distribution system, a server 4700 of a media distributor (provider) performing a content distribution service and a client terminal 110 such as a portable terminal, storage-type broadcast terminal, home gateway, or the like, are connected via a network 120 such as a the internet, wireless communication network, or the like.

A storage section 4701 in the server 4700 stores, for each content item, as different forms of media, views d101, which are original media, and content previews (summary videos) comprising information related to the views d101.

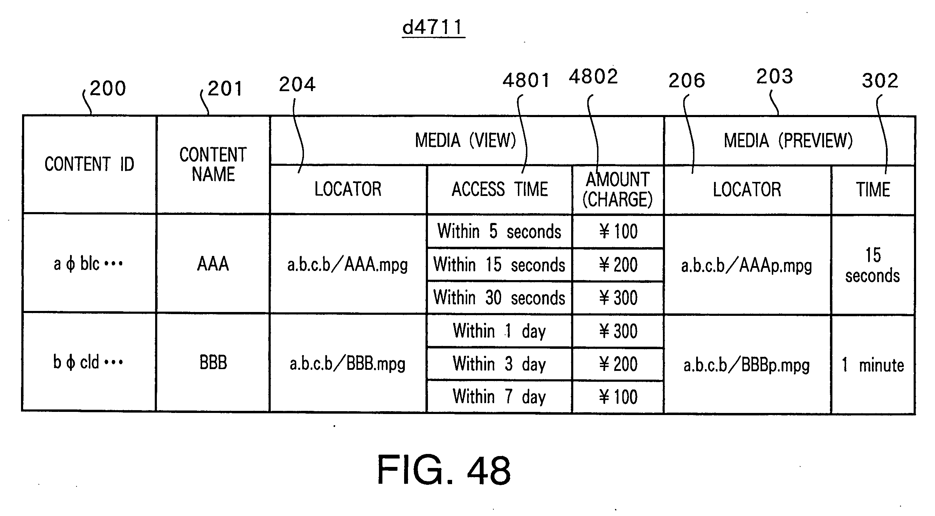

As shown in FIG.48, in the content management information d4711 are stored a plurality of groups comprising a content ID 200 which is identification information that identifies content, a content name 201, a locator 204 which is locator information of a view 202 corresponding to a content ID 200, an access time 4801 from the point at which a user receives a preview until the point at which the user requests view distribution, charging information 4802 in accordance with the access time 4801, locator information 206 of a preview 203 corresponding to a content ID 200, and time information 302 which is preview 203 playback time information.

As can be seen from the figure, for media with the content name "AAA", the shorter the access time 4801 the lower is the charge. That is to say, the user can receive a discount by requesting view distribution soon after receiving a preview. For media with the content name "BBB", on the other hand, the longer the access time 4802 the lower is the charge. That is to say, the user can receive a discount by waiting for some time after receiving a preview before requesting view distribution. Reducing the charge as access time increases is effective as a charging method for media of a highly real-time character, such as news, and media that have greater value the more recent they are, such as movies.

Metadata for explaining content of media d101 is used for content management information d4711. FIG.48 is a drawing showing the configuration of content management information according to Embodiment 15.

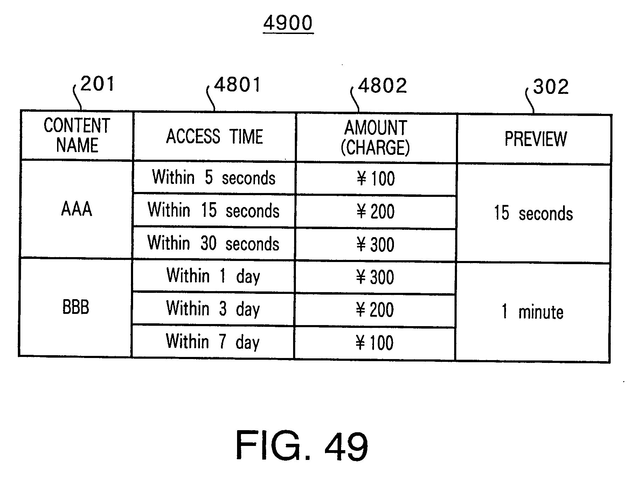

The server 4700 is provided with a list information transmitting section 4707 that generates the content list information 4900 shown in FIG.49 from content management information d4711 and transmits this to the client terminal 110. FIG.49 is a drawing showing the configuration of list information according to Embodiment 15.

As can be seen from FIG.49, the list information 4900 is information required when a client selects content, being composed of groups comprising the content name 201, access time 4801, charging information 4802 for the access time 4801, and the preview time 302.

The client terminal 110 is provided with a list information receiving section 116 that receives list information 4900 sent from the server 4700, and a list information display section 117 that displays received list information 4900. The client terminal 110 is also provided with an operation input section 113 that inputs content distribution request information that requests desired media distribution of desired content from the list information 4900.

Furthermore, the client terminal 110 is provided with a request transmitting section 115 that transmits content distribution request information input from the operation input section 113 to the server 4700.

The server 4700 is provided with a request receiving section 104 that receives content distribution request information sent from the client terminal 110.

The server 4700 is also provided with a request analysis section 105 that analyzes information such as a content name 201, media 202 locator information 204, preview 203 locator information 206, and so forth, corresponding to received content distribution request information, by referring to content management information d4711. The request analysis section 105 transmits its content distribution request information analysis results to a media selecting section 102 and charging section 4706.

The media selecting section 102 extracts from the views d101 a view of content according to the sent analysis results, or a preview from the previews d102, and transmits these to the media transmitting section 103. The media transmitting section 103 transmits the sent view or preview to the client terminal 110.

In addition, the server 4700 is provided with a time comparison section 4708 that compares the time at which the request receiving section 104 receives a content distribution request for preview distribution and the time at which the request receiving section 104 receives content distribution request information for view distribution. The time comparison section 4708 transmits the time comparison result to the charging section 4706.

Based on the time comparison result sent from the time comparison section 4708 and content distribution request analysis results sent from the request analysis section 105, the charging section 4706 determines the charge amount to be charged when content is distributed, and performs charging accordingly. To be specific, the charging section 4706 refers to the content management information d4711 and determines, from the list of access times 4801 for content to be transmitted, the access time 4801 corresponding to the time comparison result sent from the time comparison section 4708. The charging section 4706 then extracts charging information 4802 corresponding to the determined access time 4801, and charges in accordance with this charging information 4802.

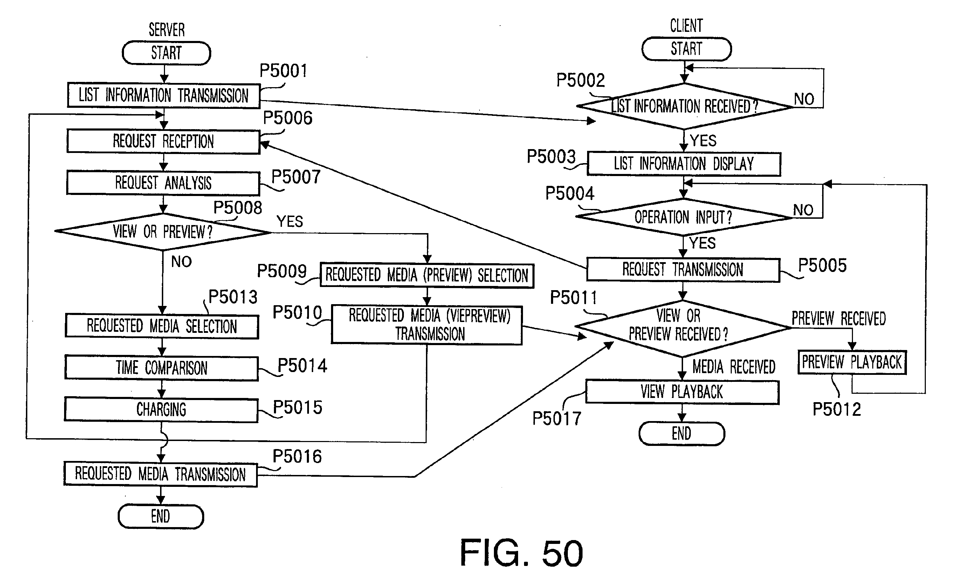

The operation of a media distribution system according to Embodiment 15 will be described below using FIG.50. FIG.50 is an operational flowchart of a media distribution system according to Embodiment 15.

First, the list information transmitting section 4707 of the server 4700 generates list information 4900 from content management information d4711, and transmits this to the client terminal 110 (P5001).

Then, when the list information receiving section 116 of the client terminal 110 receives this list information 4900 (P5002), the list information display section 117 displays the list information 4900 (P5003). Next, the client refers to this list information 4900 displayed on the list information display section 117, and first selects the desired content name 201, and inputs a content ID 200 corresponding to the desired content name 201, and content distribution request information requesting a preview corresponding to the content name 201, from the operation input section 113. Then, on completion of input of content distribution request information indicating that the client is requesting this preview (P5004), the request transmitting section 115 transmits this content distribution request information indicating the request of a preview to the server 4700 (P5005).

When the request receiving section 104 of the server 4700 receives the content distribution request information (P5006), the request analysis section 105 analyzes the content distribution request information (P5007), and determines whether preview distribution is being requested or view distribution is being requested (P5008).

In this case, the content distribution request information is requesting preview distribution, and therefore the media selecting section 102 refers to the content management information d4711 and extracts the locator 206 of the preview 203 for the content name 201 requested by the client. The media selecting section 102 then selects the preview d102 located at the extracted locator 206 from the storage section 4701 (P5009). Then the media transmitting section 103 transmits this selected preview d102 to the client terminal 110 (P5010). In this embodiment previews are free-of-charge, and therefore the charging section 4706 does not perform charging when a preview is transmitted.

In the client terminal 110, the media receiving section 111 determines whether the information sent is a view d101 or preview d102 (P5011). In this case, the information sent is a preview d102, and therefore the media playback section 112 plays back the preview d102 (P5012).

The client then checks the contents of the played-back preview, and if the preview shows the desired content, inputs content distribution request information requesting view distribution for this content from the operation input section 113. Then, on completion of input of content distribution request information requesting view distribution from the operation input section 113 (P5004), this content distribution request information is transmitted to the server 4700 (P5005).

When the request receiving section 104 of the server 4700 receives content distribution request information (P5006), the request analysis section 105 analyzes the content distribution request information (P5007). The request analysis section 105 analyzes the content distribution request information (P5007) and determines whether preview distribution is being requested or view distribution is being requested (P5008).

In this case, the content distribution request information is requesting view distribution, and therefore the media selecting section 102 selects a view d101 corresponding to the content analyzed by the request analysis section 105 from the storage section 4701 (P5013).

Next, the time comparison section 4708 compares the time at which the request receiving section 104 received a content distribution request for preview distribution and the time at which the request receiving section 104 received content distribution request information for view distribution, and outputs the comparison result to the charging section 4706 (P5014).

The charging section 4706 then refers to the content management information d4711 and determines, from the list of access times 4801 for transmitted content, the access time 4801 corresponding to the time comparison result sent from the time comparison section 4708. Then the charging section 4706 extracts charging information 4802 corresponding to the determined access time 4801, and charges in accordance with this charging information 4802 (P5015).

The media transmitting section 103 then transmits the media selected in P5013 to the client terminal 110 (P5016).

When the media receiving section 111 of the client terminal 110 receives this view (P5011), the media playback section 112 plays back the view (P5017).

As described above, according to Embodiment 15 the charge amount can be varied according to the time from the point at which a client requests preview distribution until the point at which the client actually requests content view distribution. By this means, charges can be reduced proportionally the shorter the time from the point at which a client obtains a preview until the point at which the client requests view distribution. As a result, clients will request content distribution quickly after obtaining a preview, which is free-of-charge. That is to say, the content distribution side can prompt view distribution.

Also, charges can be reduced proportionally the longer the time from the point at which a client obtains a preview until the point at which the client actually requests content view distribution. Reducing the charge as access time increases in this way is effective as a charging method for media of a highly real-time character, such as news, and media that have greater value the more recent they are, such as movies. Since media whose value has decreased due to age are reduced in price, clients will request distribution of such media.

### (Embodiment 16)

Embodiment 16 is an improved version of Embodiment 15. That is to say, whereas in Embodiment 15 previews are generated and stored beforehand, in Embodiment 15 only original-version media are stored, and a plurality of types of media summaries are generated dynamically. To be more specific, in Embodiment 16 metadata for generating a plurality of types of media summaries from original-version media is stored, and is used as necessary.

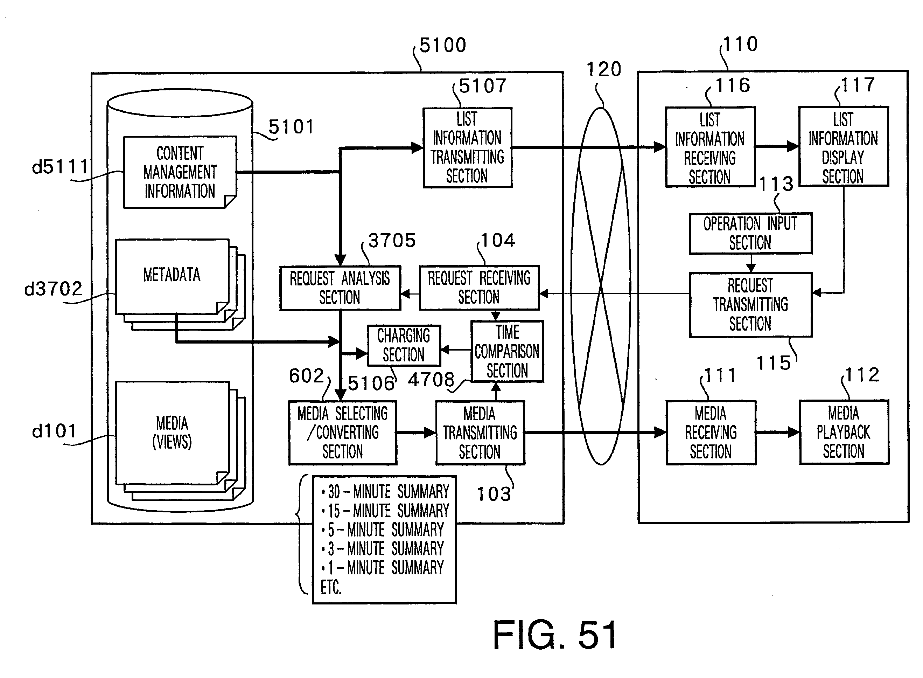

A media distribution system that includes a media distribution apparatus according to Embodiment 16 will be described below. First, the configuration of a media distribution system according to Embodiment 16 will be described using FIG.51. FIG.51 is a block diagram of a media distribution system according to Embodiment 16. Parts identical to those already described are assigned the same codes as before.

In this media distribution system, a server 5100 of a media distributor (provider) performing a content distribution service and a client terminal 110 such as a portable terminal, storage-type broadcast terminal, home gateway, or the like, are connected via a network 120 such as a the internet, wireless communication network, or the like.

The server 5100 is provided with a storage section 5101 that stores, as content media, original-version media (hereinafter referred to as "media" ) d101, metadata d3702 comprising programs for converting views d101 to a plurality of types of media summaries, and content management information d5111 that manages views d101 and metadata d3702 by maintaining correspondence between the two.

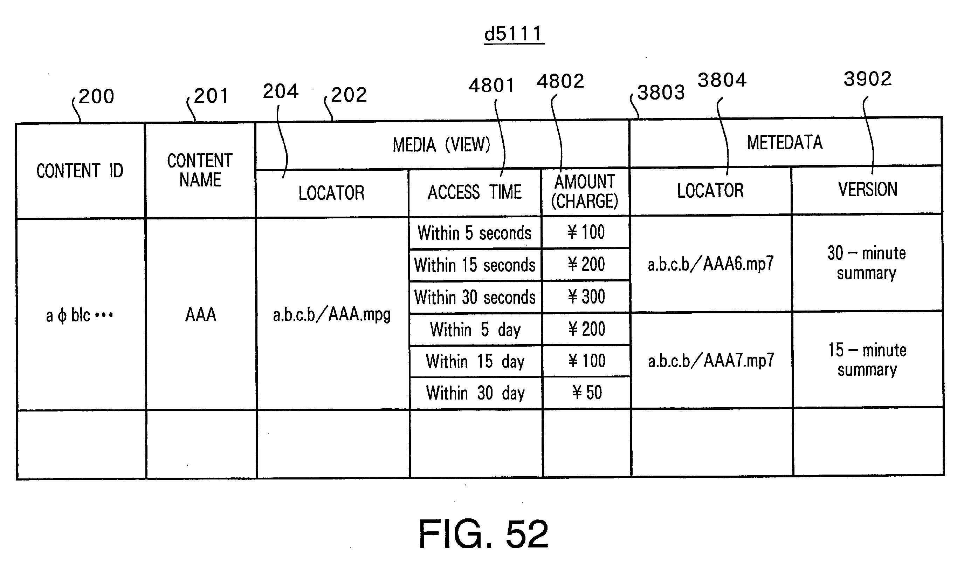

As shown in FIG.52, in the content management information d5111 are stored a plurality of groups comprising a content ID 200 which is identification information that identifies content, a content name 201, a locator 204 which is locator information of a view 202 corresponding to a content ID 200, an access time 4801 from the point at which a user receives a summary until the point at which the user requests view distribution, charging information 4802 in accordance with the access time 4801, metadata 3803 corresponding to a content name 201, locator information 3804 of metadata 3803, and a version 3902 of a summary generated using metadata 3803.

As can be seen from the figure, for media with the content name "AAA", the shorter the access time 4801 the lower is the charge. That is to say, the user can receive a discount by requesting view distribution soon after receiving a preview. Also, two kinds of summary versions can be generated for media with the content name "AAA". Moreover, for media with the content name "AAA", charging corresponding to the charging information 4802 differs according to the summary version. That is to say, a user can receive different discounts according to the summary whose distribution the user requests. In this example, it is cheaper to receive distribution of a short summary than to receive distribution of a long summary.

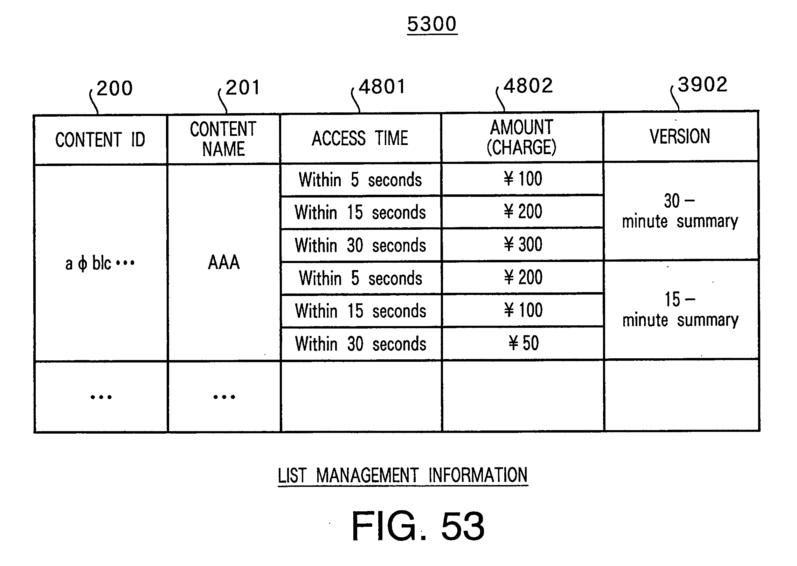

The server 5100 is provided with a list information transmitting section 5107 that generates the content list information 5300 shown in FIG.53 from content management information d5111 and transmits this to the client terminal 110. FIG.53 is a drawing showing the configuration of list information according to Embodiment 16.

As can be seen from FIG.53, the list information 5300 is information required when a client selects content, being composed of groups comprising the content ID 200, content name 201, access time 4801, charging information 4802, and summary version information 3902.

The client terminal 110 is provided with a list information receiving section 116 that receives list information 5300 sent from the server 5100, and a list information display section 117 that displays received list information 5300. The client terminal 110 is also provided with an operation input section 113 that inputs content distribution request information that requests desired media distribution, or a summary, of desired content from the list information 5300.

Furthermore, the client terminal 110 is provided with a request transmitting section 115 that transmits content distribution request information input from the operation input section 113 to the server 5100.

The server 5100 is provided with a request receiving section 104 that receives content distribution request information sent from the client terminal 110.

The server 5100 is also provided with a request analysis section 105 that analyzes information such as a content ID 200, media 202 locator information 204, preview 203 locator information 206, and so forth, corresponding to received content distribution request information, by referring to content management information d4711. The request analysis section 105 transmits its content distribution request information analysis results to a media selecting section 102 and charging section 5106.

The server 5100 is also provided with a request analysis section 3705 that analyzes information such as a content name 201, metadata 3803 locator information 3804, and so forth, corresponding to received content distribution request information, by referring to content management information d5511. The request analysis section 3705 transmits its content distribution request information analysis results to a media selecting/converting section 602 and charging section 5106.

If the content distribution request information is a content distribution request, the media selecting/converting section 602 extracts from the views d101 a view of content corresponding to the sent analysis results. If the content distribution request information is a summary distribution request, the media selecting/converting section 602 extracts predetermined metadata d3702 from the storage section 5101 using a metadata 3803 locator information 3804 according to the sent analysis results, and generates a predetermined summary by converting a view d101 using this metadata d3702. The media selecting/converting section 602 then transmits the content or summary to the media transmitting section 103. The media transmitting section 103 transmits the sent view or preview to the client terminal 110.

In addition, the server 5100 is provided with a time comparison section 4708 that compares the time at which the request receiving section 104 receives a content distribution request for summary distribution and the time at which the request receiving section 104 receives content distribution request information for view distribution. The time comparison section 4708 transmits the time comparison result to the charging section 5106.

Based on the time comparison result sent from the time comparison section 4708 and content distribution request analysis results sent from the request analysis section 3705, the charging section 5106 determines the charge amount to be charged when content is distributed, and performs charging accordingly. To be specific, the charging section 5106 refers to the content management information d5111 and determines, from the list of access times 4801 for transmitted content, the access time 4801 corresponding to the time comparison result sent from the time comparison section 4708. Next, the charging section 5106 extracts the transmitted summary from the summary version list. Then the charging section 5106 extracts charging information 4802 corresponding to the determined access time 4801 and summary version 3902, and charges in accordance with this charging information 4802.

The operation of a media distribution system according to Embodiment 16 will be described below. The operation of a media distribution system according to Embodiment 16 involves a partial improvement of the flow in FIG.50.

To be specific, the differences are that, in part P5008 in the flowchart in FIG. 50 the version of the summary requested by the client is created using metadata 3703 and media d101, and in part P5010, the created summary is transmitted.

As regards charging, in part P5015 the time comparison section 4708 compares the time at which the request receiving section 104 receives a content distribution request for summary distribution and the time at which the request receiving section 104 receives content distribution request information for view distribution, and outputs the result of the time comparison. Then, in P5016, the charging section 5106 refers to the content management information d5111 and determines, from the list of access times 4801 for transmitted content, the access time 4801 corresponding to the time comparison result sent from the time comparison section 4708. Next, the charging section 5106 extracts the transmitted summary from the summary version list. Then the charging section 5106 extracts charging information 4802 corresponding to the determined access time 4801 and summary version 3902, and charges in accordance with this charging information 4802.

As described above, according to Embodiment 16 charging can be performed according to the time from the point at which a client requests a summary until the point at which the client actually requests a view. By this means, charges can be reduced proportionally the faster the time from the point at which a client requests a summary until the point at which the client actually requests a view. As a result, clients will make view requests quickly.

Also, according to Embodiment 16 charging for the time from the point at which a client requests a summary until the point at which the client actually requests a view can be varied for each summary generated. By this means, a discount can be implemented according to the summary distributed to a client.

### (Embodiment 17)

In a media distribution system according to Embodiment 17, a client transmits a desired viewpoint to the media distribution side in advance, and in response to this the media distribution side offers content matching the client's viewpoint. Also, in Embodiment 17, a client transmits an advertisement distribution request to the media distribution side together with a viewpoint, and the client can receive a discount by receiving advertisement distribution.

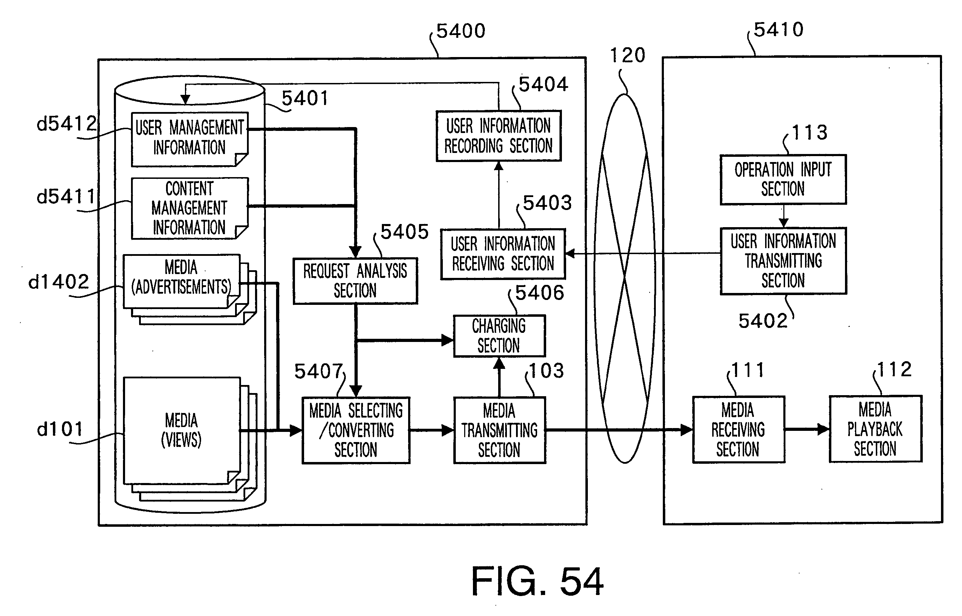

A media distribution system that includes a media distribution apparatus according to Embodiment 17 will be described below. First, the configuration of a media distribution system according to Embodiment 17 will be described using FIG.54. FIG.54 is a block diagram of a media distribution system according to Embodiment 17. Parts identical to those already described are assigned the same codes as before.

In this media distribution system, a server 5400 of a media distributor (provider) performing a content distribution service and a client terminal 5410 such as a portable terminal, storage-type broadcast terminal, home gateway, or the like, are connected via a network 120 such as a the internet, wireless communication network, or the like.

The client terminal 5410 is provided with an operation input section 113 that inputs user information such as a desired viewpoint and advertisement request when a user requests content distribution. A user can also specify an advertising amount when making an advertisement request.

A user information transmitting section 5402 sends user information to the server 5400.

The server 5400 is provided with a user information receiving section 5403 that receives sent user information. The user information receiving section 5403 sends received user information to a user information recording section 5404. The user information recording section 5404 analyzes user information and stores it in user management information d5412 in a storage section 5401.

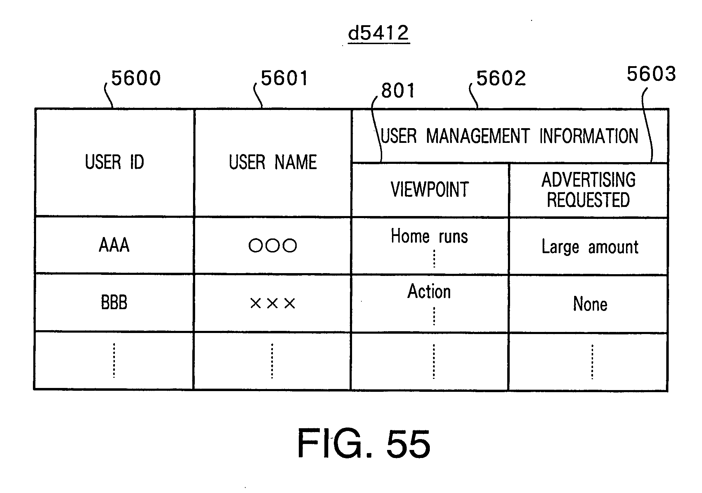

As shown in FIG.55, in the user management information d5412 are stored a plurality of groups comprising a user ID 5600, a user name 5601, and a plurality of viewpoints 801 and advertising request information 5603 as user management information 5602.

The advertising request information 5603 is divided into a plurality of levels according to the advertising amount. FIG.55 is a drawing showing the configuration of user management information according to Embodiment 17.

Also stored in the storage section 5401 are content views d101, advertisements d1402, and content management information d5411 that manages the views d101 and advertisements d1402.

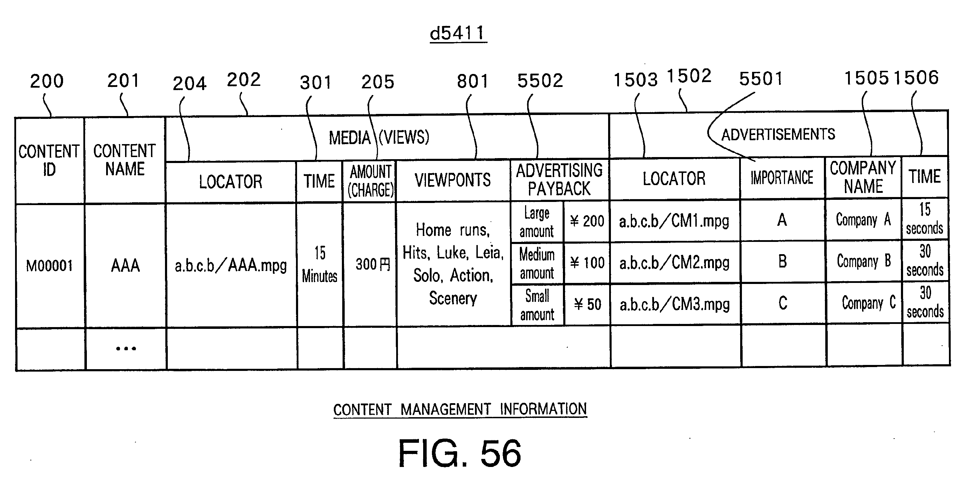

As shown in FIG.56, in the content management information d5411 are stored a plurality of groups comprising a content ID 200, a content name 201, a locator 204 which is locator information of a view 202, time information 301 for a view 202 of a content name 201, charge information 205 applied when a view 202 is distributed, content viewpoint information 801, an advertising payback charge 5502 which is a discount amount resulting from advertisement distribution when content is distributed, advertisement 1502 locator information 1503, an advertisement importance indicator 5501, company name information 1505 indicating the sponsor of an advertisement 1502, and time information 1506 for an advertisement 1502. The level of the advertising payback charge 5502 differs according to the amount of advertising material distributed. As can be seen from the figure, the greater the amount of advertising material distributed, the higher is the payback charge.

The advertisement importance indicator 5501 is information used when transmitting advertising material together with a view. To be specific, when a user requests a large amount of advertising material, advertising material of high importance through advertising material of low importance is transmitted. When a user requests a small amount of advertising material, only advertising material of high importance is transmitted.

FIG.56 is a drawing showing the configuration of content management information according to Embodiment 17.

The server 5400 is also provided with a request analysis section 5405 that refers to the user management information d5412 and content management information d5411, analyzes content that has a viewpoint included in the user information, extracts information such as content ID 200, content name 201, locator 204, and charge information 205, and transmits this information to a media selecting/converting section 5407 and charging section 5406. If advertising request information 5603 of user management information d5412 includes information indicating a request for advertisement distribution, the request analysis section 5405 extracts locator information 1503 of a number of advertisements corresponding to the desired advertising amount, and transmits this information to the media selecting/converting section 5407 and charging section 5406.

The media selecting/converting section 5407 refers to the views d101 and advertisements d1402, and extracts media and advertising material corresponding to the information sent from the request analysis section 5405. Then the media selecting/converting section 5407 creates media in which advertising material is inserted in the extracted media, transmits the created media to the media transmitting section 103. The media transmitting section 103 transmits the sent media to the client terminal 5410.

The client terminal 5410 is provided with a media receiving section 111 that receives sent media, and a media playback section 112 that plays back received media.

The server 5400 is provided with a charging section 5406 that charges a client based on the content charge information 205 and advertising payback charge 5502 extracted by the request analysis section 5405. The charging section 5406 performs processing to debit a client's account by the charged amount.

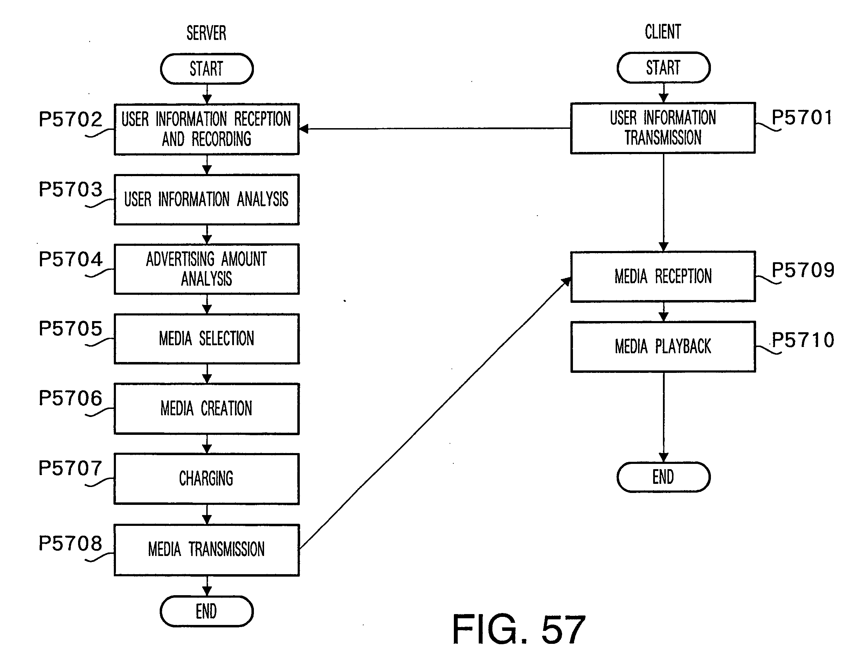

The operation of a media distribution system according to Embodiment 17 will be described below using FIG.57. FIG.57 is an operational flowchart of a media distribution system according to Embodiment 17.

First, the user inputs user information such as a desired viewpoint and an advertisement request from the operation input section 113. When requesting advertising material, the user also specifies the amount of advertising material. Then the user information transmitting section 5402 transmits this user information to the server 5400 (P5701).

The server 5400 receives the sent user information in its user information receiving section 5403, and the user information recording section 5404 analyzes the received user information and records it in the user management information d5412 in the storage section 5401 (P5702).

The request analysis section 5405 of the server 5400 then refers to the user management information d5412 and content management information d5411, analyzes content that has a viewpoint included in the user management information 5602 of the user management information d5412, and extracts information such as content ID 200, content name 201, locator 204, and charge information 205. Then the request analysis section 5405 transmits the extracted information to the media selecting/converting section 5407 and charging section 5406 (P5703). The request analysis section 5405 then determines whether the advertising request information 5603 of user information stored in the user management information d5412 includes information indicating a request for advertisement distribution. If information indicating a request for advertisement distribution is included, the request analysis section 5405 extracts the locator 1503 of advertising material to be distributed according to the desired amount of advertising material, and transmits this to the media selecting/converting section 5407 and charging section 5406 (P5704).

Next, the media selecting/converting section 5407 refers to the views d101 and advertisements d1402, and selects media and advertising material corresponding to the information sent from the request analysis section 5405 (P5705). Then the media selecting/converting section 5407 creates media in which advertising material is inserted in the extracted media (P5706). The charging section 5406 of the server 5400 then charges the client based on the content charge information 205 and advertising payback charge 5502 extracted by the request analysis section 5405 (P5710). The media transmitting section 103 transmits the media created in P5706 to the client terminal 5410 (P5707).

In the client terminal 5410, the media receiving section 111 receives the sent media (P5709), and the media playback section 112 plays back the received media (P5710).

As described above, according to Embodiment 17 a client transmits a desired viewpoint to the media distribution side in advance, and in response to this the media distribution side offers content matching the client's viewpoint.

Also, according to Embodiment 17, a client transmits an advertisement distribution request to the media distribution side together with a viewpoint, and the client can receive a discount by receiving advertisement distribution.

Moreover, according to Embodiment 17 a client can specify the amount of advertising material to be distributed, and can receive a discount service in accordance with the amount of advertising material specified. By this means, if a client wishes to receive service cheaply even if it takes time, the client can receive service cheaply by specifying distribution of a large amount of advertising material. Also, if a client wishes to receive service quickly even if this is more expensive, the client can receive service quickly by eliminating distribution of advertising material.

A mode is also possible whereby charging of advertisement providers is performed in accordance with the number of users to whom content is distributed. According to this mode, application is possible to a model whereby clients (users) can receive content distribution free-of-charge and all costs of content distribution are borne by the advertiser, as with broadcasting.

### (Embodiment 18)

In a media distribution system according to Embodiment 18, a client transmits a desired viewpoint to the media distribution side in advance, and in response to this the media distribution side creates and offers a summary of content matching the client's viewpoint.

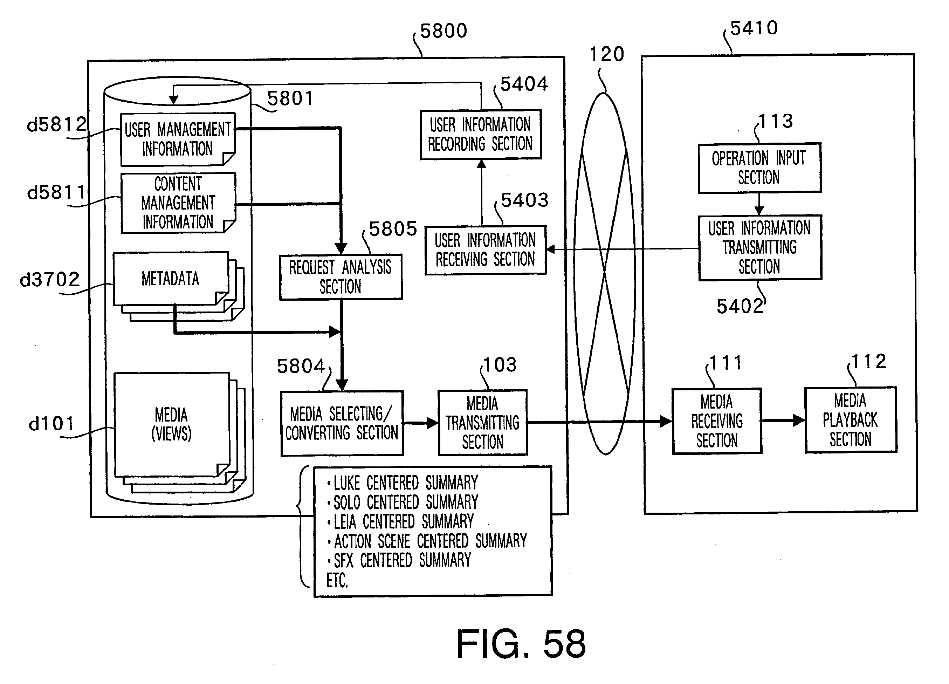

A media distribution system that includes a media distribution apparatus according to Embodiment 18 will be described below. First, the configuration of a media distribution system according to Embodiment 18 will be described using FIG.58. FIG.58 is a block diagram of a media distribution system according to Embodiment 18. Parts identical to those already described are assigned the same codes as before.

In this media distribution system, a server 5800 of a media distributor (provider) performing a content distribution service and a client terminal 5410 such as a portable terminal, storage-type broadcast terminal, home gateway, or the like, are connected via a network 120 such as a the internet, wireless communication network, or the like.

The client terminal 5410 is provided with an operation input section 113 that inputs user information such as a desired viewpoint when a user requests content distribution. A user information transmitting section 5402 sends user information to the server 5800.

The server 5800 is provided with a user information receiving section 5403 that receives sent user information. The user information receiving section 5403 sends received user information to a user information recording section 5404. The user information recording section 5404 analyzes user information and stores it in user management information d5812 in a storage section 5801.

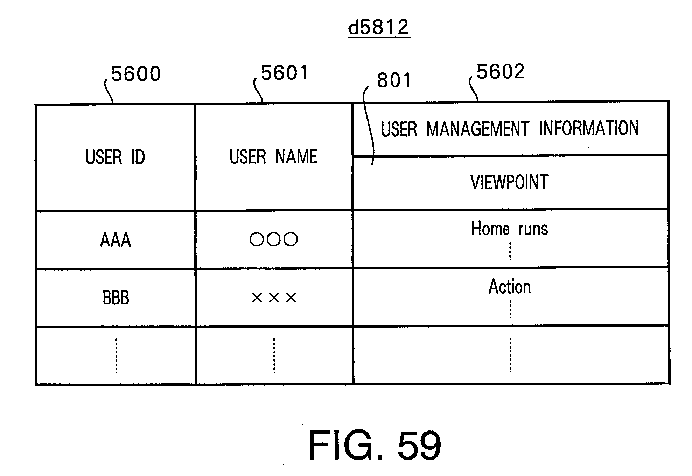

As shown in FIG.59, in the user management information d5812 are stored a plurality of groups comprising a user ID 5600, a user name 5601, and a plurality of viewpoints 801 that are user management information 5602. FIG.59 is a drawing showing the configuration of user management information according to Embodiment 18.

Also stored in the storage section 5801 are content views d101, metadata d3702 that creates summaries from views d101 based on user information, and content management information d5811 that manages the views d101 and metadata d3702.

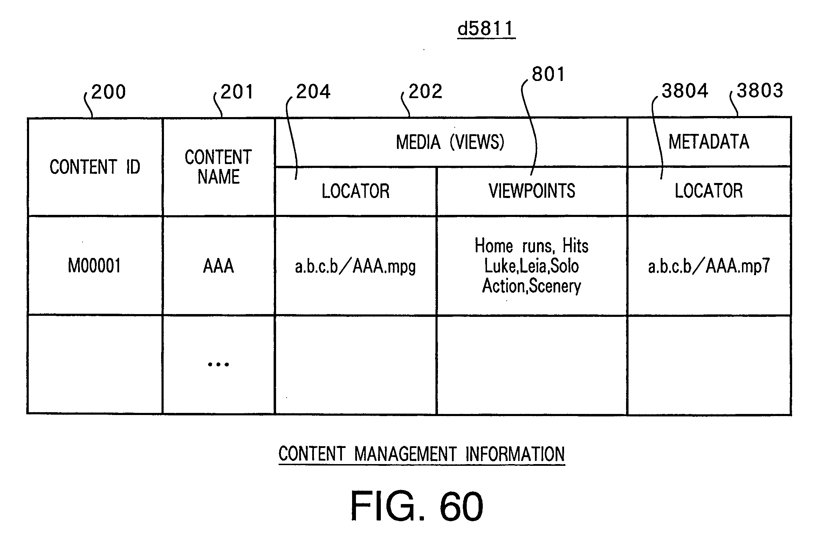

As shown in FIG.60, in the content management information d5811 are stored a plurality of groups comprising a content ID 200, a content name 201, a locator 204 which is locator information of a view 202, content viewpoint information 801, and metadata 3803 locator information 3804. FIG.60 is a drawing showing the configuration of content management information according to Embodiment 18.

The server 5800 is also provided with a request analysis section 5805 that refers to the user management information d5812 and content management information d5811, analyzes a viewpoint included in the user information, extracts information such as the content ID 200 of content that has the extracted viewpoint, the content name 201, locator 204, and metadata locator information 3804, and transmits this information to a media selecting/converting section 5804.

The selecting/converting section 5804 refers to the media d101 and metadata d3702, and extracts media and metadata corresponding to the information sent from the request analysis section 5805. Then the selecting/converting section 5804 extracts, from the extracted media, segments that have the same viewpoint as a viewpoint contained in the user information, links them together, and creates a summary. The media selecting/converting section 5804 then transmits the created summary to the media transmitting section 103, and the media transmitting section 103 transmits the sent media to the client terminal 5410.

The client terminal 5410 is provided with a media receiving section 111 that receives sent media, and a media playback section 112 that plays back received media.

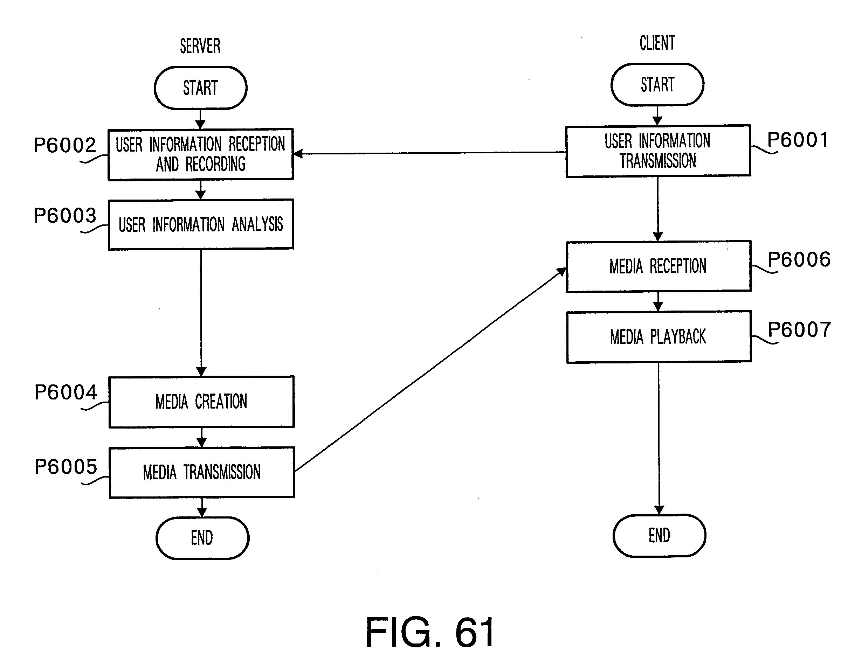

The operation of a media distribution system according to Embodiment 18 will be described below using FIG.61. FIG.61 is an operational flowchart of a media distribution system according to Embodiment 18.

First, the user inputs user information such as a desired viewpoint from the operation input section 113. Then the user information transmitting section 5402 transmits this user information to the server 5800 (P6001).

The server 5800 receives the sent user information in its user information receiving section 5403, and the user information recording section 5404 analyzes the received user information and records it in the user management information d5812 in the storage section 5801 (P6002).

The request analysis section 5805 of the server 5800 then refers to the user management information d5812 and content management information d5811, analyzes content that has a viewpoint 801 included in the user management information 5602 of the user management information d5812, extracts information such as the content ID 200 of the analyzes content, the content name 201, locator 204, and metadata locator information 3804, and transmits this information to the media selecting/converting section 5804 (P6003).

Next, the selecting/converting section 5804 refers to the media d101 and metadata d3702, extracts content corresponding to the information sent from the request analysis section 5805, extracts, from this content, segments that have the same viewpoint as a viewpoint contained in the user information, links them together, and creates a summary (P6004). The media selecting/converting section 5804 then transmits the created summary to the client terminal 5410 (P6005).

In the client terminal 5410, the media receiving section 111 receives the sent media (P6006), and the media playback section 112 plays back the received media (P6007).

As described above, according to Embodiment 18 a client can, by transmitting a desired viewpoint in advance to the media distribution side, receive distribution from the media distribution side of a summary of content matching the desired viewpoint. By this means a client can avoid receiving unnecessary summaries, and thus avoid paying unnecessary communication costs.

In Embodiment 18 a case has been described in which summary distribution is free-of-charge, but a mode is also possible whereby a summary is charged for according to its duration.

### (Embodiment 19)

In a media distribution system according to Embodiment 19, charging is performed in advance in order for a user to receive content. The content distribution side gives the user information on the user's balance (remaining amount of money), and the user checks this balance information before requesting distribution of desired content.

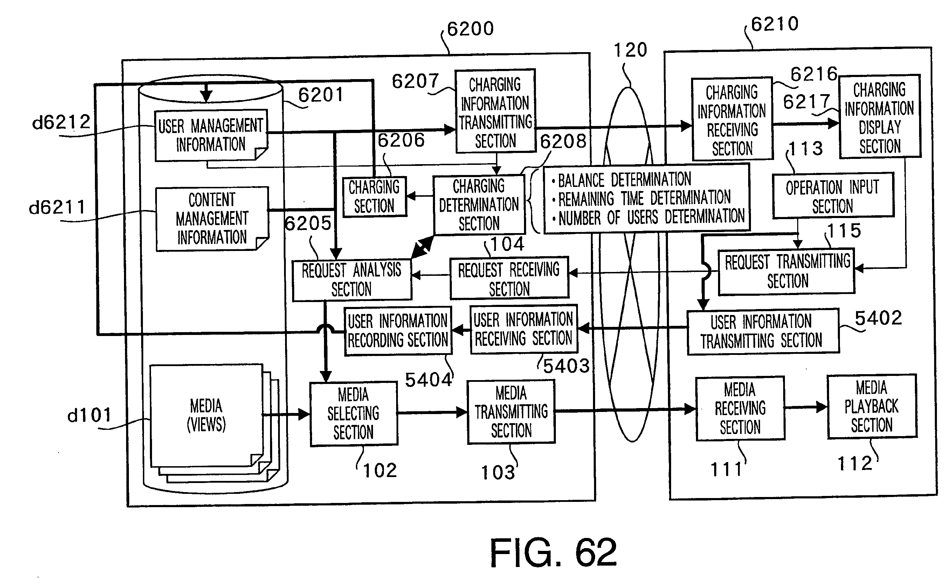

A media distribution system according to Embodiment 19 will be described below. First, the configuration of a media distribution system according to Embodiment 19 will be described using FIG. 62. FIG. 62 is a block diagram of a media distribution system according to Embodiment 19. Parts identical to those already described are assigned the same codes as before.

In this media distribution system, a server 6200 of a media distributor (provider) performing a content distribution service and a client terminal 6210 such as a portable terminal, storage-type broadcast terminal, home gateway, or the like, are connected via a network 120 such as a the internet, wireless communication network, or the like.

The client terminal 6210 is provided with an operation input section 113 that inputs user information such as a desired viewpoint when a user requests content distribution. A user information transmitting section 5402 sends user information to the server 6200.

The server 6200 is provided with a user information receiving section 5403 that receives sent user information. The user information receiving section 5403 sends received user information to a user information recording section 5404. The user information recording section 5404 analyzes user information and stores it in user management information d6212 in a storage section 6201.

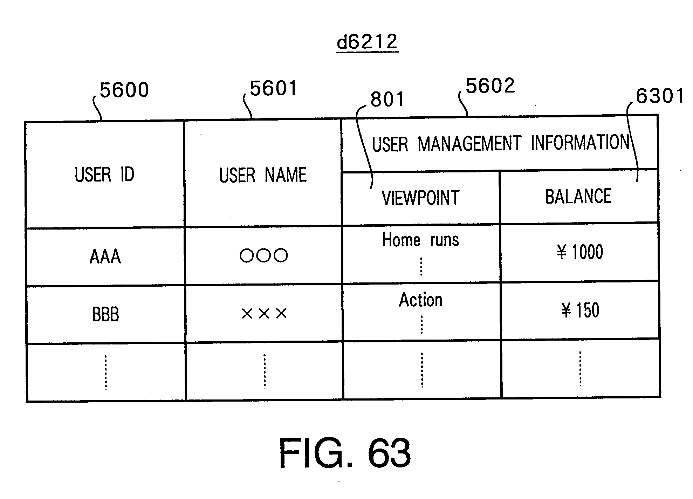

As shown in FIG.63, in the user management information d6212 are stored a plurality of groups comprising a user ID 5600, a user name 5601, a plurality of viewpoints 801 as user management information 5602, and balance information 6301 regarding an amount of money input from the operation input section 113. FIG.63 is a drawing showing the configuration of user management information according to Embodiment 19.

Also stored in the storage section 6201 are content views d101, and content management information d6211 that manages the views d101.

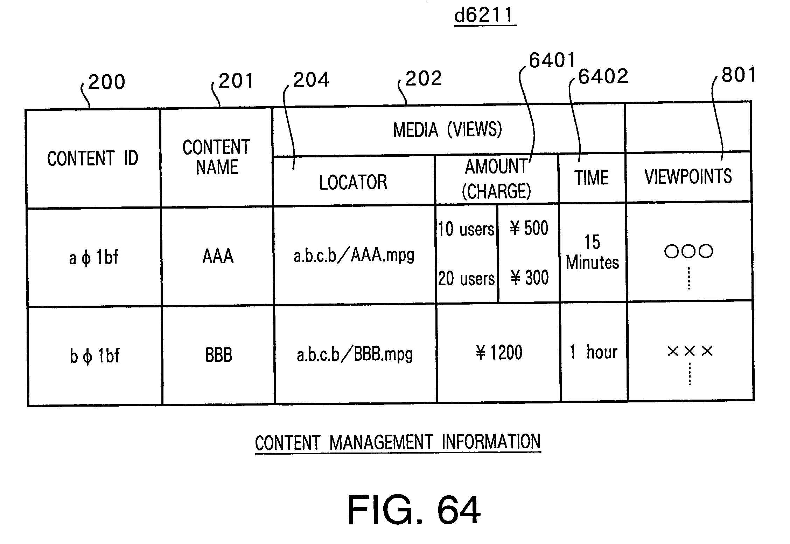

As shown in FIG.64, in the content management information d6211 are stored a plurality of groups comprising a content ID 200, a content name 201, a locator 204 which is locator information of a view 202, view 202 monetary amount information 6401, view 202 time information 6402, and content viewpoint information 801.

The monetary amount information 6401 is lower the greater the number of people receiving view 202 distribution. Consequently, a user will encourage other people to receive content, and the number of people receiving content will increase, resulting in higher profits on the content distribution side.

FIG.64 is a drawing showing the configuration of content management information according to Embodiment 19.

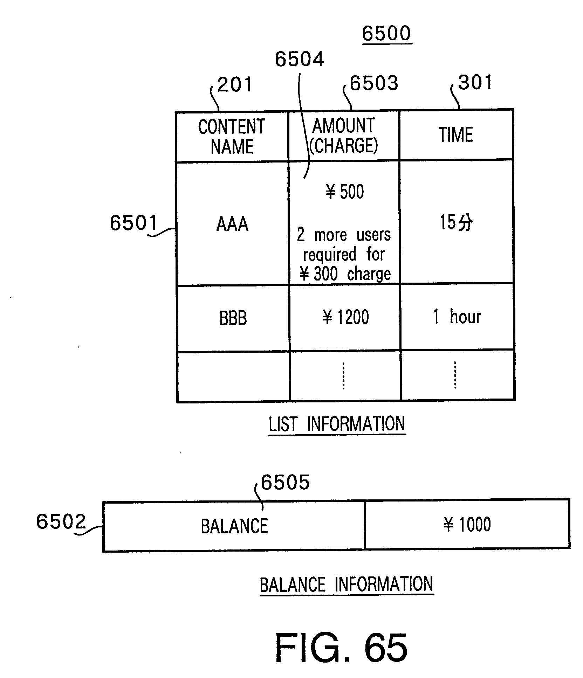

The server 6200 is provided with a charging information transmitting section 6207 that generates the charging information 6500 shown in FIG.65 from content management information d6211, and transmits it to the client terminal 6210. FIG.65 is a drawing showing the configuration of charging information according to Embodiment 19.

As can be seen from FIG.65, charging information 6500 is composed of list information 6501 and balance information 6502. The list information 6501 is information required when a client selects content, being composed of groups comprising the content name 201, monetary amount information 6503, and time information 301. The content names 201 given in the list information 6501 are content names of content that has a viewpoint of user management information d6212. As can be seen from 6504 in the figure, the monetary amount information 6503 also includes information as to how many more people need to request content distribution in order for the price to change.

The balance information 6502 comprises balance amount information 6505 regarding the amount pooled by clients.

The client terminal 6210 is provided with a charging information receiving section 6216 that receives charging information 6500 sent from the server 6200, and a charging information display section 6217 that displays received charging information 6500. Furthermore, the client terminal 6210 is provided with a request transmitting section 115 that transmits content distribution request information input from the operation input section 113 to the server 6200.

The server 6200 is provided with a request receiving section 104 that receives content distribution request information sent from the client terminal 6210.

The server 6200 is also provided with a request analysis section 6205 that refers to the content management information d6211 and analyzes information such as content ID 200, content name 201, media 202 locator information 204, and monetary amount information 6401, corresponding to received content distribution request information. The request analysis section 6205 transmits the content distribution request information analysis results to a charging determination section 6208 and a media selecting section 102.

The charging determination section 6208 identifies content requested by a user based on the analysis results from the request analysis section 6205, and determines the number of users to whom this content is currently being distributed. In addition, the charging determination section 6208 compares the balance information 6301 in the user management information d6212 and the monetary amount information 6401 corresponding to the number of users to whom the relevant content is currently being distributed, and transmits the comparison result to the request analysis section 6205 and charging information transmitting section 6207.

If the balance information 6301 amount is less than the monetary amount information 6401 amount, the charging determination section 6208 transmits a control signal to the request analysis section 6205 to prevent transmission of the content distribution request information analysis results to the media selecting section 102.

If, on the other hand, the balance information 6301 amount is greater than the monetary amount information 6401 amount, the charging determination section 6208 transmits a control signal to the request analysis section 6205 to have a view corresponding to the content distribution request information transmitted to the media selecting section 102. Together with this, the charging determination section 6208 transmits content monetary amount information 6401 to a charging section 6206.

On receiving content monetary amount information 6401 from the charging determination section 6208, the charging section 6206 subtracts the content monetary amount information 6503 amount from the balance information 6301 amount in the user management information d6212.

When analysis results are sent from the request analysis section 6205, the media selecting section 102 extracts a view of content corresponding to the sent analysis results from the views d101, and transmits the extracted view to the media transmitting section 103. The media transmitting section 103 then transmits the sent view to the client terminal 6210.

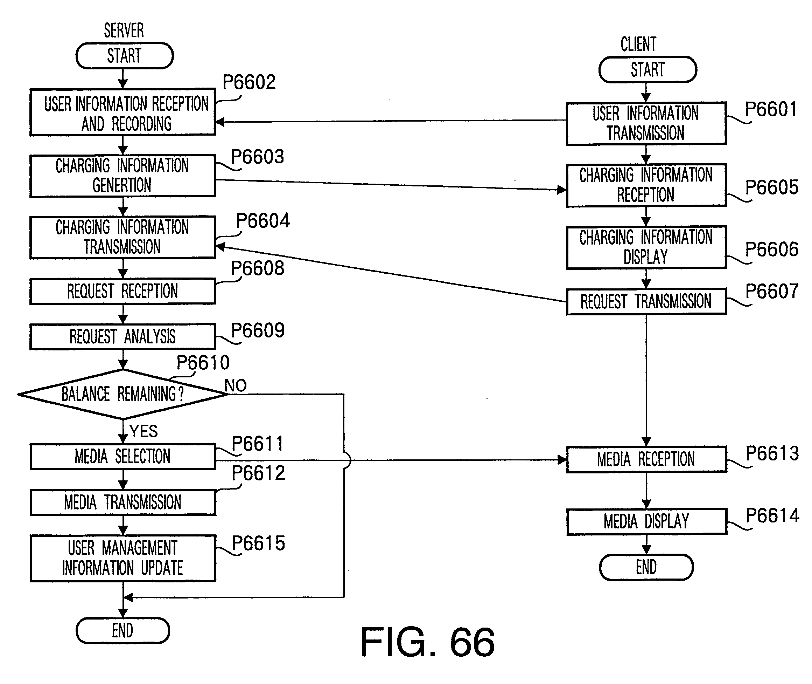

The operation of a media distribution system according to Embodiment 19 will be described below using FIG.66. FIG.66 is an operational flowchart of a media distribution system according to Embodiment 19.

First, the user inputs user information such as a desired viewpoint from the operation input section 113. Then the user information transmitting section 5402 transmits this user information to the server 6200 (P6601).

The server 6200 receives the sent user information in its user information receiving section 5403, and the user information recording section 5404 analyzes the received user information and records it in the user management information d6212 in the storage section 6201 (P6602). At this stage, a user establishes a pool of money on the content distribution side, and the pooled amount is entered in balance information 6301 in the user management information d6212.

The charging information transmitting section 6207 of the server 6200 extracts content that has a view included in user management information among content included in content management information d6211, and also extracts balance information 6301 from the user management information d6212, and creates charging information 6500 (P6603). The charging information transmitting section 6207 then transmits the created charging information 6500 to the client terminal 6210 (P6604).

The charging information receiving section 6216 of the client terminal 6210 receives this charging information 6500 (P6605), and the charging information display section 6217 displays the charging information 6500 (P6606). Next, the client refers to this charging information 6500 displayed on the charging information display section 6217, and first checks the balance information 6502, then selects a distributable content name 201, and inputs this from the operation input section 113. The request transmitting section 115 then transmits content distribution request information requesting this content to the server 6200 (P6607).

The server 6200 receives the content distribution request information sent from the client terminal 6210 in its request receiving section 104 (P6608), and transmits this information to the request analysis section 6205.

The request analysis section 6205 refers to the content management information d6211, analyzes information such as content name 201, media 202 locator information 204, and monetary amount information 6401, corresponding to the received content distribution request information (P6609), and transmits the analysis results to the charging determination section 6208.

Next, the charging determination section 6208 identifies content requested by a user based on the analysis results sent from the request analysis section 6205, and determines the number of users to whom this content is currently being distributed. The charging determination section 6208 then compares the balance information 6301 in the user management information d6212 and the monetary amount information 6401 corresponding to the number of users to whom the relevant content is currently being distributed, and determines whether or not the balance information 6301 amount is less than the monetary amount information 6401 amount-that is, whether or not there is any money left (P6610).

If the charging determination section 6208 determines that the balance is insufficient, it transmits a control signal to the request analysis section 6205 to prevent transmission of media corresponding to the content distribution request information to the media selecting section 102, and terminates processing.

If, on the other hand, the charging determination section 6208 determines that the balance is sufficient, it transmits a control signal to the request analysis section 6205 to have media corresponding to the content distribution request information transmitted to the media selecting section 102. Together with this, the charging determination section 6208 transmits content monetary amount information 6401 to the charging section 6206.

Next, when analysis results are sent from the request analysis section 6205, the media selecting section 102 selects a view of content corresponding to the sent analysis results from the views d101 (P6611), and transmits the selected view to the media transmitting section 103. The media transmitting section 103 then transmits the sent view to the client terminal 6210 (P6612).

In the client terminal 6210, the media receiving section 111 receives the sent view (media) (P6613), and the media playback section 112 plays back the received view (media).

When media transmission to the client terminal 6210 ends, the charging section 6206 in the server 6200 updates the user management information d6212 by subtracting the content monetary amount information 6401 amount from the balance information 6301 amount (P6615).

As described above, according to Embodiment 19, providing a user with balance information enables the user to check the balance information before selecting content for which distribution is to be requested. This makes it possible to prevent a user from requesting content of a price exceeding the user' s balance. Also, if a user's balance is less than the price of the desired content, distribution of the desired content can be received by providing for charging to be performed offline.

Also, according to Embodiment 19, if a user inadvertently requests distribution of content with a price exceeding the user's balance, the charging determination section 6208 can transmit information indicating that the balance is insufficient to the request analysis section 6205. By this means it is possible to inhibit distribution to a user of content with a price exceeding the user's balance. As a result, a user can be prevented from incurring debts by receiving distribution of content with a price exceeding the user's balance.

It is also possible for information indicating that content cannot be distributed because of an insufficient balance to be transmitted from the server 6200 to a client terminal if a user requests distribution of content that generates a charge exceeding the user's balance. In this case, information indicating that content cannot be distributed because of an insufficient balance may be transmitted to the client terminal 6210 via the charging information transmitting section 6207 when the charging determination section 6208 determines that the balance information 6301 amount is less than the monetary amount information 6401 amount.

### (Embodiment 20)

In a media distribution system according to Embodiment 20, charging is performed in advance in order for a user to receive content. The content distribution side gives the user information on the user's balance (remaining amount of money), and the user checks this balance information and requests summary distribution in accordance with the user's balance. Also, in Embodiment 20, if a user requests distribution of a summary with a price that exceeds the user's balance, a summary of a length that is in accordance with the user's balance is created and distributed.

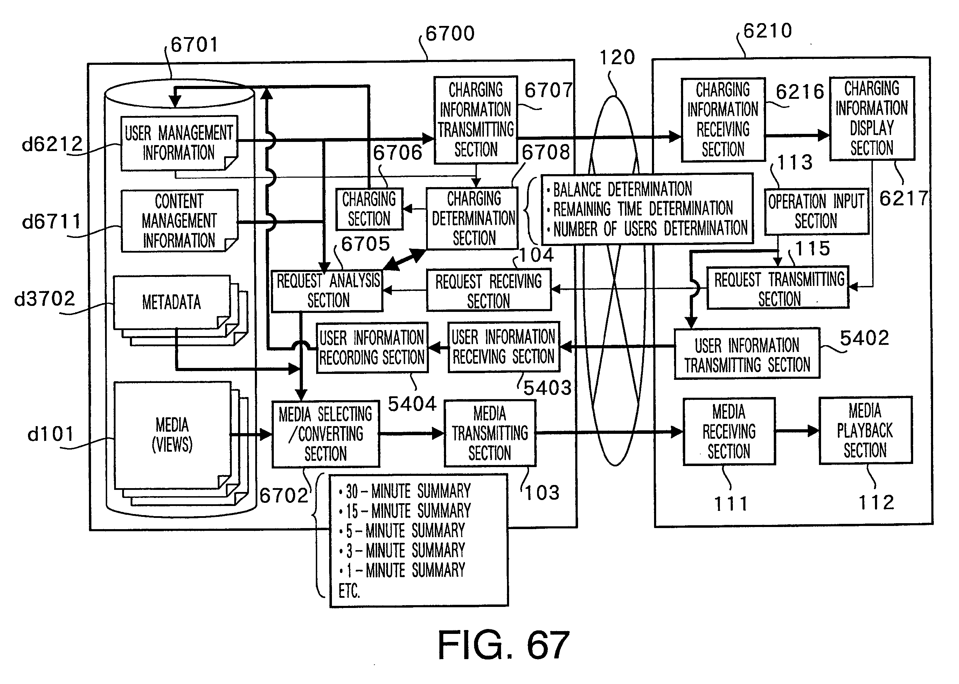

A media distribution system according to Embodiment 20 will be described below. First, the configuration of a media distribution system according to Embodiment 20 will be described using FIG.67. FIG.67 is a block diagram of a media distribution system according to Embodiment 20. Parts identical to those already described are assigned the same codes as before.

In this media distribution system, a server 6700 of a media distributor (provider) performing a content distribution service and a client terminal 6210 such as a portable terminal, storage-type broadcast terminal, home gateway, or the like, are connected via a network 120 such as a communication network, or the like.

The client terminal 6210 is provided with an operation input section 113 that inputs user information such as a desired viewpoint when a user requests content distribution. A user information transmitting section 5402 sends user information to the server 6700.

The server 6700 is provided with a user information receiving section 5403 that receives sent user information. The user information receiving section 5403 sends received user information to a user information recording section 5404. The user information recording section 5404 analyzes user information and stores it in user management information d6212 in a storage section 6701.

The user management information d6212 is as shown in FIG.63 and has already been described. Therefore a description of the user management information d6212 is omitted here.

Also stored in the storage section 6701 are content views d101, metadata d3702 comprising programs for converting views d101 to a plurality of types of media summaries, and content management information d6711 that manages views d101 and metadata d3702 by maintaining correspondence between the two.

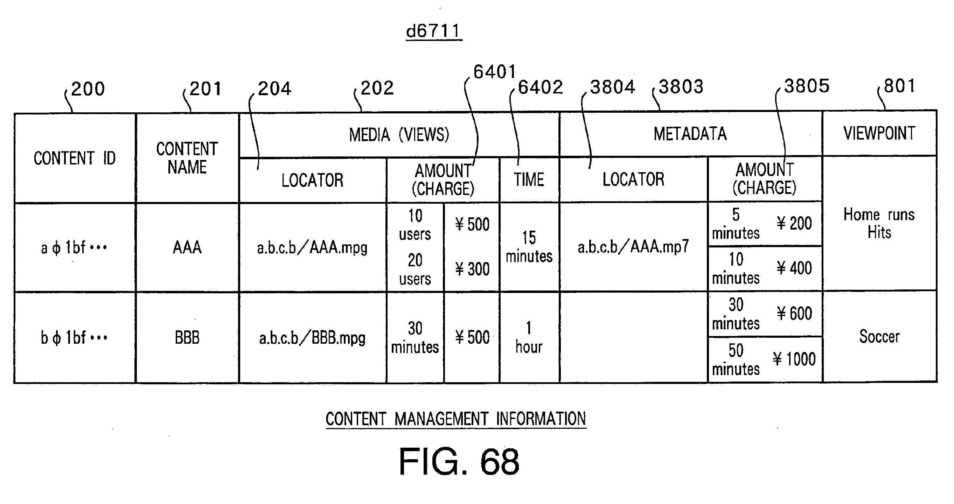

As shown in FIG.68, in the content management information d6711 are stored a plurality of groups comprising a content ID 200, a content name 201, a locator 204 which is locator information of a view 202, view 202 monetary amount information 6401, view 202 time information 6402, metadata 3803 corresponding to a content name 201, locator information 3804 of metadata 3803, charge (monetary amount) information 3805 for distribution of a summary generated using metadata 3803, and content viewpoint information 801.

FIG.68 is a drawing showing the configuration of content management information according to Embodiment 20.

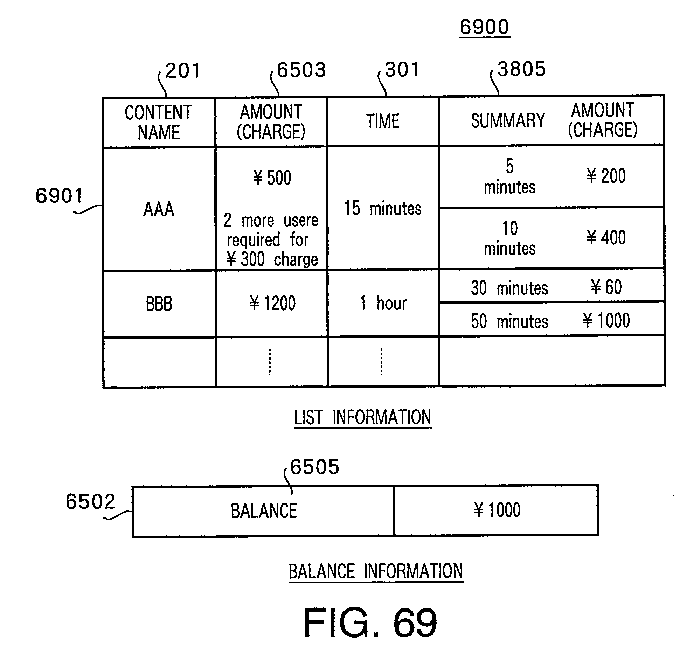

The server 6700 is provided with a charging information transmitting section 6707 that generates the charging information 6900 shown in FIG.69 from content management information d6711, and transmits it to the client terminal 6210. FIG.69 is a drawing showing the configuration of charging information according to Embodiment 20.

As can be seen from FIG.69, charging information 6900 is composed of list information 6901 and balance information 6502. The list information 6901 is information required when a client selects content, being composed of groups comprising the content name 201, monetary amount information 6503, time information 301, and summary monetary amount information 3805. The content names 201 given in the list information 6901 are content names of content that has a viewpoint of user management information d6212 record by the user in advance. As can be seen from 6504 in the figure, the monetary amount information 6503 also includes information as to how many more people need to request content distribution in order for the price to change. The summary monetary amount information 3805 also includes a monetary amount corresponding to time.

The balance information 6502 comprises balance amount information 6505 regarding the amount pooled by clients.

The client terminal 6210 is provided with a charging information receiving section 6216 that receives charging information 6900 sent from the server 6700, and a charging information display section 6217 that displays received charging information 6900.

Furthermore, the client terminal 6210 is provided with a request transmitting section 115 that transmits content distribution request information for a view, summary, etc., input from the operation input section 113 to the server 6700.

The server 6700 is provided with a request receiving section 104 that receives content distribution request information sent from the client terminal 6210.

The server 6700 is also provided with a request analysis section 6705 that refers to the content management information d6711 and analyzes the content ID 200, content name 201, media 202 locator information 204, monetary amount information 6401, metadata 3803 locator information 3804, and metadata 3803 monetary amount information 3805, corresponding to received content distribution request information. The request analysis section 6705 transmits the content distribution request information analysis results to a charging determination section 6708 and a media selecting/converting section 6702. As described later herein, in some cases summary time information may be sent to the charging determination section 6708 when extracted from a content distribution request.

When the results of analysis of a content distribution request by the request analysis section 6705 indicate that a user is requesting view distribution, the charging determination section 6708 identifies the view, and determines the number of users to whom this content is currently being distributed. In addition, the charging determination section 6708 compares the balance information 6301 in the user management information d6212 and the monetary amount information 6401 corresponding to the number of users to whom the relevant content is currently being distributed, and transmits the comparison result to the request analysis section 6705.

If the balance information 6301 amount is less than the monetary amount information 6401 amount, the charging determination section 6708 transmits a control signal to the request analysis section 6705 to prevent transmission of media corresponding to the content distribution request information to the media selecting/converting section 6702.

If, on the other hand, the balance information 6301 amount is greater than the content monetary amount information 6401 amount, the charging determination section 6708 transmits a control signal to the request analysis section 6705 to have media corresponding to the content distribution request information transmitted to the media selecting/converting section 6702. Together with this, the charging determination section 6708 transmits content monetary amount information 6401 to a charging section 6706.

Also, when the results of analysis of a content distribution request by the request analysis section 6705 indicate that a user is requesting summary distribution, the charging determination section 6708 identifies the requested summary, compares the balance information 6301 in the user management information d6212 and the monetary amount information 3805 for the relevant summary, and transmits the comparison result to the request analysis section 6705.

If the balance information 6301 amount is less than the summary monetary amount information 3805 amount, the charging determination section 6708 calculates the time for which summary distribution is possible for the amount of money corresponding to the balance information 6301. Then the charging determination section 6708 sends the calculated time for which summary distribution is possible to the request analysis section 6705. Together with this, the charging determination section 6708 transmits balance information 6301 to the charging section 6706.

If, on the other hand, the balance information 6301 amount is greater than the summary monetary amount information 3805 amount, the charging determination section 6708 transmits a control signal to the request analysis section 6705 to have a summary corresponding to the content distribution request information transmitted to the media selecting/converting section 6702. Together with this, the charging determination section 6708 transmits summary monetary amount information 3805 to the charging section 6706.

On receiving content monetary amount information 6401, summary monetary amount information 3805, or balance information 6301 from the charging determination section 6708, the charging section 6706 subtracts the content monetary amount information 6401 amount, summary monetary amount information 3805 amount, or balance information 6301 amount from the balance information 6301 amount in the user management information d6212.

When analysis results are sent from the request analysis section 6705, if the sent analysis results indicate view distribution, the media selecting/converting section 6702 extracts the corresponding view from the views d101, and transmits the extracted view to the media transmitting section 103. If the sent analysis results indicate summary distribution, the media selecting/converting section 6702 extracts a vector corresponding to the corresponding summary from the views d101, converts this to a summary using metadata d3702, and transmits this summary to the media transmitting section 103.

The media transmitting section 103 then transmits the sent view or summary to the client terminal 6210.

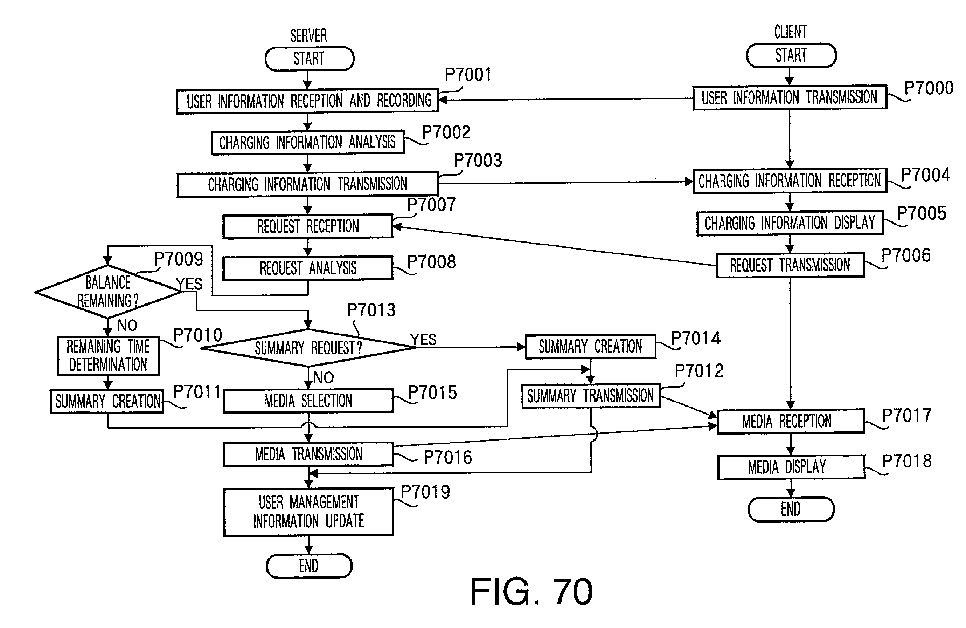

The operation of a media distribution system according to Embodiment 20 will be described below using FIG.70. FIG.70 is an operational flowchart of a media distribution system according to Embodiment 20.

First, the user inputs user information such as a desired viewpoint from the operation input section 113. Then the user information transmitting section 5402 transmits this user information to the server 6700 (P7000).

The server 6700 receives the sent user information in its user information receiving section 5403, and the user information recording section 5404 analyzes the received user information and records it in the user management information d6212 in the storage section 6701 (P7001). At this stage, a user establishes a pool of money on the content distribution side, and the pooled amount is entered in balance information 6301 in the user management information d6212.

Next, the charging information transmitting section 6707 of the server 6700 extracts content that has a view included in user management information among content included in content management information d6711, and also extracts balance information 6301 from the user management information d6212, and creates charging information 6900 (P7002). The charging information transmitting section 6707 then transmits the created charging information 6900 to the client terminal 6210 (P7003).

Then the charging information receiving section 6216 of the client terminal 6210 receives this charging information 6900 (P7004), and the charging information display section 6217 displays the charging information 6900 (P7005). Next, the client refers to this charging information 6900 displayed on the charging information display section 6217, checks the balance information 6502, and then selects a desired media item or summary, and inputs this from the operation input section 113. The request transmitting section 115 then transmits content distribution request information requesting this media item or summary to the server 6700 (P7006).

The server 6700 receives the content distribution request information sent from the client terminal 6210 in its request receiving section 104 (P7007), and transmits this information to the request analysis section 6705.

The request analysis section 6705 refers to the content management information d6711, analyzes information such as content name 201, media 202 locator information 204, monetary amount information 6401, or metadata 3803 locator 3804, summary monetary amount information 3805, and so forth, corresponding to the received content distribution request information (P7008), and transmits the analysis results to the charging determination section 6708.

When the results of analysis of a content distribution request by the request analysis section 6705 indicate that a view is being requested, the charging determination section 6708 identifies the view, and determines the number of users to whom this view is currently being distributed. Then the charging determination section 6708 compares the balance information 6301 in the user management information d6212 and the monetary amount information 6401 corresponding to the number of users to whom the relevant content is currently being distributed, and determines whether or not the balance information 6301 amount is less than the content monetary amount information 6401 amount-that is, whether or not the balance is sufficient (P7009).

When the results of analysis of a content distribution request by the request analysis section 6705 indicate that a summary is being requested, the charging determination section 6708 compares the balance information 6301 and the monetary amount information 3805 for the summary requested by the user, and determines whether or not the balance information 6301 amount is less than the summary monetary amount information 3805 amount-that is, whether or not the balance is sufficient (P7009).

Then if the charging determination section 6708 determines that the balance is insufficient, it calculates the time for which summary distribution is possible for the amount of money corresponding to the balance information 6301, and sends the calculated time for which summary distribution is possible to the request analysis section 6705 (P7010). Together with this, the charging determination section 6708 transmits balance information 6301 to the charging section 6706.

The request analysis section 6705 then transmits the calculated time for which summary distribution is possible to the media selecting/converting section 6702. Next, the media selecting/converting section 6702 extracts the viewpoint 801 input by the user from the user management information d6212 and the view desired by the user from the views d101. The media selecting/converting section 6702 then from the view segments an item that has the viewpoint 801 input by the user corresponding to the received time for which summary distribution is possible. In this way, the media selecting/converting section 6702 creates a summary equivalent to the time for which distribution is possible for the balance (P7011). Then the media selecting/converting section 6702 transmits the created summary to the media transmitting section 103, and the media transmitting section 103 transmits the sent summary to the client terminal 6210 (P7012).

If, on the other hand, the charging determination section 6708 determines in P7009 that there is a balance, it transmits a control signal to the request analysis section 6705 to have a view or summary corresponding to the content distribution request information transmitted to the media selecting/converting section 6702. Together with this, the charging determination section 6708 transmits view monetary amount information 6401 or summary monetary amount information 3805 to the charging section 6706.

Next, when analysis results are sent from the request analysis section 6205, the media selecting/converting section 6702 determines whether the sent analysis results indicate that a view is being requested or a summary is being requested (P7013). If the analysis results indicate that a summary is being requested, the media selecting/converting section 6702 creates a summary corresponding to the analysis results using the metadata d3702 and views d101 (P7014). Then the media selecting/converting section 6702 transmits the created summary to the media transmitting section 103. The media transmitting section 103 then transmits the sent summary to the client terminal 6210 (P7012).

If, on the other hand, the analysis results indicate in P7013 that a view is being requested, the media selecting/converting section 6702 selects a view corresponding to the analysis results from the views d101 (P7015) and transmits the selected view to the media transmitting section 103. The media transmitting section 103 then transmits the sent view to the client terminal 6210 (P7016).

In the client terminal 6210, the media receiving section 111 receives the sent view or summary (P7017), and the media playback section 112 plays back the received view or summary (P7018).

When view or summary transmission to the client terminal 6210 ends, the charging section 6706 in the server 6700 updates the user management information d6212 by subtracting the content monetary amount information 6401 amount, summary monetary amount information 3805 amount, or balance information 6301 amount sent from the charging determination section 6208 from the balance information 6301 amount in the user management information d6212 (P7019).

As described above, according to Embodiment 20, providing a user with balance information enables the user to check the balance information before selecting a view or summary for which distribution is to be requested. This makes it possible to prevent a user from requesting a view or summary of a price exceeding the user's balance. Also, if a user's balance is less than the price of a desired view or summary, distribution of the desired view or summary can be received by providing for charging to be performed offline.

Also, according to Embodiment 20, if a user requests distribution of a view or summary with a price that exceeds the user's balance, the content distribution side can calculate a time for which summary distribution is possible for the balance, create a summary of this calculated time, and transmit this created summary to the user. This enables a user to receive distribution of a summary that is in accordance with the user's balance.

Moreover, if a user requests distribution of a view or summary that will generate a charge exceeding the user's balance, information may be transmitted from the server to the client terminal indicating that view or summary distribution is not possible because the balance is insufficient. In this case, information indicating that content cannot be distributed because of an insufficient balance may be transmitted to the client terminal 6210 via the charging information transmitting section 6707 when the charging determination section 6708 determines that the balance information 6301 amount is less than the content monetary amount information 6401 amount or summary monetary amount information 3805 amount.

A mode is also possible whereby, even if the configurations described in Embodiment 1 through Embodiment 20 comprise dedicated hardware, with the exception of the storage section, the operations of components other than the storage section are stored in a storage medium, and a computer performs operations of parts other than the storage section by reading a program.

With the present invention, a mode may be used that provides for storage of views, which are original media, and media processed by conversion or the like so as to be able to be distributed to locations for which communicate is difficult, and to enable these view to be seen even on a terminal on which they cannot originally be seen. In this mode, clients can be offered special additional services. Therefore, charges for processed media are set at a high level.

The use of content management information providing a correspondence between information on media included in content and charging information for each content item has been described, but a mode is also possible whereby content management information is divided into two-that is, content description information, which is management information for content, and content charge information, which is charge information for content. In this case, the respective content description information and content charge information may be managed by content IDs, and content description information and content charge information may be handled in correspondence with a content ID as a key. Also, list information is generated from content description information and content charge information.

As described above, according to the present invention a plurality of difference forms of media can be distributed to a client for each content item, and therefore it is possible for media corresponding to content requested by a client are distributed to the client in a form requested by the client, or in a form adapted to various terminal capabilities and network conditions.

The present invention is not limited to the above described embodiments, and various variations and modifications may be possible without departing from the scope of the present invention.
This application is based on Japanese Patent Application No.2001-065460 filed on March 8, 2001 and Japanese Patent Application No.2002-024750 filed on January 31, 2002, entire content of which is expressly incorporated by reference herein.

## Claims

1. A media distribution apparatus comprising:
a storage section that stores a plurality of contents, a plurality of media of different forms provided for each said content, and a predetermined charge that is charged when said media are distributed;
a request receiving section that receives a distribution request for said content composed of identification information that identifies said content and form information relating to said form of said media, sent from a client;
a request analysis section that analyzes said distribution request and identifies said content and said form of said media for which said client requests distribution;
a media selecting section that selects distribution request media corresponding to identified said content and said form of said media from said storage section;
a media transmitting section that transmits said distribution request media to said client; and
a charging section that charges said client said predetermined charge corresponding to said distribution request media at the time of distribution of said distribution request media.

2. The apparatus according to claim 1,
wherein said storage section stores, for each of said plurality of contents, content management information that is metadata that manages said plurality of media and said predetermined charge corresponding to said media by maintaining correspondence therebetween; and said media distribution apparatus identifies said content and said form of said media from said distribution request using said content management information, and also identifies said predetermined charge corresponding to said distribution request media.

3. The apparatus according to claim 2, further comprising a list information transmitting section that generates list information of said plurality of contents from said content management information and sends the generated said list to said client.

4. The apparatus according to any one of claims 1 to 3,
wherein said plurality of media have different charge systems.

5. The apparatus according to claim 3,
wherein said charging section changes a predetermined charge to be charged when said media are distributed according to a time from a point at which said list information transmitting section transmits said list information until said request receiving section receives said content distribution request sent from said client.

6. The apparatus according to claim 4,
wherein said plurality of media are composed of a view of said content and a preview that is advance information of said view and that is free-of-charge.

7. The apparatus according to claim 4,
wherein said plurality of media are composed of a view of said content and advertising media that are advertising material of said content and for which a predetermined payback charge is set for distribution.

8. The apparatus according to any one of claims 1 to 3,
wherein said plurality of media are composed of broadband media that are views of said content for broadband communication, and narrowband media that are said views for narrowband communication; and said media distribution apparatus selects and distributes said broadband media or said narrowband media in accordance with client terminal communication capability information sent from said client.

9. The apparatus according to claim 8,
wherein said predetermined charge of said narrowband media is set lower than said predetermined charge of said broadband media.

10. The apparatus according to claim 8,
wherein said plurality of media are composed of color media that are views of said content made up of color data, and black-and-white media that are said views made up of binary data and for which said predetermined charge is set lower than for said color media.

11. A media distribution apparatus comprising:
a storage section that stores a plurality of contents, media provided for each said content, conversion information for converting said media to media of a different form, and a predetermined charge that is charged when said media and media converted using said conversion information are distributed;
a request receiving section that receives a distribution request for said content composed of identification information that identifies said content and form information indicating a form of said media, sent from a client;
a request analysis section that analyzes said distribution request and identifies said content and said form of said media for which said client requests distribution;
a media selecting section that, when distribution request media corresponding to identified said content and said form are in said storage section, selects said distribution request media from said storage section;
a media converting section that, when said distribution request media are not in said storage section, converts said media stored in said storage section to said distribution request media using said conversion information;
a media transmitting section that transmits said distribution request media to said client; and
a charging section that charges said client said predetermined charge corresponding to said distribution request media at the time of distribution of said distribution request media.

12. The apparatus according to claim 11,
wherein said media distribution apparatus holds in said storage section said media of different forms converted from predetermined said media using said conversion information, and when said distribution request media are said media of a different form held in said storage section, selects said held said media of a different form from said storage section.

13. The apparatus according to claim 11 or 12,
wherein said storage section stores, for each of said plurality of contents, content management information that is metadata that manages said media, said conversion information, and said predetermined charge corresponding to said media of a different form converted using said media and said conversion information by maintaining correspondence therebetween; and said media distribution apparatus identifies aid content and the form of that media from said distribution request using said content management information, and also identifies said predetermined charge corresponding to said media and said media of a different form.

14. The apparatus according to claim 13, further comprising a list information transmitting section that generates list information of said plurality of contents from said content management information and sends said list information to said client.

15. The apparatus according to any one of claims 11 to 14,
wherein said media have a different charge system from media converted using said conversion information.

16. The apparatus according to claim 15,
wherein said media are views of said content, and said conversion information is information that converts a said view to a preview that is advance information of said view, and said predetermined charge of said view is no charge.

17. The apparatus according to any one of claims 11 to 14,
wherein said media are broadband media that are views of said content for broadband communication; and said conversion information is information that converts said broadband media to narrowband media that are said views for narrowband communication, and converts said broadband media to said narrowband media in accordance with client terminal communication capability information sent from said client.

18. The apparatus according to claim 15,
wherein said media are color media that are views of said content composed of color data; and said conversion information is information that converts said color media to said black-and-white media composed of binary data, or thinned-out media in which frames are thinned out from said color media, or text media composed of text.

19. The apparatus according to claim 15,
wherein said conversion information is metadata relating to said content.

20. The apparatus according to any one of claims 1 to 19,
wherein said charging section performs charging after receiving information to the effect that playback of said distribution request media has been performed from said client.

21. The apparatus according to any one of claims 6 to 16,
wherein said charging section changes a predetermined charge to be charged when said view is distributed according to a time from a point at which said media transmitting section transmits said preview to said client until said request receiving section receives a distribution request for said view from said client.

22. A media distribution apparatus comprising:
media of a plurality of content and a predetermined charge to be charged when said media are distributed;
a storage section that stores viewpoint information sent from a client;
a request analysis section that identifies said media corresponding to said viewpoint information;
a media selecting section that selects identified said media from said storage section;
a media transmitting section that transmits said media to said client; and
a charging section that charges said client said predetermined charge corresponding to said media at the time of distribution of said media.

23. The apparatus according to claim 22,
wherein said storage section stores advertising media and payback charge information for when said advertising media are distributed; and said media distribution apparatus, when information that approves sending of said advertising media is sent from said client, sends said media to said client with said advertising media added thereto, and also performs payback corresponding to sent said advertising media.

24. The apparatus according to claim 22,
wherein said media distribution apparatus sends to said client charging information composed of balance information regarding an amount of money pooled in advance by said client and predetermined charge information applying when said media corresponding to said viewpoint and said media are distributed, and based on information specifying said media sent from said client after sending of said charging information, sends corresponding said media to said client.

25. The apparatus according to claim 24,
wherein said media distribution apparatus does not perform distribution of said media when said client requests said media with a price higher than said balance information.

26. A media distribution apparatus comprising:
a storage section that stores media of a plurality of contents, conversion information for converting said media to media of a different form, predetermined charge information that is charged when media converted using said conversion information are distributed, and viewpoint information sent from a client;
a request analysis section that identifies said media and said conversion information corresponding to said viewpoint information;
a media converting section that converts said media to a summary corresponding to said viewpoint of said media using identified said media and said conversion information;
a media transmitting section that transmits said summary to said client; and
a charging section that charges said client a predetermined charge included in said predetermined charge information corresponding to said summary at the time of distribution of said summary.

27. The apparatus according to claim 26,
wherein said media distribution apparatus sends to said client charging information composed of balance information regarding an amount of money pooled in advance by said client and predetermined charge information applying when said summary corresponding to said viewpoint is distributed, and based on information specifying said summary sent from said client after sending of said charging information, sends said summary to said client.

28. The apparatus according to claim 27,
wherein, when said client requests said summary with a price higher than said balance information, said media distribution apparatus creates, and sends to said client, a summary of a length of time that allows sending according to said balance information.

29. A media distribution system comprising:
a media distribution apparatus according to any one of claims 1 to 28, and a client terminal connected to said media distribution apparatus via a network;
wherein said distribution request is transmitted from said client terminal to said media distribution apparatus, said media distribution apparatus receives said distribution request transmitted from said client terminal, and said distribution request media are transmitted to said client terminal.

30. A program that causes a computer to perform:
analyzing content distribution request information composed of identification information identifying said content and identification information identifying a media form, sent from a client, and identifying said content and the corresponding media form for which said client requests distribution;
selecting from a storage section that stores a plurality of contents, a plurality of media of different forms for each said content, and a predetermined charge that is charged at the time of distribution of said media, distribution request media corresponding to identified said content and said form;
transmitting said distribution request media to said client; and
charging said client said predetermined charge corresponding to said distribution request media at the time of distribution of said distribution request media.

31. A program that causes a computer to perform:
analyzing content distribution request information composed of identification information identifying said content and form information identifying a media form, sent from a client, and identifying said content and the corresponding media form for which said client requests distribution;
when distribution request media corresponding to identified said content and said form are in a storage section that stores a plurality of contents, and for each said content, media, conversion information for converting said media to media of a different form, and a predetermined charge that is charged when transmitting media converted using said media and said conversion information, selecting said distribution request media from said storage section;
when said distribution request media are not in said storage section, converting said media stored in said storage section to said distribution request media using said conversion information;
transmitting said distribution request media to said client; and
charging said client said predetermined charge corresponding to said distribution request media at the time of distribution of said distribution request media.

32. A program that causes a computer to perform:
receiving list information that provides correspondence between a plurality of contents, and for each said content a plurality of media of different forms, and a predetermined charge charged at the time of distribution of said media;
displaying said list information;
transmitting distribution request of said content composed of identification information identifying said content and form information identifying a form of said media, input by referring to said list information;
receiving distribution request media composed of said content and said form corresponding to a transmitted said distribution request; and
playing back said distribution request media.

33. A media distribution method comprising:
analyzing content distribution request information composed of identification information identifying said content and form information identifying a media form, sent from a client, and identifying said content and the corresponding media form for which said client requests distribution;
selecting distribution request media corresponding to identified said content and said form from a storage section that stores a plurality of contents, and for each said content a plurality of media of different forms, and a predetermined charge that is charged when transmitting said media;
transmitting said distribution request media to said client; and
charging said client said predetermined charge corresponding to said distribution request media at the time of distribution of said distribution request media.

34. A media distribution method comprising:
analyzing content distribution request information composed of identification information identifying said content and form information identifying a media form, sent from a client, and identifying said content and the corresponding media form for which said client requests distribution;
when distribution request media corresponding to identified said content and said form are in a storage section that stores a plurality of contents, and for each said content, media, conversion information for converting said media to media of a different form, and a predetermined charge that is charged when transmitting media converted using said media and said conversion information, selecting said distribution request media from said storage section;
when said distribution request media are not in said storage section, converting said media stored in said storage section to said distribution request media using said conversion information;
transmitting said distribution request media to said client; and
charging said client said predetermined charge corresponding to said distribution request media at the time of distribution of said distribution request media.
